(19) Europäisches Patentamt / European Patent Office / Office européen des brevets

(11) **EP 4 711 832 A1**

(12) **EUROPEAN PATENT APPLICATION**
published in accordance with Art. 153(4) EPC

(43) Date of publication:
**18.03.2026 Bulletin 2026/12**

(21) Application number: **24814959.3**

(22) Date of filing: **02.04.2024**

(51) International Patent Classification (IPC):
**G02B 15/20** (2006.01)    **G02B 13/18** (2006.01)

(52) Cooperative Patent Classification (CPC):
**G02B 13/18; G02B 15/20**

(86) International application number:
**PCT/JP2024/013544**

(87) International publication number:
**WO 2024/247472 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **26.05.2023   JP 2023087079**

(71) Applicant: **Sony Group Corporation**
**Tokyo 108-0075 (JP)**

(72) Inventors:
- **ITOKU, Naoki**
  **Tokyo 108-0075 (JP)**
- **YAMADA, Takumu**
  **Tokyo 108-0075 (JP)**

(74) Representative: **D Young & Co LLP**
**3 Noble Street**
**London EC2V 7BQ (GB)**

(54) **ZOOM LENS AND IMAGE CAPTURE DEVICE**

(57)    A zoom lens according to the present disclosure includes a plurality of lens groups, and an aperture stop. The plurality of lens groups includes, in order from a side of an object toward a side of an image plane, a first lens group having positive refractive power, a second lens group having negative refractive power, a third lens group having positive refractive power, and a fourth lens group having negative refractive power. The second lens group is immovable with respect to the image plane upon zooming, and predetermined conditional expressions are satisfied.

[ FIG. 1 ]

**Description**

Technical Field

The present disclosure relates to a zoom lens and an imaging apparatus.

Background Art

A zoom lens for use in an imaging apparatus (camera) is required to have high optical performance across the entire zoom region despite a small total length of the lens. Therefore, there has been proposed, in a telephoto zoom lens, a positive lead type configuration, as a configuration that enables obtainment of a high variable magnification ratio despite a small size and a light weight. In the positive lead type configuration, lens groups are disposed to allow pieces of refractive power to be positive, negative, and positive in order from an object side toward an image plane side (see, e.g., PTLs 1 and 2).

Citation List

Patent Literature

PTL 1: Japanese Unexamined Patent Application Publication No. 2009-168933
PTL 2: Japanese Unexamined Patent Application Publication No. 2018-169564

Summary of the Invention

Zoom lenses described in PTL 1 and 2 are insufficient in terms of suppression, or the like of aberration variation that occurs upon zooming.
It is therefore desirable to provide a zoom lens that has a high variable magnification ratio and that enables achievement of a smaller size and higher image quality while suppressing aberration variation that occurs upon zooming, as well as an imaging apparatus including such a zoom lens.
A zoom lens according to an embodiment of the present disclosure includes a plurality of lens groups, and an aperture stop. The plurality of lens groups includes, in order from a side of an object toward a side of an image plane, a first lens group having positive refractive power, a second lens group having negative refractive power, a third lens group having positive refractive power, and a fourth lens group having negative refractive power. The second lens group is immovable with respect to the image plane upon zooming, and the following conditional expressions are satisfied:

$$-5 \leq f2/f3 \leq -0.8 \ \ldots\ldots (1)$$

$$-22 \leq f4/fw \leq -1.25 \ \ldots\ldots (2)$$

where

fw denotes a focal distance of a total system at a wide-angle end upon infinity focusing,
f2 denotes a focal distance of the second lens group,
f3 denotes a focal distance of the third lens group, and
f4 denotes a focal distance of the fourth lens group.

An imaging apparatus according to an embodiment of the present disclosure includes a zoom lens, and an imaging element that outputs an imaging signal corresponding to an optical image formed by the zoom lens. The zoom lens is configured by the zoom lens according to an embodiment of the present disclosure.
In the zoom lens or the imaging apparatus according to an embodiment of the present disclosure, respective pieces of refractive power of the lens groups are appropriately arranged in a positive lead type configuration to have a high variable magnification ratio while suppressing aberration variation that occurs upon zooming and thus to enable achievement of a smaller size and higher image quality.

Brief Description of the Drawings

[FIG. 1] FIG. 1 is a lens cross-sectional view of a first configuration example (Example 1) of a zoom lens according to an embodiment of the present disclosure.

[FIG. 2] FIG. 2 is an aberration diagram illustrating longitudinal aberration upon infinity focusing at a wide-angle end of the zoom lens according to Example 1.

[FIG. 3] FIG. 3 is an aberration diagram illustrating longitudinal aberration upon infinity focusing at an intermediate position of the zoom lens according to Example 1.

[FIG. 4] FIG. 4 is an aberration diagram illustrating longitudinal aberration upon infinity focusing at a telephoto end of the zoom lens according to Example 1.

[FIG. 5] FIG. 5 is an aberration diagram illustrating longitudinal aberration upon short-distance focusing at the wide-angle end of the zoom lens according to Example 1.

[FIG. 6] FIG. 6 is an aberration diagram illustrating longitudinal aberration upon short-distance focusing at the intermediate position of the zoom lens according to Example 1.

[FIG. 7] FIG. 7 is an aberration diagram illustrating longitudinal aberration upon short-distance focusing at the telephoto end of the zoom lens according to Example 1.

[FIG. 8] FIG. 8 is an aberration diagram illustrating lateral aberration upon infinity focusing at the wide-angle end of the zoom lens according to Example 1.

[FIG. 9] FIG. 9 is an aberration diagram illustrating lateral aberration upon infinity focusing at the intermediate position of the zoom lens according to Example 1.

[FIG. 10] FIG. 10 is an aberration diagram illustrating lateral aberration upon infinity focusing at the telephoto end of the zoom lens according to Example 1.

[FIG. 11] FIG. 11 is an aberration diagram illustrating lateral aberration upon short-distance focusing at the wide-angle end of the zoom lens according to Example 1.

[FIG. 12] FIG. 12 is an aberration diagram illustrating lateral aberration upon short-distance focusing at the intermediate position of the zoom lens according to Example 1.

[FIG. 13] FIG. 13 is an aberration diagram illustrating lateral aberration upon short-distance focusing at the telephoto end of the zoom lens according to Example 1.

[FIG. 14] FIG. 14 is a lens cross-sectional view of a second configuration example (Example 2) of a zoom lens according to an embodiment.

[FIG. 15] FIG. 15 is an aberration diagram illustrating longitudinal aberration upon infinity focusing at a wide-angle end of the zoom lens according to Example 2.

[FIG. 16] FIG. 16 is an aberration diagram illustrating longitudinal aberration upon infinity focusing at an intermediate position of the zoom lens according to Example 2.

[FIG. 17] FIG. 17 is an aberration diagram illustrating longitudinal aberration upon infinity focusing at a telephoto end of the zoom lens according to Example 2.

[FIG. 18] FIG. 18 is an aberration diagram illustrating longitudinal aberration upon short-distance focusing at the wide-angle end of the zoom lens according to Example 2.

[FIG. 19] FIG. 19 is an aberration diagram illustrating longitudinal aberration upon short-distance focusing at the intermediate position of the zoom lens according to Example 2.

[FIG. 20] FIG. 20 is an aberration diagram illustrating longitudinal aberration upon short-distance focusing at the telephoto end of the zoom lens according to Example 2.

[FIG. 21] FIG. 21 is an aberration diagram illustrating lateral aberration upon infinity focusing at the wide-angle end of the zoom lens according to Example 2.

[FIG. 22] FIG. 22 is an aberration diagram illustrating lateral aberration upon infinity focusing at the intermediate position of the zoom lens according to Example 2.

[FIG. 23] FIG. 23 is an aberration diagram illustrating lateral aberration upon infinity focusing at the telephoto end of the zoom lens according to Example 2.

[FIG. 24] FIG. 24 is an aberration diagram illustrating lateral aberration upon short-distance focusing at the wide-angle end of the zoom lens according to Example 2.

[FIG. 25] FIG. 25 is an aberration diagram illustrating lateral aberration upon short-distance focusing at the intermediate position of the zoom lens according to Example 2.

[FIG. 26] FIG. 26 is an aberration diagram illustrating lateral aberration upon short-distance focusing at the telephoto end of the zoom lens according to Example 2.

[FIG. 27] FIG. 27 is a lens cross-sectional view of a third configuration example (Example 3) of a zoom lens according to an embodiment.

[FIG. 28] FIG. 28 is an aberration diagram illustrating longitudinal aberration upon infinity focusing at a wide-angle end of the zoom lens according to Example 3.

[FIG. 29] FIG. 29 is an aberration diagram illustrating longitudinal aberration upon infinity focusing at an intermediate position of the zoom lens according to Example 3.

[FIG. 30] FIG. 30 is an aberration diagram illustrating longitudinal aberration upon infinity focusing at a telephoto end of the zoom lens according to Example 3.

[FIG. 31] FIG. 31 is an aberration diagram illustrating longitudinal aberration upon short-distance focusing at the wide-angle end of the zoom lens according to Example 3.

[FIG. 32] FIG. 32 is an aberration diagram illustrating longitudinal aberration upon short-distance focusing at the intermediate position of the zoom lens according to Example 3.

[FIG. 33] FIG. 33 is an aberration diagram illustrating longitudinal aberration upon short-distance focusing at the telephoto end of the zoom lens according to Example 3.

[FIG. 34] FIG. 34 is an aberration diagram illustrating lateral aberration upon infinity focusing at the wide-angle end of the zoom lens according to Example 3.

[FIG. 35] FIG. 35 is an aberration diagram illustrating lateral aberration upon infinity focusing at the intermediate position of the zoom lens according to Example 3.

[FIG. 36] FIG. 36 is an aberration diagram illustrating lateral aberration upon infinity focusing at the telephoto end of the zoom lens according to Example 3.

[FIG. 37] FIG. 37 is an aberration diagram illustrating lateral aberration upon short-distance focusing at the wide-angle end of the zoom lens according to Example 3.

[FIG. 38] FIG. 38 is an aberration diagram illustrating lateral aberration upon short-distance focusing at the intermediate position of the zoom lens according to Example 3.

[FIG. 39] FIG. 39 is an aberration diagram illustrating lateral aberration upon short-distance focusing at the telephoto end of the zoom lens according to Example 3.

[FIG. 40] FIG. 40 is a lens cross-sectional view of a fourth configuration example (Example 4) of a zoom lens according to an embodiment.

[FIG. 41] FIG. 41 is an aberration diagram illustrating longitudinal aberration upon infinity focusing at a wide-angle end of the zoom lens according to Example 4.

[FIG. 42] FIG. 42 is an aberration diagram illustrating longitudinal aberration upon infinity focusing at an intermediate position of the zoom lens according to Example 4.

[FIG. 43] FIG. 43 is an aberration diagram illustrating longitudinal aberration upon infinity focusing at a telephoto end of the zoom lens according to Example 4.

[FIG. 44] FIG. 44 is an aberration diagram illustrating longitudinal aberration upon short-distance focusing at the wide-angle end of the zoom lens according to Example 4.

[FIG. 45] FIG. 45 is an aberration diagram illustrating longitudinal aberration upon short-distance focusing at the intermediate position of the zoom lens according to Example 4.

[FIG. 46] FIG. 46 is an aberration diagram illustrating longitudinal aberration upon short-distance focusing at the telephoto end of the zoom lens according to Example 4.

[FIG. 47] FIG. 47 is an aberration diagram illustrating lateral aberration upon infinity focusing at the wide-angle end of the zoom lens according to Example 4.

[FIG. 48] FIG. 48 is an aberration diagram illustrating lateral aberration upon infinity focusing at the intermediate position of the zoom lens according to Example 4.

[FIG. 49] FIG. 49 is an aberration diagram illustrating lateral aberration upon infinity focusing at the telephoto end of the zoom lens according to Example 4.

[FIG. 50] FIG. 50 is an aberration diagram illustrating lateral aberration upon short-distance focusing at the wide-angle end of the zoom lens according to Example 4.

[FIG. 51] FIG. 51 is an aberration diagram illustrating lateral aberration upon short-distance focusing at the intermediate position of the zoom lens according to Example 4.

[FIG. 52] FIG. 52 is an aberration diagram illustrating lateral aberration upon short-distance focusing at the telephoto end of the zoom lens according to Example 4.

[FIG. 53] FIG. 53 is a lens cross-sectional view of a fifth configuration example (Example 5) of a zoom lens according to an embodiment.

[FIG. 54] FIG. 54 is an aberration diagram illustrating longitudinal aberration upon infinity focusing at a wide-angle end of the zoom lens according to Example 5.

[FIG. 55] FIG. 55 is an aberration diagram illustrating longitudinal aberration upon infinity focusing at an intermediate position of the zoom lens according to Example 5.

[FIG. 56] FIG. 56 is an aberration diagram illustrating longitudinal aberration upon infinity focusing at a telephoto end of the zoom lens according to Example 5.

[FIG. 57] FIG. 57 is an aberration diagram illustrating longitudinal aberration upon short-distance focusing at the wide-angle end of the zoom lens according to Example 5.

[FIG. 58] FIG. 58 is an aberration diagram illustrating longitudinal aberration upon short-distance focusing at the intermediate position of the zoom lens according to Example 5.

[FIG. 59] FIG. 59 is an aberration diagram illustrating longitudinal aberration upon short-distance focusing at the telephoto end of the zoom lens according to Example 5.

[FIG. 60] FIG. 60 is an aberration diagram illustrating lateral aberration upon infinity focusing at the wide-angle end of the zoom lens according to Example 5.

[FIG. 61] FIG. 61 is an aberration diagram illustrating lateral aberration upon infinity focusing at the intermediate position of the zoom lens according to Example 5.

[FIG. 62] FIG. 62 is an aberration diagram illustrating lateral aberration upon infinity focusing at the telephoto end of the zoom lens according to Example 5.

[FIG. 63] FIG. 63 is an aberration diagram illustrating lateral aberration upon short-distance focusing at the wide-angle end of the zoom lens according to Example 5.

[FIG. 64] FIG. 64 is an aberration diagram illustrating lateral aberration upon short-distance focusing at the intermediate position of the zoom lens according to Example 5.

[FIG. 65] FIG. 65 is an aberration diagram illustrating lateral aberration upon short-distance focusing at the telephoto end of the zoom lens according to Example 5.

[FIG. 66] FIG. 66 is a lens cross-sectional view of a sixth configuration example (Example 6) of a zoom lens according to an embodiment.

[FIG. 67] FIG. 67 is an aberration diagram illustrating longitudinal aberration upon infinity focusing at a wide-angle end of the zoom lens according to Example 6.

[FIG. 68] FIG. 68 is an aberration diagram illustrating longitudinal aberration upon infinity focusing at an intermediate position of the zoom lens according to Example 6.

[FIG. 69] FIG. 69 is an aberration diagram illustrating longitudinal aberration upon infinity focusing at a telephoto end of the zoom lens according to Example 6.

[FIG. 70] FIG. 70 is an aberration diagram illustrating longitudinal aberration upon short-distance focusing at the wide-angle end of the zoom lens according to Example 6.

[FIG. 71] FIG. 71 is an aberration diagram illustrating longitudinal aberration upon short-distance focusing at the intermediate position of the zoom lens according to Example 6.

[FIG. 72] FIG. 72 is an aberration diagram illustrating longitudinal aberration upon short-distance focusing at the telephoto end of the zoom lens according to Example 6.

[FIG. 73] FIG. 73 is an aberration diagram illustrating lateral aberration upon infinity focusing at the wide-angle end of the zoom lens according to Example 6.

[FIG. 74] FIG. 74 is an aberration diagram illustrating lateral aberration upon infinity focusing at the intermediate position of the zoom lens according to Example 6.

[FIG. 75] FIG. 75 is an aberration diagram illustrating lateral aberration upon infinity focusing at the telephoto end of the zoom lens according to Example 6.

[FIG. 76] FIG. 76 is an aberration diagram illustrating lateral aberration upon short-distance focusing at the wide-angle end of the zoom lens according to Example 6.

[FIG. 77] FIG. 77 is an aberration diagram illustrating lateral aberration upon short-distance focusing at the intermediate position of the zoom lens according to Example 6.

[FIG. 78] FIG. 78 is an aberration diagram illustrating lateral aberration upon short-distance focusing at the telephoto end of the zoom lens according to Example 6.

[FIG. 79] FIG. 79 is a lens cross-sectional view of a seventh configuration example (Example 7) of a zoom lens according to an embodiment.

[FIG. 80] FIG. 80 is an aberration diagram illustrating longitudinal aberration upon infinity focusing at a wide-angle end of the zoom lens according to Example 7.

[FIG. 81] FIG. 81 is an aberration diagram illustrating longitudinal aberration upon infinity focusing at an intermediate position of the zoom lens according to Example 7.

[FIG. 82] FIG. 82 is an aberration diagram illustrating longitudinal aberration upon infinity focusing at a telephoto end of the zoom lens according to Example 7.

[FIG. 83] FIG. 83 is an aberration diagram illustrating longitudinal aberration upon short-distance focusing at the wide-angle end of the zoom lens according to Example 7.

[FIG. 84] FIG. 84 is an aberration diagram illustrating longitudinal aberration upon short-distance focusing at the intermediate position of the zoom lens according to Example 7.

[FIG. 85] FIG. 85 is an aberration diagram illustrating longitudinal aberration upon short-distance focusing at the telephoto end of the zoom lens according to Example 7.

[FIG. 86] FIG. 86 is an aberration diagram illustrating lateral aberration upon infinity focusing at the wide-angle end of the zoom lens according to Example 7.

[FIG. 87] FIG. 87 is an aberration diagram illustrating lateral aberration upon infinity focusing at the intermediate position of the zoom lens according to Example 7.

[FIG. 88] FIG. 88 is an aberration diagram illustrating lateral aberration upon infinity focusing at the telephoto end of the zoom lens according to Example 7.

[FIG. 89] FIG. 89 is an aberration diagram illustrating lateral aberration upon short-distance focusing at the wide-angle end of the zoom lens according to Example 7.

[FIG. 90] FIG. 90 is an aberration diagram illustrating lateral aberration upon short-distance focusing at the intermediate position of the zoom lens according to Example 7.

[FIG.91] FIG. 91 is an aberration diagram illustrating lateral aberration upon short-distance focusing at the telephoto end of the zoom lens according to Example 7.

[FIG. 92] FIG. 92 is a block diagram illustrating a configuration example of an imaging apparatus.

[FIG. 93] FIG. 93 is a block diagram depicting an example of schematic configuration of a vehicle control system.

[FIG. 94] FIG. 94 is a diagram of assistance in explaining an example of installation positions of an outside-vehicle information detecting section and an imaging section.

[FIG. 95] FIG. 95 is a diagram illustrating an example of a schematic configuration of an endoscope system.

[FIG. 96] FIG. 96 is a block diagram illustrating an example of a functional configuration of a camera and a camera control unit (CCU) illustrated in FIG. 95.

[FIG. 97] FIG. 97 is a diagram illustrating an example of a schematic configuration of a microscopic surgery system.

Modes for Carrying Out the Invention

Hereinafter, description is given in detail of embodiments of the present disclosure with reference to the drawings. It is to be noted that the description is given in the following order.

0. Comparative Examples
1. Basic Configuration of Lens
2. Workings and Effects
3. Example of Application to Imaging Apparatus
4. Numerical Examples of Lenses
5. Practical Application Examples
6. Other Embodiments

<0. Comparative Examples>

In a configuration of a positive lead type zoom lens, pieces of refractive power of respective lens groups are increased, that are disposed to allow the pieces of refractive power to be positive, negative, and positive in order from an object side toward an image plane side. This reduces a movement amount of each of the groups upon zooming, thus making it possible to shorten a total optical length while achieving a high variable magnification ratio.

In a zoom lens described in PTL 1, increasing refractive power of each of a first lens group and a second lens group allows for achievement of performance of a high variable magnification ratio despite a small size. However, in the zoom lens according to PTL 1, positive refractive power on a side closer to an image plane than the second lens group is insufficient, thus making it difficult to reduce a diameter of a lens group on the side closer to the image plane than the second lens group and to suppress aberration variation that occurs upon zooming. Meanwhile, in a zoom lens described in PTL 2, increasing positive refractive power of a third lens group allows for achievement of a smaller size; however, it is difficult to correct variations in field curvature and spherical aberration occurring upon zooming.

<1. Basic Configuration of Lens>

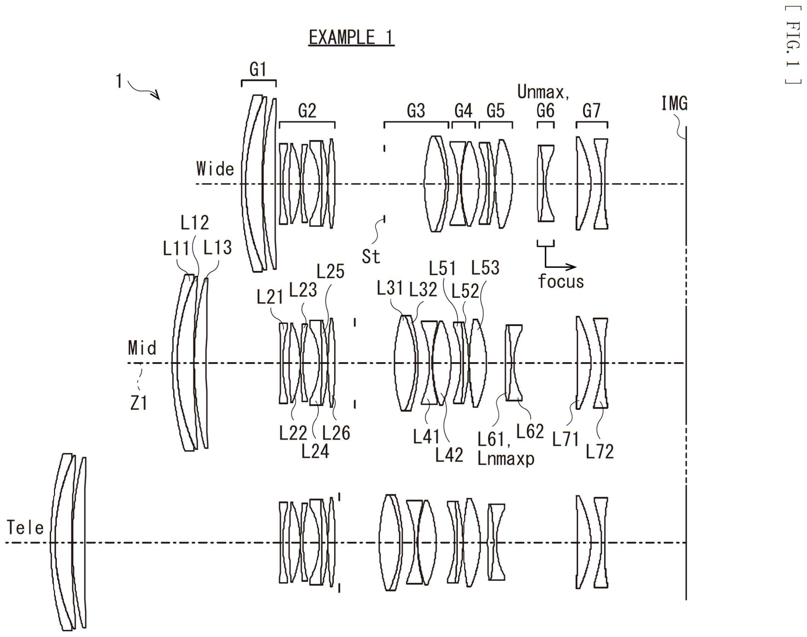

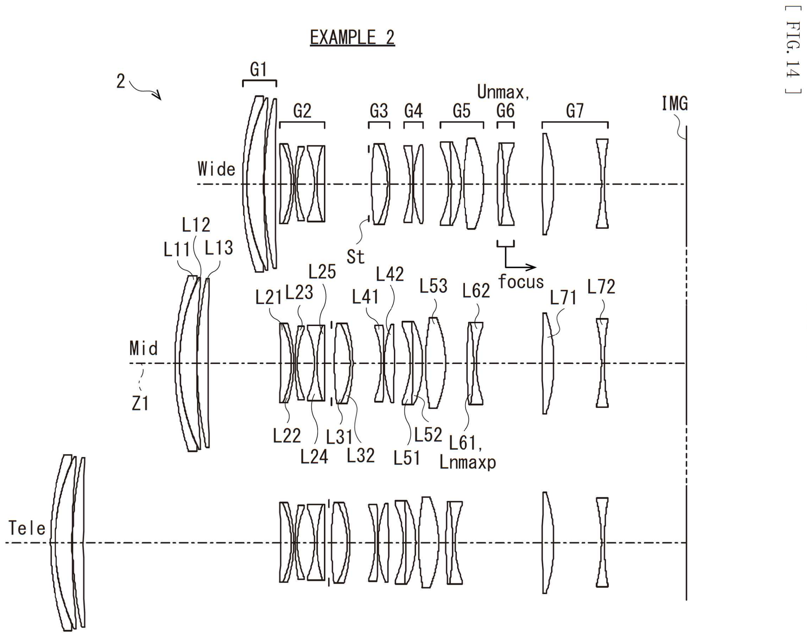

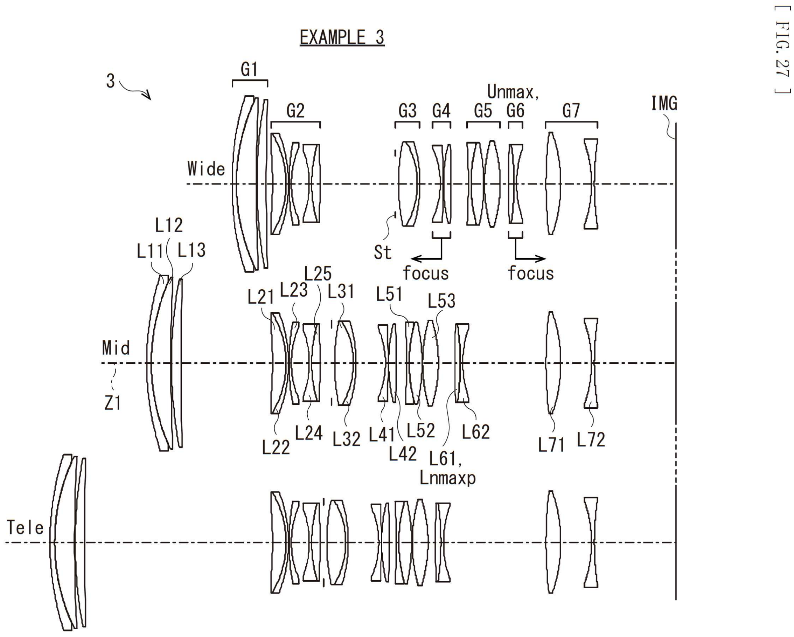

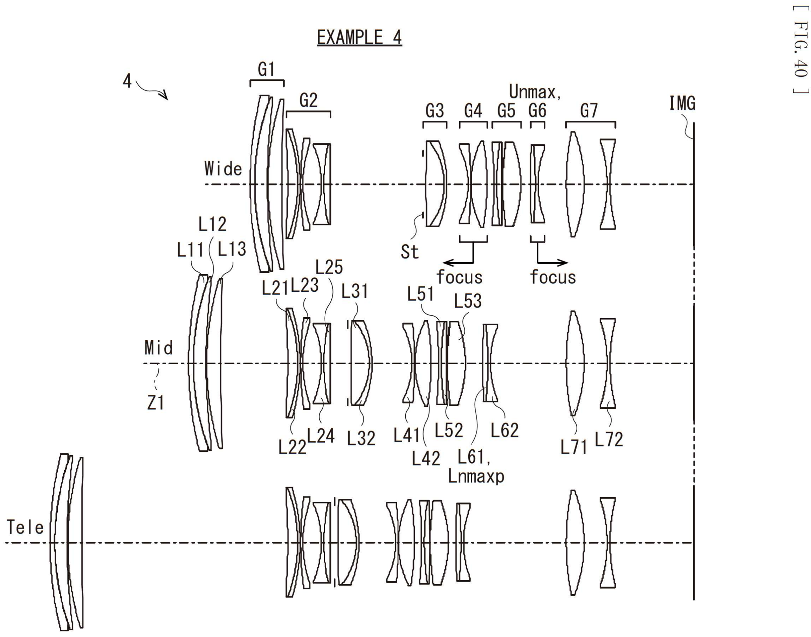

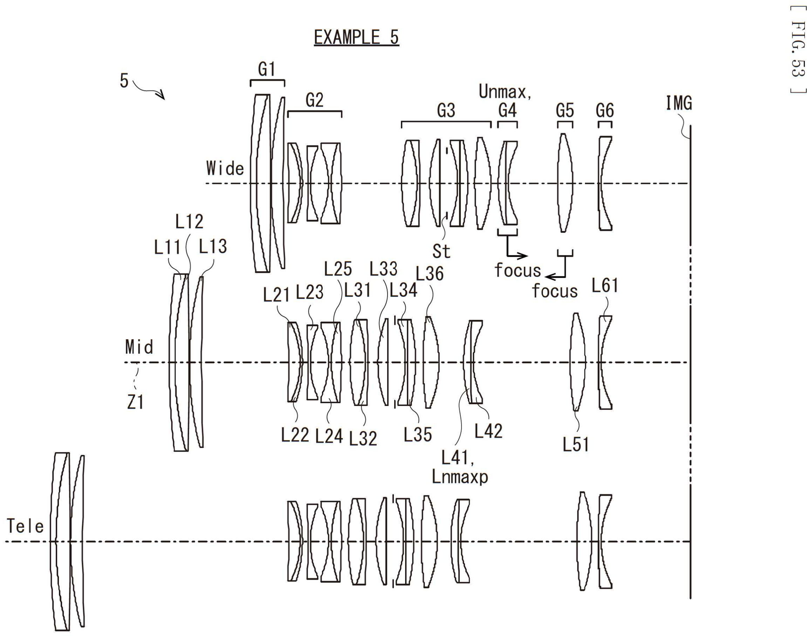

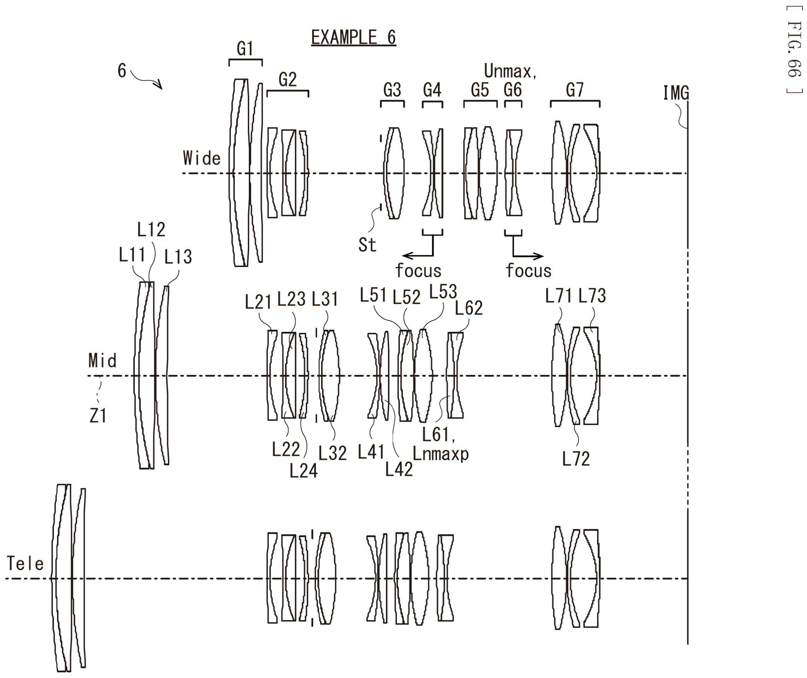

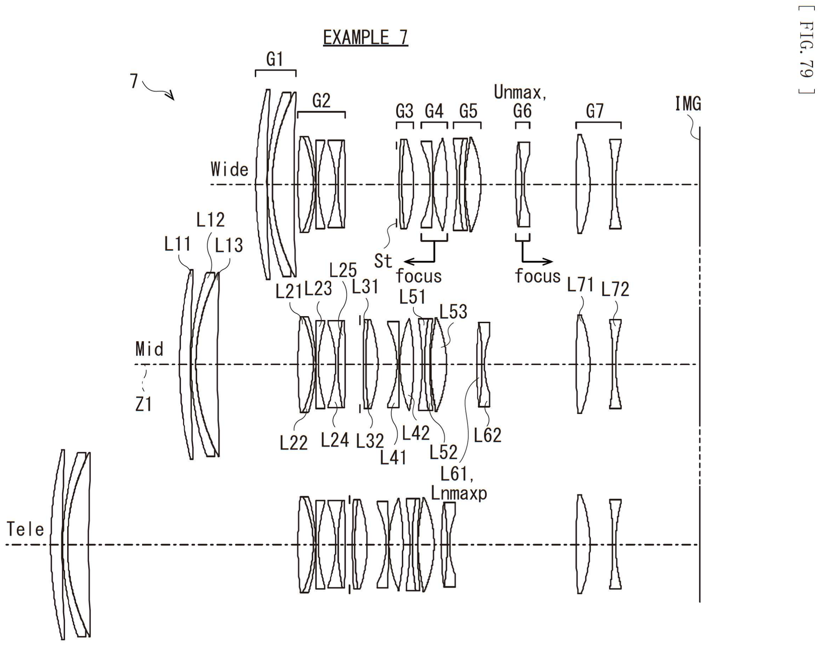

FIG. 1 illustrates a first configuration example of a zoom lens according to an embodiment of the present disclosure, and corresponds to a configuration of Example 1 described later. FIG. 14 illustrates a second configuration example of the zoom lens according to an embodiment, and corresponds to a configuration of Example 2 described later. FIG. 27 illustrates a third configuration example of the zoom lens according to an embodiment, and corresponds to a configuration of Example 3 described later. FIG. 40 illustrates a fourth configuration example of the zoom lens according to an embodiment, and corresponds to a configuration of Example 4 described later. FIG. 53 illustrates a fifth configuration example of the zoom lens according to an embodiment, and corresponds to a configuration of Example 5 described later. FIG. 66 illustrates a sixth configuration example of the zoom lens according to an embodiment, and corresponds to a configuration of Example 6 described later. FIG. 79 illustrates a seventh configuration example of the zoom lens according to an embodiment, and corresponds to a configuration of Example 7 described later.

In FIG. 1 and other drawings, Z1 denotes an optical axis. An optical member such as a cover glass for protecting an imaging element may be disposed between an image plane IMG and any of zoom lenses 1 to 7 according to the first to seventh configuration examples. Further, in addition to the cover glass, various optical filters such as a low-pass filter or an infrared cut filter may be disposed as the optical member.

Hereinafter, description is given of a configuration of the zoom lens according to an embodiment of the present disclosure, as appropriate, in association with the zoom lenses 1 to 7 according to the respective configuration examples illustrated in FIG. 1 and other drawings. However, the technique according to the present disclosure is not limited to the illustrated configuration examples.

A zoom lens according to an embodiment includes a plurality of lens groups and an aperture stop St. The plurality of lens groups includes, in order from the object side toward the image plane side, a first lens group G1 having positive refractive power, a second lens group G2 having negative refractive power, a third lens group G3 having positive refractive power, and a fourth lens group G4 having negative refractive power.

It is to be noted that, in Examples described later, the zoom lenses 1 to 4 and 6 and 7 according to Examples 1 to 4 and Examples 6 and 7 each have a seven-group configuration including the first lens group G1 to the seventh lens group G7 as the plurality of lens groups, and the zoom lens 5 according to Example 5 has a six-group configuration including the first lens group G1 to the sixth lens group G6 as the plurality of lens group.

Here, in the zoom lens according to an embodiment, the "lens group" refers to a lens group having refractive power and having an interval that varies with respect to an adjacent lens group upon zooming. A lens group configured only by a flat plate having no refractive power is not defined as the lens group.

In the zoom lens according to an embodiment, upon zooming from a wide-angle end to a telephoto end, an interval between adjacent lens groups varies. It is to be noted that FIG. 1 and other drawings illustrate, at the upper part, a lens arrangement at a wide-angle end (Wide) upon infinity focusing, and illustrate, at the middle part, a lens arrangement upon infinity focusing at an intermediate position (Mid). In addition, FIG. 1 and other drawings illustrate, at the lower part, a lens arrangement at a telephoto end (Tele) upon infinity focusing.

In the zoom lens according to an embodiment, the second lens group G2 is immovable with respect to the image plane IMG upon zooming.

The zoom lens according to an embodiment satisfies the following conditional expressions:

$$-5 \leq f2/f3 \leq -0.8 \ ...... \ (1)$$

$$-22 \leq f4/fw \leq -1.25 \ ...... \ (2)$$

where

fw denotes a focal distance of a total system at the wide-angle end upon infinity focusing,
f2 denotes a focal distance of the second lens group G2,
f3 denotes a focal distance of the third lens group G3, and
f4 denotes a focal distance of the fourth lens group G4.

In addition to those described above, the zoom lens according to an embodiment may further satisfy a predetermined conditional expression or the like described later.

<2. Workings and Effects>

Next, description is given of workings and effects of the zoom lens according to an embodiment of the present disclosure. In addition thereto, description is given of a more preferable configuration in the zoom lens according to an embodiment of the present disclosure as well as of the workings and effects thereof.

It is to be noted that the effects described herein are merely exemplary and are not limited thereto, and may further include other effects.

According to the zoom lens of an embodiment, respective pieces of refractive power of the lens groups are appropriately arranged in the positive lead type configuration to have a high variable magnification ratio while suppressing aberration variation that occurs upon zooming and thus to enable achievement of a smaller size and higher image quality. This makes it possible to provide a zoom lens that has a high variable magnification ratio and that enables achievement of a smaller size and higher image quality, as well as an imaging apparatus including such a zoom lens.

According to the zoom lens of an embodiment, the fourth lens group G4 having negative refractive power is disposed to have appropriate refractive power on a side closer to an image plane than the third lens group G3 having positive refractive power, in the positive lead type configuration in which the plurality of lens groups is disposed to allow the pieces of refractive power to be positive, negative, and positive in order from the object side toward the image plane side. This increases the positive refractive power of the third lens group G3 while favorably suppressing variations in various aberrations that occur upon zooming, thus making it possible to achieve an even smaller size and even higher image quality.

The above conditional expression (1) is a conditional expression to appropriately arrange the refractive power of the second lens group G2 and the refractive power of the third lens group G3. The second lens group G2 is dominant in a variable magnification ratio in the zoom lens according to an embodiment. The third lens group G3 is disposed on a side closest to an object, among lens groups closer to the image plane than the second lens group G2, and is dominant in suppression of aberration variation that occurs upon zooming. Satisfying this conditional expression allows for achievement of a small optical system while providing a high variable magnification ratio, thus making it possible to sufficiently demonstrate an effect of suppressing the aberration variation that occurs upon zooming by using the lens group on the side closer to the image plane than the second lens group G2. When falling below the lower limit of the conditional expression (1), the refractive power of the second lens group G2 becomes too weak relative to the third lens group G3, and therefore a movement amount of the second lens group G2 is increased, thus making it difficult to shorten a total length of the lens, in order to achieve the high variable magnification ratio. Alternatively, the refractive power of the third lens group G3 becomes too strong relative to the refractive power of the second lens group G2, thus making it difficult to suppress the aberration variation that occurs upon zooming. When exceeding an upper limit value of the conditional expression (1), the refractive power of the second lens group G2 is too strong relative to the third lens group G3, thus making it difficult to correct spherical aberration, field curvature, and distortion occurring in the second lens group G2. Alternatively, the refractive power of the third lens group G3 is too weak relative to the refractive power of the second lens group G2, thus making it difficult to suppress aberration variation that occurs upon zooming.

It is to be noted that setting a numerical value range of the conditional expression (1) as in the following conditional expression (1)' enables obtainment of higher effects.

$$-2 \leq f2/f3 \leq -0.8 \ \text{......} \ (1)'$$

The above conditional expression (2) is a conditional expression to define an appropriate relationship between the negative refractive power of the fourth lens group G4 and the focal distance of the total system at the wide-angle end upon infinity focusing. The fourth lens group G4, among the lens groups disposed on the side closer to the image plane than the second lens group G2, is dominant in suppression of variation of aberration such as spherical aberration or field curvature that occurs upon zooming. Satisfying the conditional expression (2) enables more favorable correction of the variation of spherical aberration that occurs upon zooming. Simultaneously satisfying the conditional expression (2) in addition to the conditional expression (1) makes it possible to achieve high optical performance across the entire zoom region while achieving a small size and a high variable magnification ratio. When falling below a lower limit value of the conditional expression (2), the refractive power of the fourth lens group G4 becomes too weak, thus making it difficult to achieve a smaller size and to suppress the variation of aberration such as spherical aberration or field curvature that occurs upon zooming. When exceeding an upper limit value of the conditional expression (2), the refractive power of the fourth lens group G4 becomes too strong, thus making it difficult to correct spherical aberration or field curvature that occurs at the fourth lens group G4.

It is to be noted that setting the numerical value range of the conditional expression (2) as in the following conditional expression (2)' enables achievement of higher effects.

$$-4 \leq f4/fw \leq -1.5 \ \text{......} \ (2)'$$

In addition, the zoom lens according to an embodiment may satisfy the following conditional expression (3):

$$0 < f1/ft \leq 5 \ \text{......} \ (3)$$

where

f1 denotes a focal distance of the first lens group G1, and
ft denotes a focal distance of the total system at the telephoto end upon infinity focusing.

The conditional expression (3) is a conditional expression to define an appropriate relationship between the focal distance of the first lens group G1 having positive refractive power and a focal distance of the total system at the telephoto end upon infinity focusing. Satisfying this conditional expression enables an image point position of the first lens group G1 to be disposed at an appropriate position, thus making it possible to achieve a reduction in size and weight. When falling below a lower limit value of the conditional expression (3), the focal distance of the first lens group G1 becomes too small relative to the focal distance of the total system at the telephoto end, thus making it difficult to correct axial chromatic aberration or spherical aberration that occurs at the first lens group G1. When exceeding an upper limit value of the conditional expression (3), the focal distance of the first lens group G1 becomes too large relative to the focal distance of the total system at the telephoto end, thus making it difficult to achieve a reduction in size and weight.

It is to be noted that setting the numerical value range of the conditional expression (3) as in the following conditional expression (3)' enables obtainment of higher effects.

$$0.6 < f1/ft \leq 2 ...... (3)'$$

In addition, in the zoom lens according to an embodiment, the plurality of lens groups may include at least one movable lens group on a side closer to the image plane than the aperture stop St, and a movable lens group Unmax having the strongest negative refractive power, among the at least one movable lens group, may be moved as a focus group in an optical axis direction, upon focusing from infinity to a finite distance. According to the present configuration, moving the movable lens group Unmax having the strongest negative refractive power, among the movable lens group on the side closer to the image plane than the aperture stop St, upon focusing enables suppression of a movement amount of the movable lens group Unmax as the focus group, thus making it possible to shorten the total length of the lens.

It is to be noted that, in the zoom lenses 1 to 4 and 6 and 7 according to Examples 1 to 4 and Examples 6 and 7 in Examples described later, the sixth lens group G6 is the movable lens group Unmax. In the zoom lens 5 according to Example 5, the fourth lens group G4 is the movable lens group Unmax.

In addition, the zoom lens according to an embodiment may satisfy the following conditional expression (4):

$$-3 \leq (1-\beta n^2)/Fnot \leq -0.1 ...... (4)$$

where

βn denotes lateral magnification of the movable lens group Unmax having the strongest negative refractive power, and Fnot denotes an F-number at the telephoto end upon infinity focusing.

The conditional expression (4) is a conditional expression to perform focusing from infinity to a finite distance by moving the movable lens group Unmax as a focus group in the optical axis direction. Satisfying this conditional expression enables appropriate focusing. When falling below a lower limit value of the conditional expression (4), a movement amount of the movable lens group Unmax as the focus group in the optical axis direction upon focusing from infinity to a finite distance is increased, thus making it difficult to shorten the total optical length. When exceeding an upper limit value of the conditional expression (4), a variation amount of the image plane IMG in the optical axis direction becomes too large relative to the movement amount of the movable lens group Unmax as the focus group in the optical axis direction, thus making it difficult to control the focus group.

It is to be noted that setting the numerical value range of the conditional expression (4) as in the following conditional expression (4)' enables obtainment of higher effects.

$$-2.5 \leq (1-\beta n^2)/Fnot \leq -0.8 ...... (4)'$$

In addition, in the zoom lens according to an embodiment, the movable lens group Unmax having the strongest negative refractive power, among the movable lens group on the side closer to the image plane than the aperture stop St, may have a positive lens Lnmaxp that satisfies the following conditional expression (5):

$$3.2 \leq Nnp + 0.1*vnp \leq 4.5 ...... (5)$$

where

Nnp denotes a refractive index of the positive lens Lnmaxp in the movable lens group Unmax with respect to a d-line, and
vnp denotes Abbe number of the positive lens Lnmaxp in the movable lens group Unmax with respect to the d-line.

The conditional expression (5) is a conditional expression to define a refractive index and Abbe number of the positive lens Lnmaxp in the movable lens group Unmax with respect to the d-line. Satisfying this conditional expression enables favorable correction of chromatic aberration of magnification. When falling below a lower limit value of the conditional expression (5), the Abbe number of the positive lens Lnmaxp with respect to the d-line becomes too small, thus resulting in overcorrection of chromatic aberration of magnification at the wide-angle end. When exceeding an upper limit value of the conditional expression (5), the Abbe number of the positive lens Lnmaxp with respect to the d-line becomes too large, thus resulting in an insufficient effect of correction of the chromatic aberration of magnification at the wide-angle end.

It is to be noted that, in the zoom lenses 1 to 4 and 6 and 7 according to Examples 1 to 4 and Examples 6 and 7 in Examples described later, a lens L61 in the sixth lens group G6 is the positive lens Lnmaxp. In the zoom lens 5 according to Example 5, a lens L41 in the fourth lens group G4 is the positive lens Lnmaxp.

It is to be noted that setting the numerical value range of the conditional expression (5) as in the following conditional expression (5)' enables obtainment of higher effects.

$$3.8 \leq Nnp + 0.1*vnp \leq 4.3 \ ...... \ (5)'$$

In addition, in the zoom lens according to an embodiment, the third lens group G3 may include at least one positive lens, and the following conditional expression (6) may be satisfied:

$$1.6 \leq Np3 \ ...... \ (6)$$

where
Np3 denotes an average value of refractive indexes of the at least one positive lens in the third lens group G3.

The conditional expression (6) is a conditional expression to define an average value of the refractive indexes of the at least one positive lens included in the third lens group G3. In the zoom lens according to an embodiment, a light beam diffused by the second lens group G2 having strong negative refractive power needs to be converged by the third lens group G3 to thereby lower a height of an on-axis light beam on the side closer to the image plane than the third lens group G3 and reduce a diameter of the lens on the side closer to the image plane than the third lens group G3. When falling below the lower limit of the conditional expression (6), the number of the at least one positive lens included in the third lens group G3 increases, and makes it difficult to correct various aberrations, in particular, spherical aberration.

It is to be noted that setting the numerical value range of the conditional expression (6) as in the following conditional expression (6)' enables obtainment of higher effects.

$$1.7 \leq Np3 \ ...... \ (6)'$$

In addition, in the zoom lens according to an embodiment, the aperture stop St may move to the object side integrally with the third lens group G3 upon zooming. Adopting the present configuration enables an incident pupil position of the optical system to be located on the object side, thus making it possible to reduce a diameter of the first lens group G1.

In addition, in the zoom lens according to an embodiment, a lens group disposed on the side closer to the image plane than the third lens group G3, among the plurality of lens groups, may be moved as a focus group in the optical axis direction, upon focusing from infinity to a finite distance. Performing focusing by using the lens group on the side closer the image plane than the third lens group G3 having positive refractive power enables a reduction in size and weight of the focus group, thus making it possible to achieve high-speed focusing.

In addition, in the zoom lens according to an embodiment, the fourth lens group G4 may be moved as a focus group in the optical axis direction upon focusing from infinity to a finite distance. Adopting the present configuration makes it possible to effectively correct a variation of field curvature or spherical aberration caused by focusing.

In addition, in the zoom lens according to an embodiment, a final lens group among the plurality of lens groups may be configured to include a positive lens and a negative lens in order from the object side toward the image plane side. Adopting the present configuration enables an exit pupil position to be located on the image plane side, thus making it possible to achieve a smaller size of the optical system.

In addition, in the zoom lens according to an embodiment, the third lens group G3 and the movable lens group Unmax having the strongest negative refractive power disposed on the side closer to the image plane than the aperture stop St may move integrally upon zooming. Adopting the present configuration enables simplification of the movable mechanism, which is advantageous in terms of a reduction in size and weight.

In addition, in the zoom lens according to an embodiment, a lens group on a side closer to the object than the final lens group, among the plurality of lens groups, may include a positive lens having an aspherical shape in which positive refractive power becomes weaker in a peripheral part than in a center part. Adopting the present configuration makes it possible to effectively correct various aberrations, in particular, spherical aberration, in a region where the height of the on-axis light beam is high across the entire zoom region.

In addition, in the zoom lens according to an embodiment, the final lens group, among the plurality of lens groups, may include a negative lens having an aspherical shape in which negative refractive power becomes weaker in a peripheral part than in a center part. Adopting the present configuration enables contribution to a reduction in size by locating the exit pupil position on the image plane side; it becomes possible to effectively correct resulting various aberrations, in particular, field curvature, by using the final lens group.

In addition, in the zoom lens according to an embodiment, a surface on a side closest to the object in the fourth lens group G4 may have a convex shape with respect to the image plane side. Adopting the present configuration enables a light beam converged by the positive refractive power of the third lens group G3 to be incident on the surface that is convex with respect to the image plane side, thus making it possible to appropriately correct various aberrations, in particular, spherical aberration.

<3. Example of Application to Imaging Apparatus>

Next, description is given of an example of application of the zoom lens according to an embodiment of the present disclosure to a specific imaging apparatus.

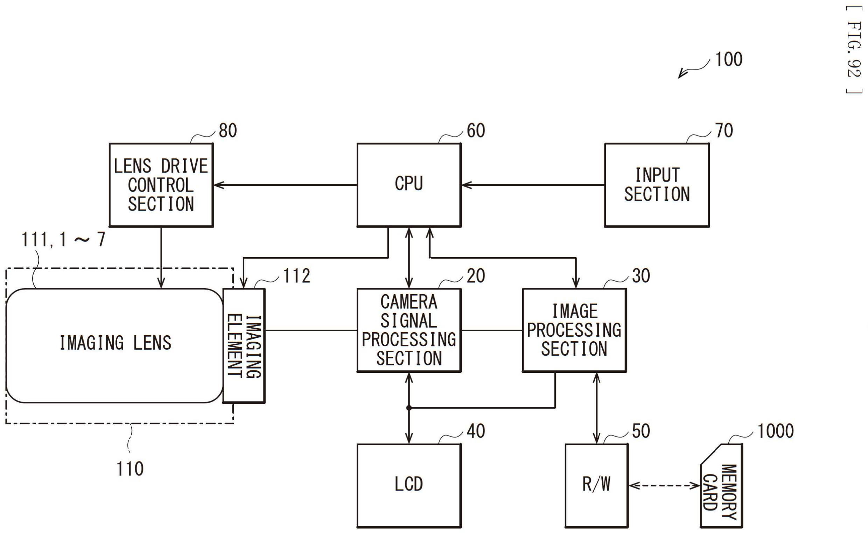

FIG. 92 illustrates a configuration example of an imaging apparatus 100 to which the zoom lens according to an embodiment is applied. The imaging apparatus 100 is, for example, a digital still camera, and includes a camera block 110, a camera signal processing section 20, an image processing section 30, an LCD (Liquid Crystal Display) 40, an R/W (reader/writer) 50, a CPU (Central Processing Unit) 60, an input section 70, and a lens drive control section 80.

The camera block 110 serves a role in an imaging function, and includes an imaging lens 111, and an imaging element 112 such as CCD (Charge Coupled Devices) or CMOS (Complementary Metal Oxide Semiconductor). The imaging element 112 converts an optical image formed by the imaging lens 111 into an electric signal, to thereby output an imaging signal (image signal) that corresponds to the optical image. Any of the zoom lenses 1 to 7 according to the respective configuration examples illustrated in FIG. 1 and other drawings is applicable as the imaging lens 111.

The camera signal processing section 20 performs, on the image signal outputted from the imaging element 112, various types of signal processing including, for example, analog-digital conversion, noise removal, image quality correction, or conversion to luminance and color difference signals.

The image processing section 30 performs processing of recording and reproduction of an image signal. The image processing section 30 performs processing including, for example, compression encoding and expansion decoding processing of an image signal based on a predetermined image data format, and processing of converting data specification such as resolution.

The LCD 40 has a function of displaying various types of data including, for example, a state of operation performed on the input section 70 by a user and a captured image. The R/W 50 performs writing of image data encoded by the image processing section 30 into a memory card 1000, and reading of the image data recorded in the memory card 1000. The memory card 1000 is a semiconductor memory attachable to and detachable from a slot coupled to the R/W 50, for example.

The CPU 60 functions as a control processing section that controls each of circuit blocks provided in the imaging apparatus 100. The CPU 60 controls each of the circuit blocks on the basis of, for example, an instruction input signal from the input section 70. The input section 70 includes, for example, various switches on which required operations are performed by the user. For example, the input section 70 includes a shutter release button used to perform a shutter operation, a selection switch used to select an operation mode, or the like. The input section 70 outputs, to the CPU 60, the instruction input signal that corresponds to the operation performed by the user. The lens drive control section 80 controls driving of lenses disposed in the camera block 110. The lens drive control section 80 controls, for example, unillustrated motors that drive respective lenses of the imaging lens 111 on the basis of a control signal from the CPU 60.

In the following, description is given of operations in the imaging apparatus 100.

In a standby state upon image capturing, an image signal corresponding to an image captured in the camera block 110 is outputted to the LCD 40 via the camera signal processing section 20, and is thus displayed as a camera-through image, under the control of the CPU 60. In addition, for example, when the instruction input signal, for zooming or focusing, from the input section 70 is inputted, the CPU 60 outputs the control signal to the lens drive control section 80. This moves a predetermined lens of the imaging lens 111 under the control of the lens drive control section 80.

When an unillustrated shutter of the camera block 110 is operated in response to the instruction input signal from the input section 70, the captured image signal is outputted from the camera signal processing section 20 to the image processing section 30 to be subjected to the compression encoding processing, and is thus converted into digital data in a predetermined data format. The converted data is outputted to the R/W 50 to be written into the memory card 1000.

It is to be noted that the focusing is performed in a case where the shutter release button of the input section 70 is pressed halfway, or in a case where the shutter release button is pressed fully for recording (image capturing), for example. The focusing is performed by causing the lens drive control section 80 to move a predetermined lens of the imaging lens 111 on the basis of the control signal from the CPU 60.

In a case where the image data recorded in the memory card 1000 is to be reproduced, predetermined image data is read from the memory card 1000 by the R/W 50 in accordance with the operation performed on the input section 70. The predetermined image data read from the memory card 1000 is subjected to the expansion decoding processing by the image processing section 30. Thereafter, a reproduction image signal is outputted to the LCD 40, and a reproduced image is thus displayed.

It is to be noted that, although the above description exemplifies the application of the imaging apparatus to the digital still camera, or the like, a range of application of the imaging apparatus is not limited to the digital still camera. The imaging apparatus is applicable to other various imaging apparatuses. For example, the imaging apparatus is applicable to a digital single-lens reflex camera, a digital non-reflex camera, a digital video camera, a surveillance camera, and the like. In addition, the imaging apparatus is applicable widely to, for example, a camera section of a digital input/output apparatus such as a mobile phone mounted with a camera or an information terminal mounted with a camera. In addition, the imaging apparatus is applicable to an interchangeable-lens camera as well.

[Examples]

<4. Numerical Examples of Lenses>

Next, description is given of specific Numerical Examples of the zoom lens according to an embodiment of the present disclosure. Here, the description is given of Numerical Examples in which specific numerical values are applied to the zoom lenses 1 to 7 of the respective configuration examples illustrated in FIG. 1 and other drawings.

It is to be noted that meanings, and the like of respective symbols indicated in the following tables and descriptions are as follows. "Si" denotes the number of i-th surface signed to be increased sequentially from the side closest to the object. "ri" denotes a value (mm) of a paraxial radius of curvature of the i-th surface. "di" denotes a value (mm) of an interval on the optical axis between the i-th surface and (i+1)-th surface. "ndi" denotes a value of a refractive index with respect to a d-line (wavelength of 587.6 nm) of a material of an optical element having the i-th surface. "vdi" denotes a value of Abbe number in the d-line of the material of the optical element having the i-th surface. "φi" denotes a value (mm) of an effective diameter of the i-th surface. A portion where the value of "ri" is $''\infty''$ indicates a flat surface, an aperture stop surface, or the like. "ASP" in the column of surface number (Si) indicates that the surface is configured by an aspherical shape. "STO" in the column of the surface number indicates that the aperture stop St is disposed at the corresponding position. "OBJ" in the column of the surface number indicates that the surface is an object surface (subject surface). "IMG" in the column of the surface number indicates that the surface is an image plane. "f" denotes a focal distance of the total system (unit: mm). "Fno" denotes an open F-value (F-number). "ω" denotes a half angle of view (unit: °). "Y" denotes an image height (unit: mm). "L" denotes a total optical length (a distance on the optical axis from a surface on the side closest to the object to the image plane IMG) (unit: mm).

In addition, some of the lenses to be used in each of Examples have a lens surface configured by an aspherical surface. The aspherical shape is defined by the following expression. It is to be noted that, in each of the tables exhibiting aspherical coefficients described later, "E-i" denotes exponential notation with a base of 10, i.e., "$10^{-i}$"; for example, "0.12345E-05" denotes "$0.12345 \times 10^{-5}$".

(Expression of Aspherical Surface)

$$x = c^2 y^2 / (1 + (1 - (1 + k)\, c^2 y^2)^{1/2}) + A4 \cdot y^4 + A6 \cdot y^6 + A8 \cdot y^8 + A10 \cdot y^{10} + A12 \cdot y^{12}$$

Here, it is assumed that "x" is a distance (a sag amount) from a vertex of a lens surface in the optical axis direction, "y" is a height in a direction perpendicular to the optical axis, "c" is a paraxial curvature at the vertex of the lens surface (inverse of the radius of curvature), and "k" is a conic (conic) constant. A4, A6, A8, A10, and A12 are 4-th order, 6-th order, 8-th order, 10-th order, and 12-th order aspherical coefficients, respectively.

[Example 1]

Table 1 exhibits basic lens data of the zoom lens 1 according to Example 1 illustrated in FIG. 1. Table 2 exhibits values of a focal distance f of a total system, an F-value, a total angle of view 2ω, an image height Y, and a total optical length L in the zoom lens 1 according to Example 1. Table 3 exhibits data on a surface interval that is variable upon zooming and focusing in the zoom lens 1 according to Example 1. It is to be noted that Table 2 exhibits values for each of the wide-angle end (Wide), the intermediate position (Mid), and the telephoto end (Tele) in cases where a photographic distance and an object distance (d0) are each infinity. Table 3 exhibits values for each of the wide-angle end (Wide), the intermediate position (Mid), and the telephoto end (Tele) in cases where the photographic distance and the object distance (d0) are each infinity and in cases where the photographic distance and the object distance (d0) are each a short distance. Table 4 exhibits values of coefficients indicating shapes of aspherical surfaces in the zoom lens 1 according to Example 1. Table 5 exhibits a starting surface and a focal distance (unit: mm) of each of lens groups of the zoom lens 1 according to Example 1.

The zoom lens 1 according to Example 1 has a configuration in which the first lens group G1 to the seventh lens group G7 are disposed as the plurality of lens groups in order from the object side toward the image plane side. The aperture stop St is disposed on the object side of the third lens group G3.

The first lens group G1 has positive refractive power. The first lens group G1 includes lenses L11 to L13 in order from the object side toward the image plane side. The lens L11 is a negative meniscus lens with a convex surface opposed to the object side. The lens L12 is a positive meniscus lens with a convex surface opposed to the object side. The lens L13 is a positive meniscus lens with a convex surface opposed to the object side. The lens L11 and the lens L12 are attached to each other to constitute a cemented lens.

The second lens group G2 has negative refractive power. The second lens group G2 includes lenses L21 to L26 in order from the object side toward the image plane side. The lens L21 is a negative lens of a biconcave shape. The lens L22 is a positive lens of a biconvex shape. The lens L23 is a negative meniscus lens with a convex surface opposed to the object side. The lens L24 is a negative meniscus lens with a concave surface opposed to the object side. The lens L25 is a negative meniscus lens with a concave surface opposed to the object side. The lens L26 is a positive lens of a biconvex shape. The lens L24 and the lens L25 are attached to each other to constitute a cemented lens.

The third lens group G3 has positive refractive power. The third lens group G3 includes a lens L31 and a lens L32 in order from the object side toward the image plane side. The lens L31 is a positive lens of a biconvex shape. The lens L32 is a negative meniscus lens with a concave surface opposed to the object side. The lens L31 and the lens L32 are attached to each other to constitute a cemented lens.

The fourth lens group G4 has negative refractive power. The fourth lens group G4 includes the lens L41 and a lens L42 in order from the object side toward the image plane side. The lens L41 is a negative lens of a biconcave shape. The lens L42 is a positive lens of a biconvex shape. This allows, in the fourth lens group G4, a surface on a side closest to the object side to have a convex shape with respect to the image plane side.

The fifth lens group G5 has positive refractive power. The fifth lens group G5 includes lenses L51 to L53 in order from the object side toward the image plane side. The lens L51 is a negative meniscus lens with a concave surface opposed to the object side. The lens L52 is a positive meniscus lens with a concave surface opposed to the object side. The lens L53 is a positive lens of a biconvex shape. The lens L51 and the lens L52 are attached to each other to constitute a cemented lens.

The sixth lens group G6 has negative refractive power. The sixth lens group G6 includes the lens L61 and a lens L62 in order from the object side toward the image plane side. The lens L61 is a positive lens of a biconvex shape. The lens L62 is a negative lens of a biconcave shape. The lens L61 and the lens L62 are attached to each other to constitute a cemented lens.

The seventh lens group G7 has negative refractive power. The seventh lens group G7 includes a lens L71 and a lens L72 in order from the object side toward the image plane side. The lens L71 is a positive meniscus lens with a concave surface opposed to the object side. The lens L72 is a negative lens of a biconcave shape.

Upon zooming from the wide-angle end to the telephoto end, predetermined lens groups move to allow an interval between adjacent lens groups to change. Upon zooming, the second lens group G2 and the seventh lens group G7 (final lens group) are each immovable (fixed) with respect to the image plane IMG. Upon focusing in which the object distance changes from infinity to a short distance (finite distance), the sixth lens group G6 moves as the focus group to the image plane side in the optical axis direction.

The zoom lens 1 according to Example 1 includes at least one movable lens group on the side closer to the image plane than the aperture stop St, and moves, as the focus group, the movable lens group Unmax having the strongest negative refractive power, among the at least one movable lens group, in the optical axis direction upon focusing from infinity to a finite distance. In the zoom lens 1 according to Example 1, the sixth lens group G6 is the movable lens group Unmax, and includes the lens L61 as the positive lens Lnmaxp in the movable lens group Unmax. In addition, the third lens group G3 and the movable lens group Unmax move integrally upon zooming.

In the zoom lens 1 according to Example 1, the fifth lens group G5, which is a lens group on the side closer to the object than the final lens group (seventh lens group G7), among the plurality of lens groups, includes a positive lens (lens L53) having an aspherical shape in which positive refractive power becomes weaker in a peripheral part than in a center part.

In addition, in the zoom lens 1 according to Example 1, the final lens group (seventh lens group G7), among the plurality of lens groups, includes a negative lens (lens L72) having an aspherical shape in which negative refractive power becomes weaker in a peripheral part than in a center part.

The above-described configuration allows for achievement of a telephoto zoom lens having a high variable magnification ratio despite a small size and a light weight.

[Table 1]

| Si | ri | di | ndi | vdi | φi |
|---|---|---|---|---|---|
| Example 1 | | | | | |
| 0 (OBJ) | | (d0) | | | |
| 1 | 104.738 | 1.80 | 1.75453 | 35.3 | 59.29 |
| 2 | 70.502 | 0.00 | | | 57.99 |
| 3 | 70.502 | 6.30 | 1.49845 | 81.6 | 57.99 |
| 4 | 273.894 | 0.25 | | | 57.59 |
| 5 | 114.344 | 4.62 | 1.49845 | 81.6 | 56.95 |
| 6 | 873.381 | (d6) | | | 56.43 |
| 7 | -312.381 | 0.90 | 1.96073 | 32.3 | 26.26 |
| 8 | 48.245 | 2.44 | | | 25.62 |
| 9 | 146.156 | 4.15 | 1.51978 | 52.1 | 25.85 |
| 10 | -34.387 | 0.20 | | | 26.01 |
| 11 | 154.408 | 0.90 | 1.76760 | 48.5 | 25.42 |
| 12 | 56.138 | 6.27 | | | 25.12 |
| 13 | -24.427 | 1.00 | 1.73234 | 54.7 | 25.19 |
| 14 | -231.362 | 2.20 | 1.93024 | 24.0 | 27.33 |
| 15 | -57.096 | 0.20 | | | 27.75 |
| 16 | 138.991 | 2.63 | 1.72310 | 29.5 | 28.96 |
| 17 | -118.059 | (d17) | | | 29.13 |
| 18 (STO) | ∞ | 15.29 | | | 29.39 |
| 19 | 54.676 | 8.01 | 1.76760 | 48.5 | 31.37 |
| 20 | -37.657 | 1.00 | 1.91695 | 35.2 | 30.92 |
| 21 | -51.821 | (d21) | | | 30.73 |
| 22 | -33.214 | 1.00 | 1.82017 | 46.6 | 27.08 |
| 23 | 48.030 | 0.20 | | | 27.09 |
| 24 | 42.507 | 6.92 | 1.55206 | 75.5 | 27.37 |
| 25 | -36.009 | (d25) | | | 27.51 |
| 26 | -32.774 | 1.00 | 2.00996 | 25.5 | 24.96 |
| 27 | -124.575 | 2.09 | 1.59561 | 67.0 | 26.02 |
| 28 | -52.324 | 0.20 | | | 26.60 |
| 29 (ASP) | 62.872 | 6.54 | 1.76821 | 49.1 | 28.49 |
| 30 (ASP) | -34.014 | (d30) | | | 28.83 |
| 31 | 211.248 | 2.34 | 1.81643 | 22.8 | 24.66 |
| 32 | -81.458 | 1.00 | 1.83945 | 42.7 | 24.30 |
| 33 | 24.743 | (d33) | | | 22.77 |
| 34 (ASP) | -180.110 | 5.14 | 1.67717 | 38.3 | 30.11 |
| 35 (ASP) | -25.934 | 4.13 | | | 30.48 |

14

(continued)

| Example 1 | | | | | |
|---|---|---|---|---|---|
| Si | ri | di | ndi | vdi | φi |
| 36 (ASP) | -31.149 | 1.10 | 1.77173 | 49.2 | 28.88 |
| 37 (ASP) | 143.729 | 31.07 | | | 29.22 |
| 38 (IMG) | ∞ | 0.00 | | | 43.39 |

[Table 2]

| Example 1 (Zoom Ratio: 2.67) | | | |
|---|---|---|---|
| | Wide | Mid | Tele |
| f (mm) | 72.14 | 108.32 | 192.89 |
| Fno | 4.12 | 4.36 | 4.14 |
| 2ω (°) | 33.38 | 22.59 | 12.80 |
| Y (mm) | 21.63 | 21.63 | 21.63 |
| L (mm) | 170.00 | 196.25 | 242.84 |

[Table 3]

| Example 1 · Variable Data | | | | | | |
|---|---|---|---|---|---|---|
| | Wide | Mid | Tele | Wide | Mid | Tele |
| Photographic Distance | ∞ | ∞ | ∞ | 2283 mm | 3352 mm | 5788 mm |
| d0 | ∞ | ∞ | ∞ | 2113.32 | 3156.01 | 5545.47 |
| d6 | 2.09 | 28.33 | 74.93 | 2.09 | 28.33 | 74.93 |
| d17 | 18.84 | 7.41 | 1.50 | 18.84 | 7.41 | 1.50 |
| d21 | 3.76 | 4.34 | 4.65 | 3.74 | 4.31 | 4.65 |
| d25 | 2.88 | 3.84 | 7.07 | 2.90 | 3.87 | 7.07 |
| d30 | 9.54 | 7.07 | 2.80 | 9.93 | 7.51 | 3.44 |
| d33 | 12.01 | 24.38 | 31.00 | 11.61 | 23.94 | 30.36 |

[Table 4]

| Example 1 · Aspherical Data | | | | |
|---|---|---|---|---|
| Si | k | A4 | A6 | A8 |
| 29 | 0.00000E+00 | -5.37593E-06 | 4.86345E-09 | -6.14052E-11 |
| 30 | 0.00000E+00 | 5.50369E-06 | -5.87287E-10 | -4.29408E-11 |
| 34 | 0.00000E+00 | 6.28124E-06 | 1.49539E-08 | -1.53917E-10 |
| 35 | 0.00000E+00 | 2.38430E-05 | -6.12771E-09 | 1.45301E-11 |
| 36 | 0.00000E+00 | 1.71706E-06 | 1.89758E-07 | -6.57523E-10 |
| 37 | 0.00000E+00 | -1.44130E-05 | 2.06580E-07 | -7.84986E-10 |

(continued)

| Si | A10 | A12 |
|----|-----|-----|
| 29 | 2.75957E-13 | -5.17837E-16 |
| 30 | 2.16233E-13 | -4.11728E-16 |
| 34 | 3.77360E-13 | -7.54815E-16 |
| 35 | -2.70132E-13 | 2.13381E-16 |
| 36 | 7.18393E-13 | 1.00736E-16 |
| 37 | 1.52538E-12 | -1.43755E-15 |

[Table 5]

| Example 1 | | |
|-----------|--|--|
| Lens Group | Starting Surface | Focal Distance |
| G1 | 1 | 180.88 |
| G2 | 7 | -74.52 |
| G3 | 18 | 37.48 |
| G4 | 22 | -90.98 |
| G5 | 26 | 46.69 |
| G6 | 31 | -33.32 |
| G7 | 34 | -198.36 |

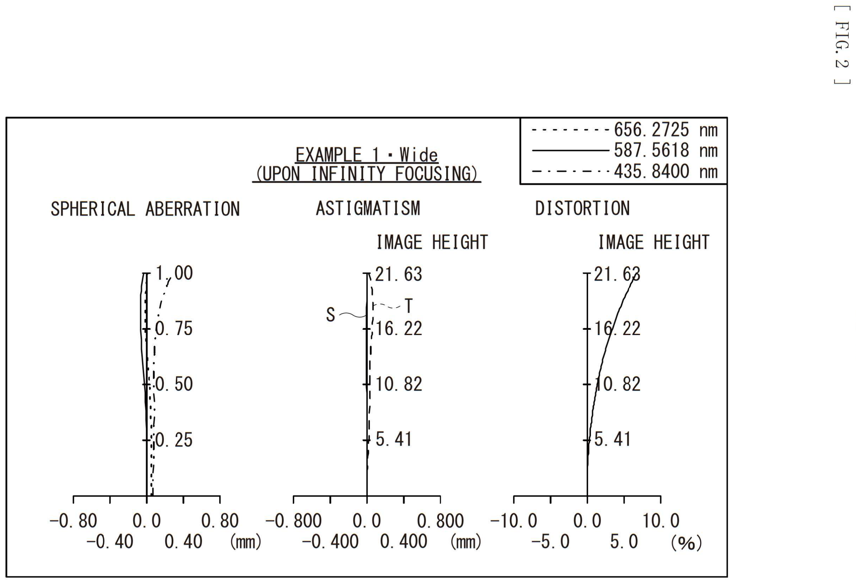

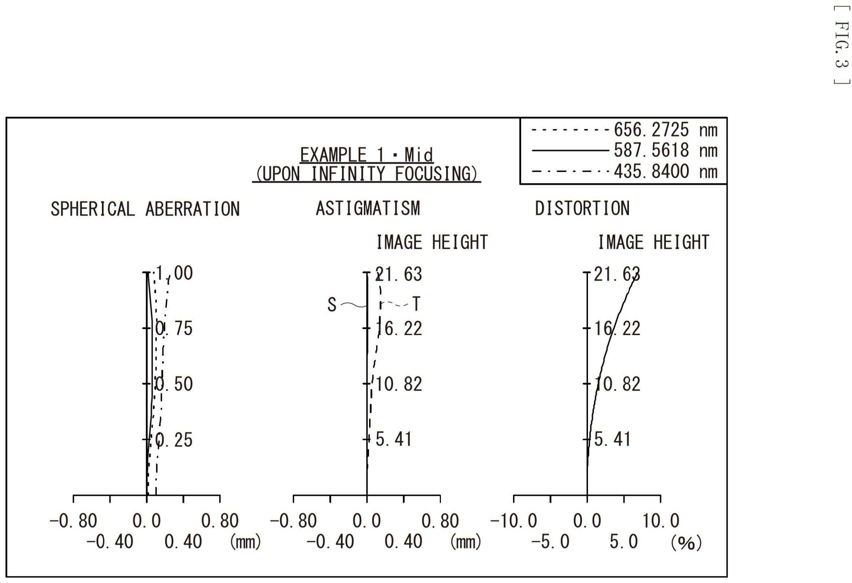

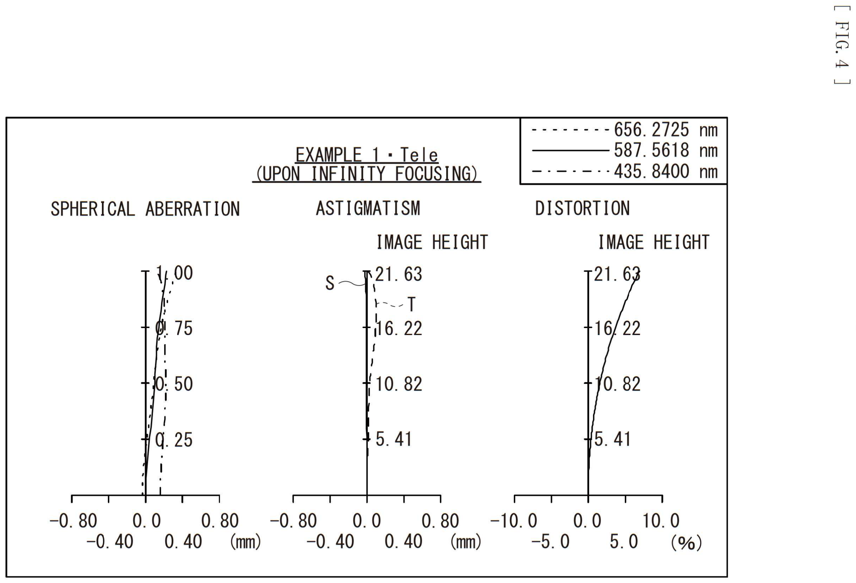

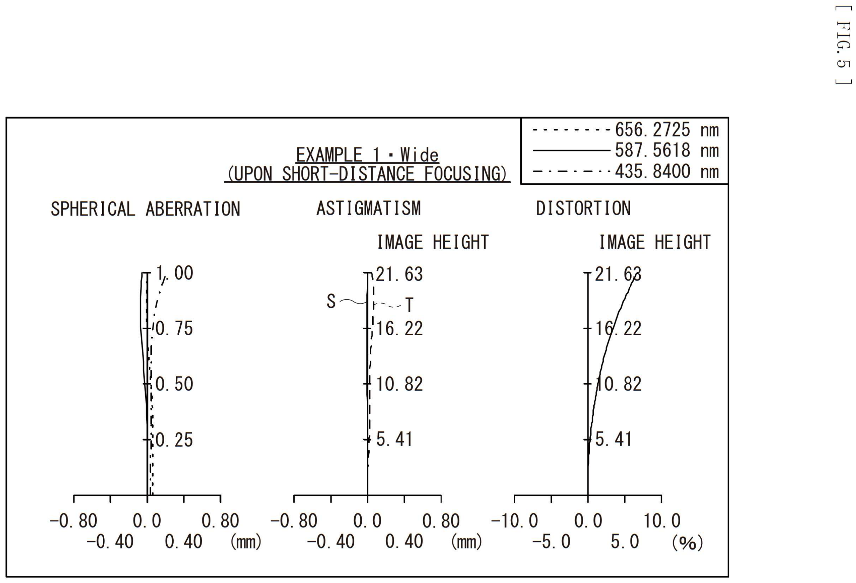

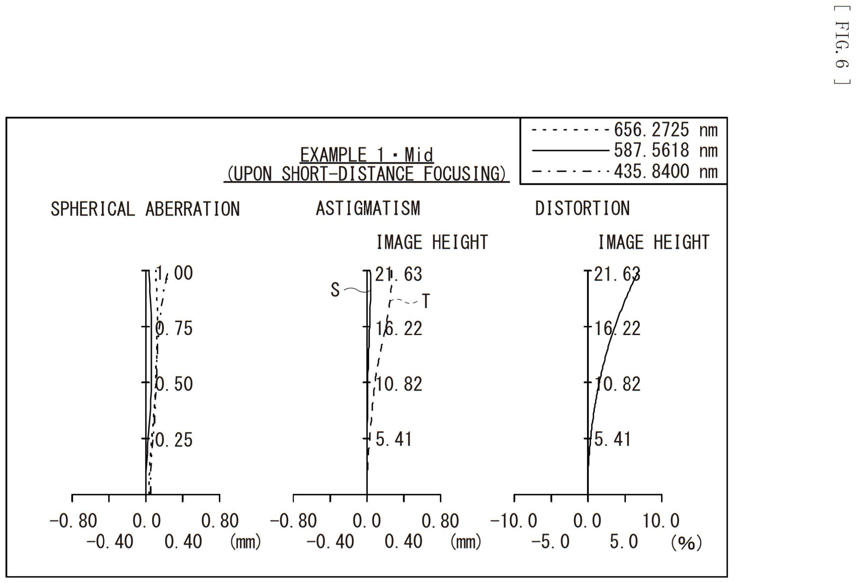

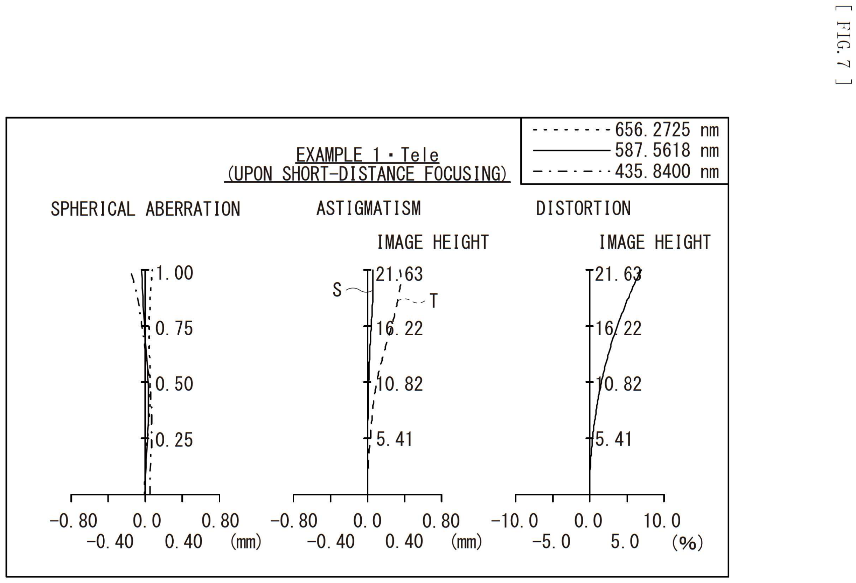

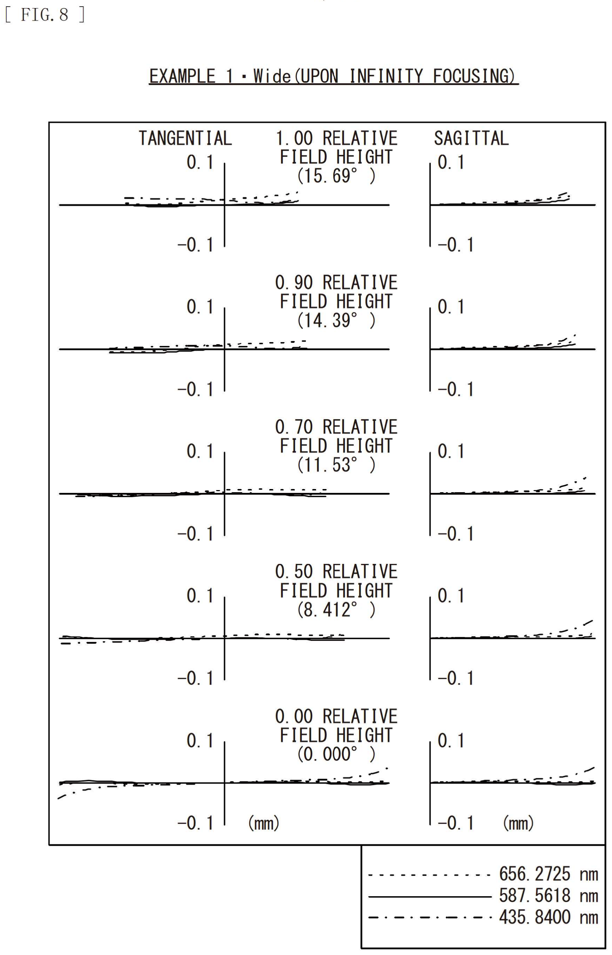

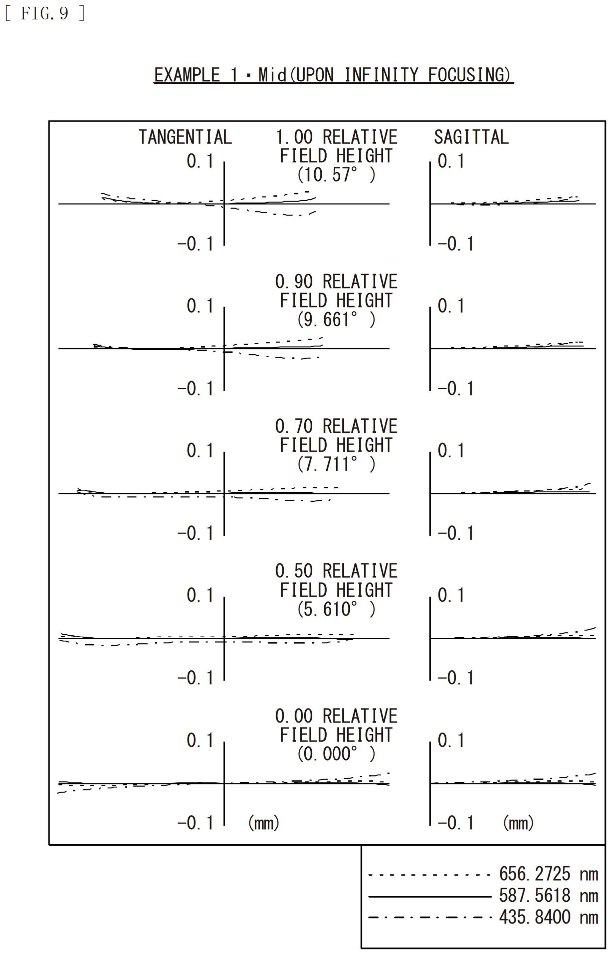

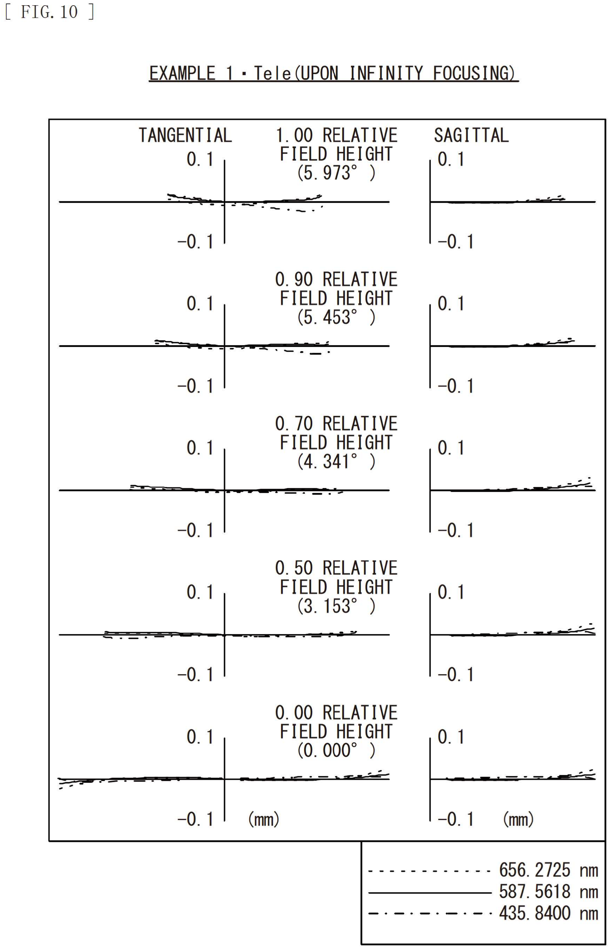

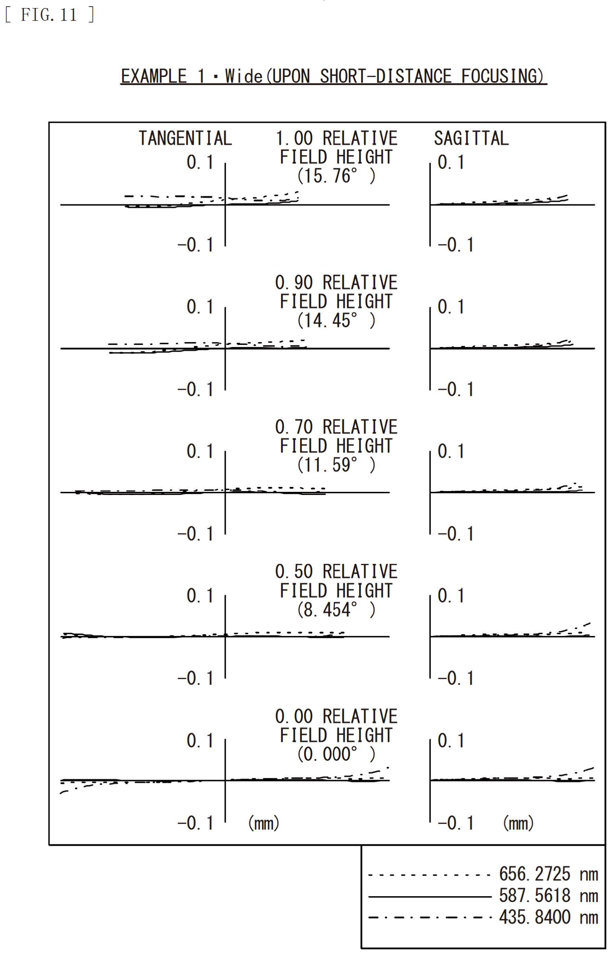

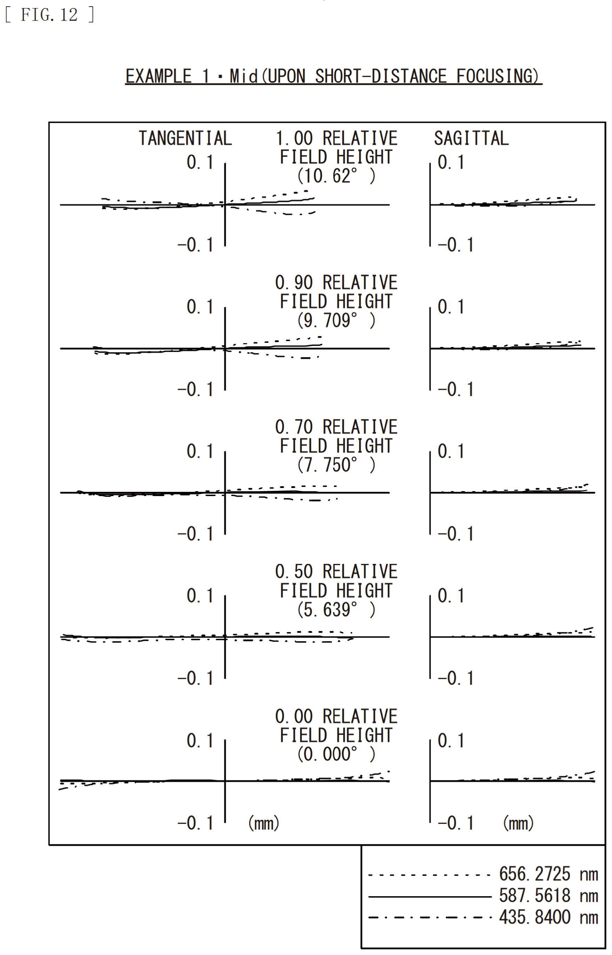

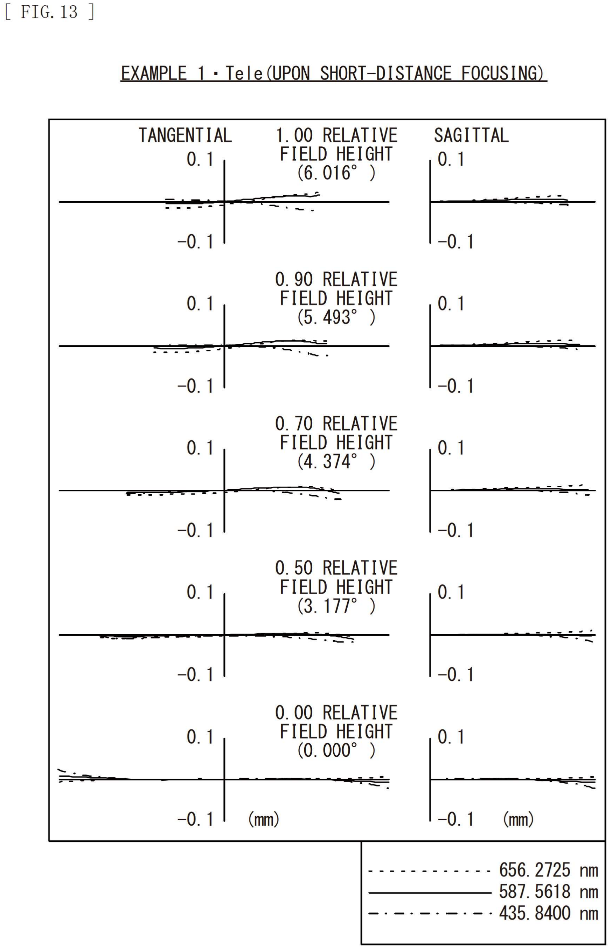

FIG. 2 illustrates longitudinal aberration upon infinity focusing at a wide-angle end of the zoom lens 1 according to Example 1. FIG. 3 illustrates longitudinal aberration upon infinity focusing at an intermediate position of the zoom lens 1 according to Example 1. FIG. 4 illustrates longitudinal aberration upon infinity focusing at a telephoto end of the zoom lens 1 according to Example 1. FIG. 5 illustrates longitudinal aberration upon short-distance focusing at the wide-angle end of the zoom lens 1 according to Example 1. FIG. 6 illustrates longitudinal aberration upon short-distance focusing at the intermediate position of the zoom lens 1 according to Example 1. FIG. 7 illustrates longitudinal aberration upon short-distance focusing at the telephoto end of the zoom lens 1 according to Example 1. FIG. 8 illustrates lateral aberration upon infinity focusing at the wide-angle end of the zoom lens 1 according to Example 1. FIG. 9 illustrates lateral aberration upon infinity focusing at the intermediate position of the zoom lens 1 according to Example 1. FIG. 10 illustrates lateral aberration upon infinity focusing at the telephoto end of the zoom lens 1 according to Example 1. FIG. 11 illustrates lateral aberration upon short-distance focusing at the wide-angle end of the zoom lens 1 according to Example 1. FIG. 12 illustrates lateral aberration upon short-distance focusing at the intermediate position of the zoom lens 1 according to Example 1. FIG. 13 illustrates lateral aberration upon short-distance focusing at the telephoto end of the zoom lens 1 according to Example 1.

FIGs. 2 to 7 illustrate, as longitudinal aberration, spherical aberration, astigmatism (field curvature), and distortion. In the spherical aberration diagrams in FIGs. 2 to 7 and the lateral aberration diagrams in FIGs. 8 to 13, a solid line indicates a value on a d-line (587.56 nm), a dashed-dotted line indicates a value on a g-line (435.84 nm), and a broken line indicates a value on a C-line (656.27 nm). In the astigmatism diagrams in FIGs. 2 to 7, S denotes a value on a sagittal image plane, and T denotes a value on a tangential image plane. The astigmatism diagrams and the distortion diagrams in FIGs. 2 to 7 illustrate values on the d-line.

These apply similarly to aberration diagrams in subsequent other Examples.

As appreciated from each of the aberration diagrams, the zoom lens 1 according to Example 1 undergoes favorable correction of various aberrations, and thus has superior image-forming performance.

[Example 2]

Table 6 exhibits basic lens data of the zoom lens 2 according to Example 2 illustrated in FIG. 14. Table 7 exhibits values of the focal distance f of the total system, the F-value, the total angle of view 2ω, the image height Y, and the total optical length L in the zoom lens 2 according to Example 2. Table 8 exhibits data on a surface interval that is variable upon zooming and focusing in the zoom lens 2 according to Example 2. It is to be noted that Table 7 exhibits values for each of the wide-angle end (Wide), the intermediate position (Mid), and the telephoto end (Tele) in cases where the photographic distance and the object distance (d0) are each infinity. Table 8 exhibits values for each of the wide-angle end (Wide), the intermediate position (Mid), and the telephoto end (Tele) in cases where the photographic distance and the object distance (d0) are each infinity and in cases where the photographic distance and the object distance (d0) are each a short distance. Table 9 exhibits values of coefficients indicating shapes of aspherical surfaces in the zoom lens 2 according to Example 2. Table 10 exhibits a starting surface and a focal distance (unit: mm) of each of lens groups of the zoom lens 2 according to Example 2.

The zoom lens 2 according to Example 2 has a configuration in which the first lens group G1 to the seventh lens group G7 are disposed as the plurality of lens groups in order from the object side toward the image plane side. The aperture stop St is disposed on the object side of the third lens group G3.

The first lens group G1 has positive refractive power. The first lens group G1 includes the lenses L11 to L13 in order from the object side toward the image plane side. The lens L11 is a negative meniscus lens with a convex surface opposed to the object side. The lens L12 is a positive meniscus lens with a convex surface opposed to the object side. The lens L13 is a positive meniscus lens with a convex surface opposed to the object side. The lens L11 and the lens L12 are attached to each other to constitute a cemented lens.

The second lens group G2 has negative refractive power. The second lens group G2 includes the lenses L21 to L25 in order from the object side toward the image plane side. The lens L21 is a positive meniscus lens with a concave surface opposed to the object side. The lens L22 is a negative meniscus lens with a concave surface opposed to the object side. The lens L21 and the lens L22 are attached to each other to constitute a cemented lens. The lens L23 is a negative meniscus lens with a convex surface opposed to the object side. The lens L24 is a negative lens of a biconcave shape. The lens L25 is a positive lens of a biconvex shape. The lens L24 and the lens L25 are attached to each other to constitute a cemented lens.

The third lens group G3 has positive refractive power. The third lens group G3 includes the lens L31 and the lens L32 in order from the object side toward the image plane side. The lens L31 is a positive lens of a biconvex shape. The lens L32 is a negative meniscus lens with a concave surface opposed to the object side. The lens L31 and the lens L32 are attached to each other to constitute a cemented lens.

The fourth lens group G4 has negative refractive power. The fourth lens group G4 includes the lens L41 and the lens L42 in order from the object side toward the image plane side. The lens L41 is a negative meniscus lens with a concave surface opposed to the object side. The lens L42 is a positive lens of a biconvex shape. This allows, in the fourth lens group G4, a surface on a side closest to the object side to have a convex shape with respect to the image plane side.

The fifth lens group G5 has positive refractive power. The fifth lens group G5 includes the lenses L51 to L53 in order from the object side toward the image plane side. The lens L51 is a negative meniscus lens with a concave surface opposed to the object side. The lens L52 is a positive meniscus lens with a concave surface opposed to the object side. The lens L53 is a positive lens of a biconvex shape. The lens L51 and the lens L52 are attached to each other to constitute a cemented lens.

The sixth lens group G6 has negative refractive power. The sixth lens group G6 includes the lens L61 and the lens L62 in order from the object side toward the image plane side. The lens L61 is a positive lens of a biconvex shape. The lens L62 is a negative lens of a biconcave shape. The lens L61 and the lens L62 are attached to each other to constitute a cemented lens.

The seventh lens group G7 has negative refractive power. The seventh lens group G7 includes the lens L71 and the lens L72 in order from the object side toward the image plane side. The lens L71 is a positive lens of a biconvex shape. The lens L72 is a negative lens of a biconcave shape.

Upon zooming from the wide-angle end to the telephoto end, predetermined lens groups move to allow an interval between adjacent lens groups to change. Upon zooming, the second lens group G2 and the seventh lens group G7 (final lens group) are each immovable (fixed) with respect to the image plane IMG. Upon focusing in which the object distance changes from infinity to a short distance (finite distance), the sixth lens group G6 moves as the focus group to the image plane side in the optical axis direction.

The zoom lens 2 according to Example 2 includes at least one movable lens group on the side closer to the image plane than the aperture stop St, and moves, as the focus group, the movable lens group Unmax having the strongest negative refractive power, among the at least one movable lens group, in the optical axis direction upon focusing from infinity to a finite distance. In the zoom lens 2 according to Example 2, the sixth lens group G6 is the movable lens group Unmax, and includes the lens L61 as the positive lens Lnmaxp in the movable lens group Unmax. In addition, the third lens group G3 and the movable lens group Unmax move integrally upon zooming.

In the zoom lens 2 according to Example 2, the fifth lens group G5, which is a lens group on the side closer to the object than the final lens group (seventh lens group G7), among the plurality of lens groups, includes a positive lens (lens L53) having an aspherical shape in which positive refractive power becomes weaker in a peripheral part than in a center part.

In addition, in the zoom lens 2 according to Example 2, the final lens group (seventh lens group G7), among the plurality of lens groups, includes a negative lens (lens L72) having an aspherical shape in which negative refractive power becomes weaker in a peripheral part than in a center part.

The above-described configuration allows for achievement of a telephoto zoom lens having a high variable magnification ratio despite a small size and a light weight.

[Table 6]

| Example 2 | | | | | |
|---|---|---|---|---|---|
| Si | ri | di | ndi | vdi | φi |
| 0 (OBJ) | | (d0) | | | |
| 1 | 95.872 | 1.80 | 1.75453 | 35.3 | 59.02 |
| 2 | 67.753 | 0.00 | | | 57.62 |
| 3 | 67.753 | 6.43 | 1.49845 | 81.6 | 57.62 |
| 4 | 257.963 | 0.25 | | | 57.13 |
| 5 | 129.946 | 4.10 | 1.49845 | 81.6 | 56.51 |
| 6 | 873.381 | (d6) | | | 55.97 |
| 7 | -419.420 | 4.09 | 1.51978 | 52.1 | 26.00 |
| 8 | -31.635 | 0.90 | 1.96073 | 32.3 | 25.94 |
| 9 | -43.418 | 0.51 | | | 25.83 |
| 10 | 70.110 | 0.90 | 1.76760 | 48.5 | 24.03 |
| 11 | 31.396 | 6.50 | | | 23.19 |
| 12 | -29.081 | 1.00 | 1.73234 | 54.7 | 22.96 |
| 13 | 42.315 | 3.03 | 1.93024 | 24.0 | 24.45 |
| 14 | -937.228 | (d14) | | | 24.67 |
| 15 (STO) | ∞ | 1.10 | | | 25.23 |
| 16 | 110.448 | 6.02 | 1.76760 | 48.5 | 25.88 |
| 17 | -28.987 | 1.00 | 1.91695 | 35.2 | 26.08 |
| 18 | -46.698 | (d18) | | | 26.43 |
| 19 | -35.404 | 1.00 | 1.82017 | 46.6 | 24.26 |
| 20 | -325.206 | 0.20 | | | 24.89 |
| 21 | 37.654 | 3.93 | 1.55206 | 75.5 | 25.79 |
| 22 | -284.031 | (d22) | | | 25.72 |
| 23 | -29.962 | 1.00 | 2.00996 | 25.5 | 25.28 |
| 24 | -212.031 | 3.73 | 1.59561 | 67.0 | 26.62 |
| 25 | -33.814 | 1.05 | | | 27.23 |
| 26 (ASP) | 65.112 | 7.67 | 1.76821 | 49.1 | 29.17 |
| 27 (ASP) | -38.254 | (d27) | | | 29.69 |
| 28 | 173.841 | 2.51 | 1.81643 | 22.8 | 26.79 |
| 29 | -95.133 | 1.00 | 1.83945 | 42.7 | 26.55 |
| 30 | 35.816 | (d30) | | | 25.59 |
| 31 | 710.461 | 4.33 | 1.67717 | 38.3 | 32.96 |
| 32 | -55.991 | 18.24 | | | 33.15 |
| 33 (ASP) | -64.017 | 1.10 | 1.77373 | 49.4 | 28.93 |
| 34 (ASP) | 90.905 | 31.32 | | | 29.20 |

(continued)

| Example 2 | | | | | |
|---|---|---|---|---|---|
| Si | ri | di | ndi | vdi | φi |
| 35 (IMG) | ∞ | 0.00 | | | 43.29 |

[Table 7]

| Example 2 (Zoom Ratio: 2.67) | | | |
|---|---|---|---|
| | Wide | Mid | Tele |
| f (mm) | 72.15 | 119.70 | 192.89 |
| Fno | 4.12 | 4.36 | 4.14 |
| 2ω (°) | 33.38 | 20.49 | 12.80 |
| Y (mm) | 21.63 | 21.63 | 21.63 |
| L (mm) | 170.00 | 195.77 | 243.45 |

[Table 8]

| Example 2 · Variable Data | | | | | | |
|---|---|---|---|---|---|---|
| | Wide | Mid | Tele | Wide | Mid | Tele |
| Photographic Distance | ∞ | ∞ | ∞ | 2289 mm | 3709 mm | 5814 mm |
| d0 | ∞ | ∞ | ∞ | 2119.38 | 3513.49 | 5570.44 |
| d6 | 2.08 | 27.85 | 75.53 | 2.08 | 27.85 | 75.53 |
| d14 | 16.82 | 2.61 | 1.50 | 16.82 | 2.61 | 1.50 |
| d18 | 7.75 | 10.79 | 9.59 | 7.75 | 10.79 | 9.59 |
| d22 | 9.60 | 6.12 | 5.81 | 9.60 | 6.12 | 5.81 |
| d27 | 5.29 | 8.33 | 2.80 | 5.84 | 9.09 | 3.90 |
| d30 | 13.76 | 25.37 | 33.52 | 13.21 | 24.61 | 32.42 |

[Table 9]

| Example 2 ·Aspherical Data | | | | |
|---|---|---|---|---|
| Si | k | A4 | A6 | A8 |
| 26 | 0.00000E+00 | -7.00843E-06 | 4.45006E-09 | -4.06177E-11 |
| 27 | 0.00000E+00 | 3.41791E-06 | 6.73792E-10 | -3.44963E-11 |
| 33 | 0.00000E+00 | -1.21800E-05 | 1.13098E-07 | -4.11278E-10 |
| 34 | 0.00000E+00 | -9.61981E-06 | 1.04374E-07 | -3.40042E-10 |
| Si | A10 | A12 | | |
| 26 | 1.32801E-13 | -1.27343E-16 | | |
| 27 | 1.14790E-13 | -1.07093E-16 | | |
| 33 | 7.11522E-13 | -3.86505E-16 | | |
| 34 | 4.95178E-13 | -1.31978E-16 | | |

[Table 10]

| Example 2 | | |
|---|---|---|
| Lens Group | Starting Surface | Focal Distance |
| G1 | 1 | 184.40 |
| G2 | 7 | -37.99 |
| G3 | 15 | 47.64 |
| G4 | 19 | -274.09 |
| G5 | 23 | 44.18 |
| G6 | 28 | -53.38 |
| G7 | 31 | -376.85 |

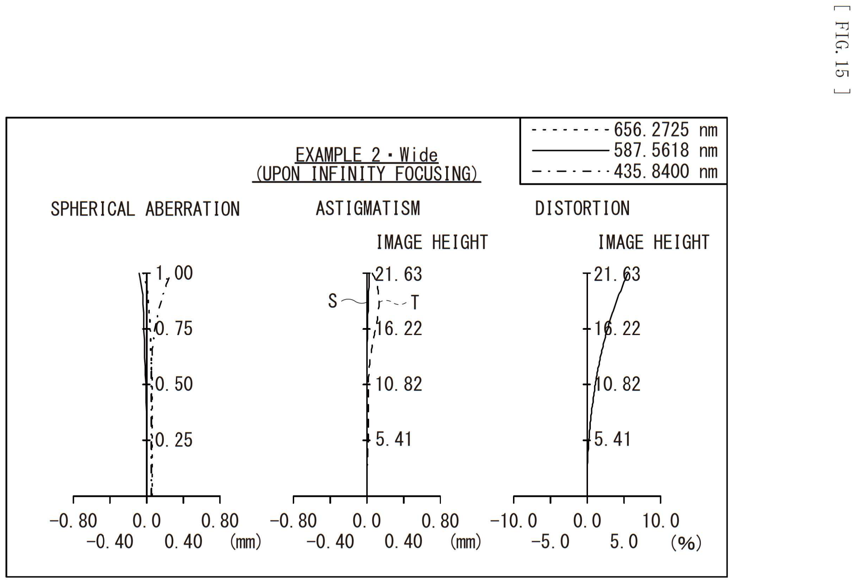

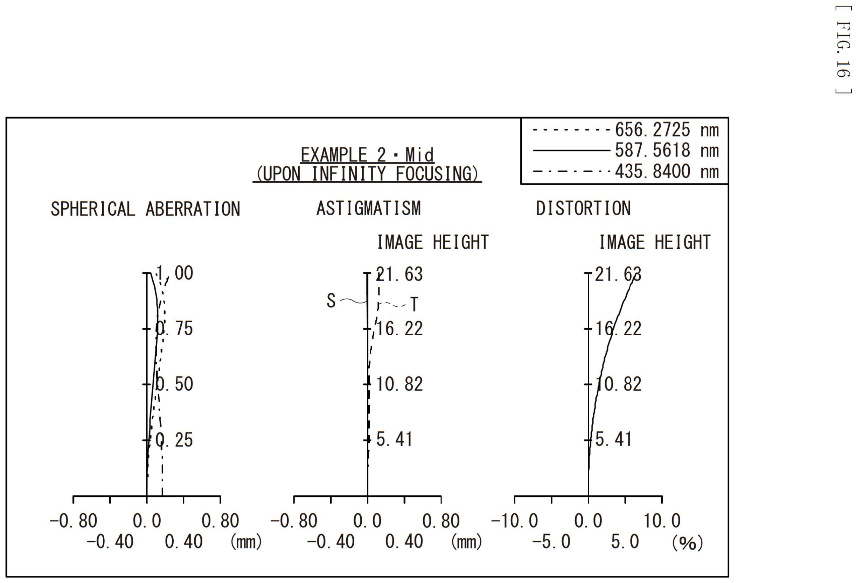

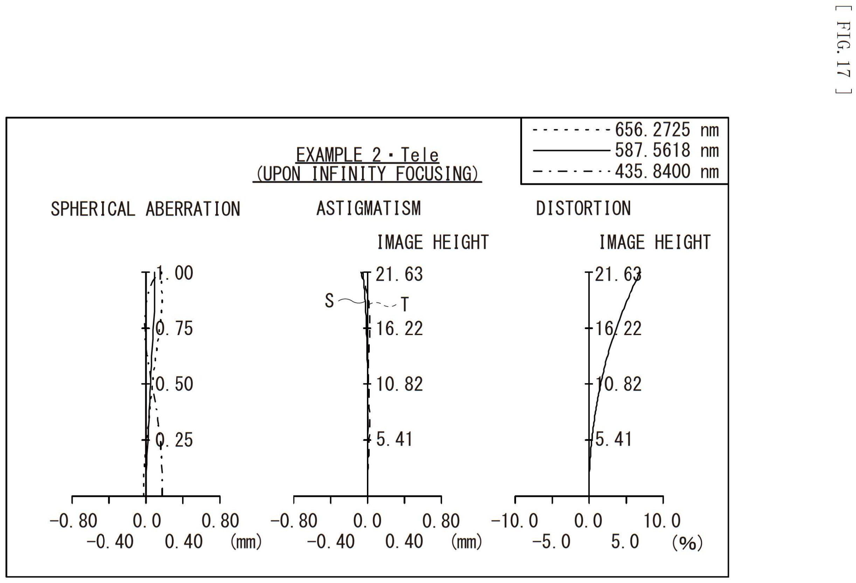

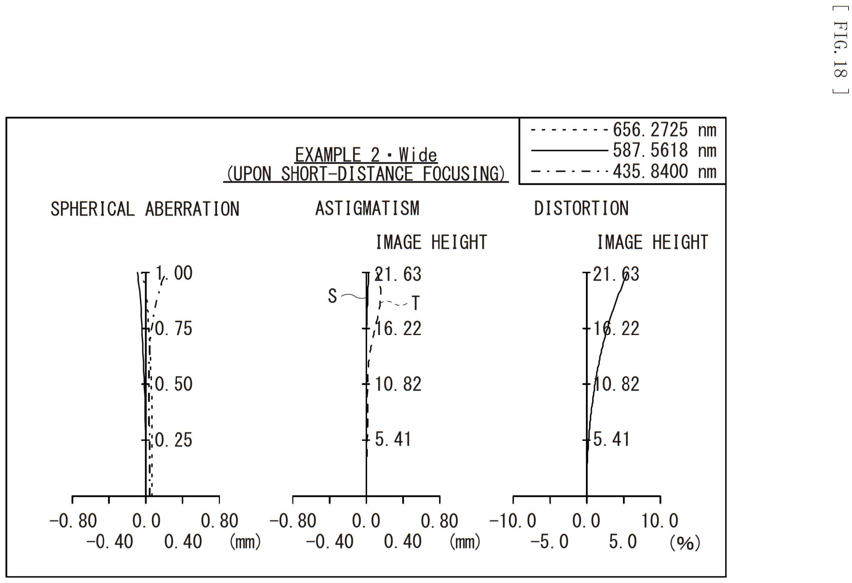

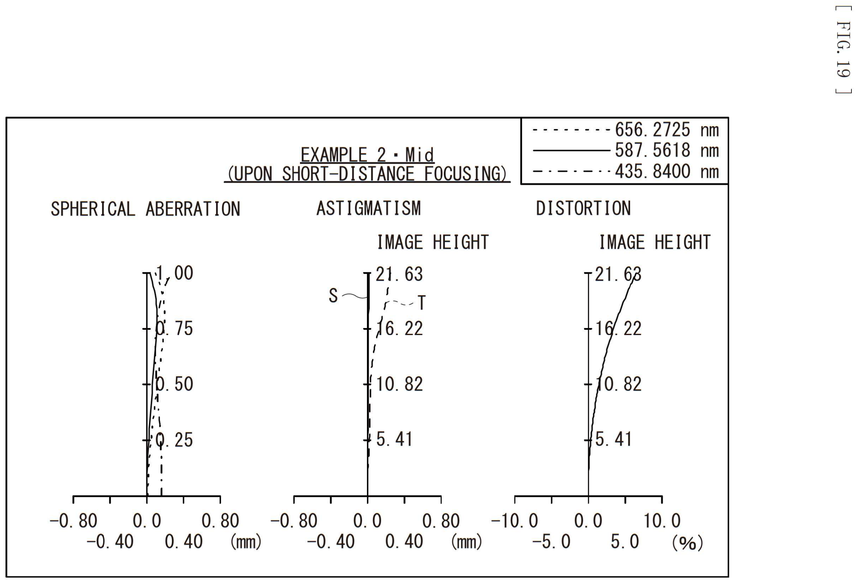

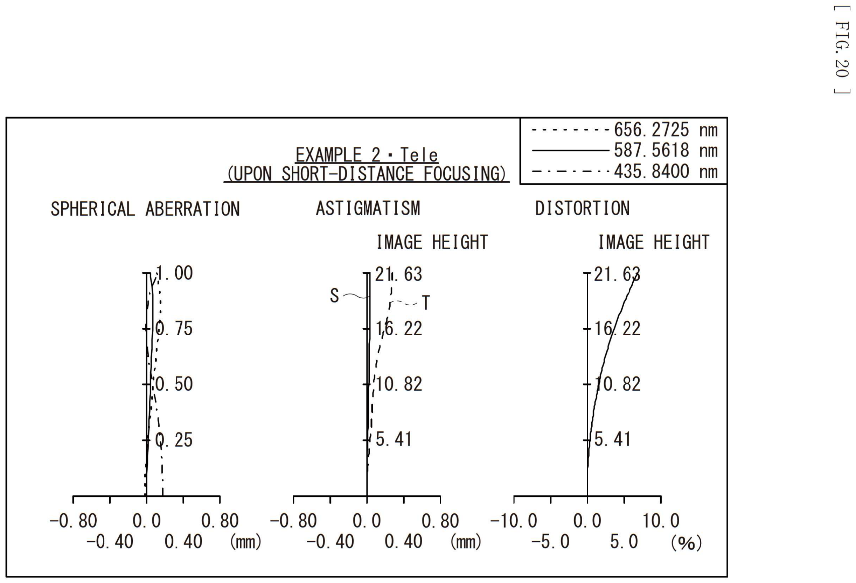

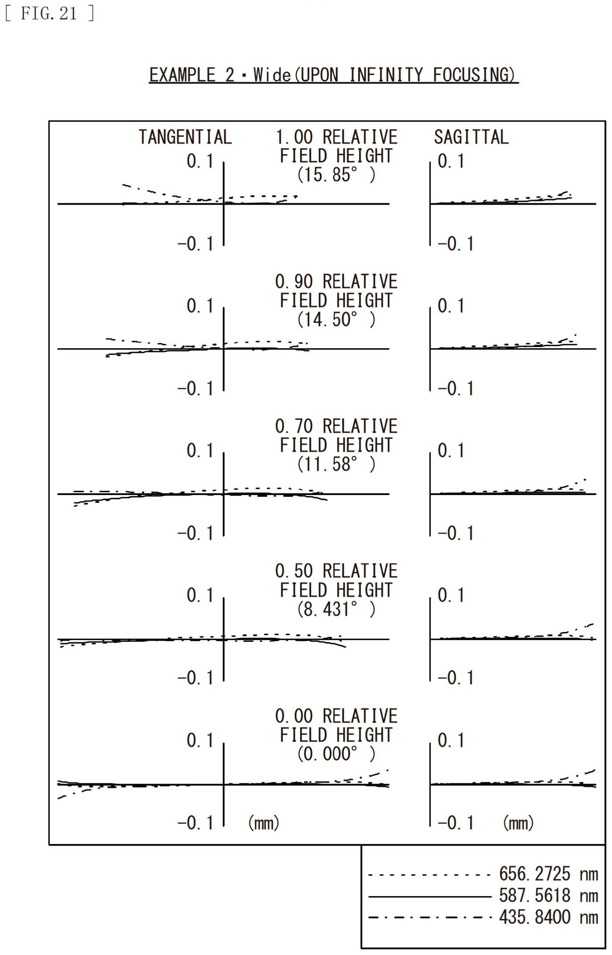

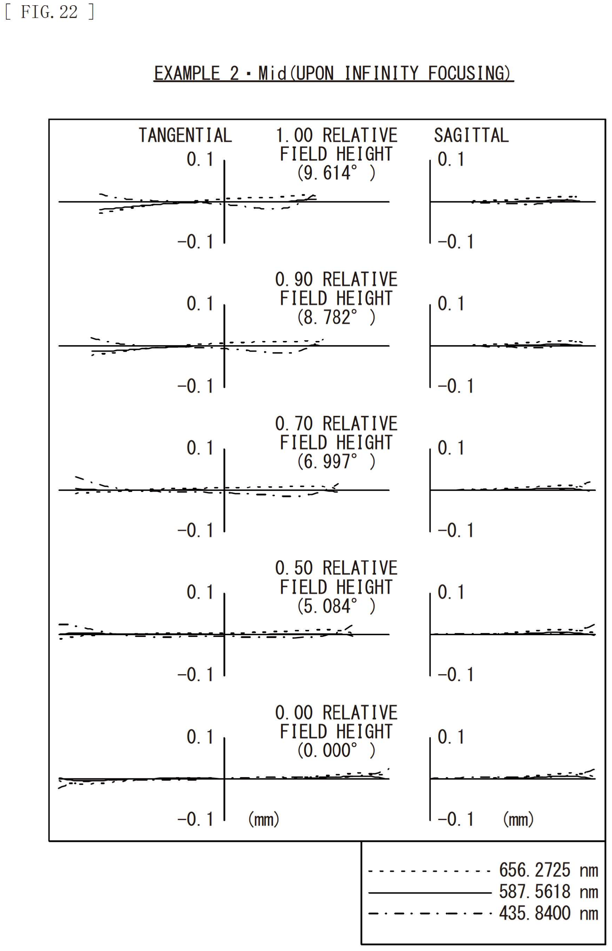

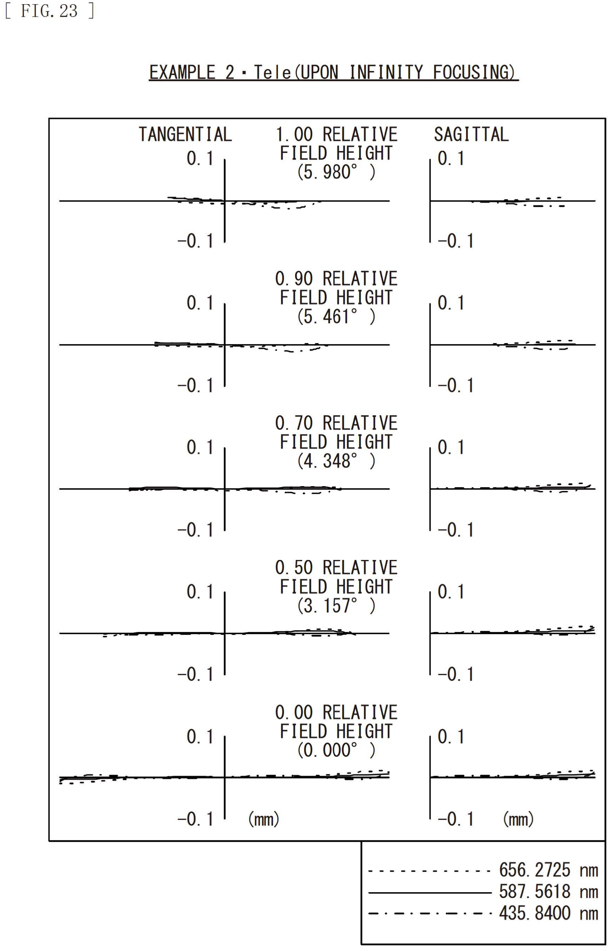

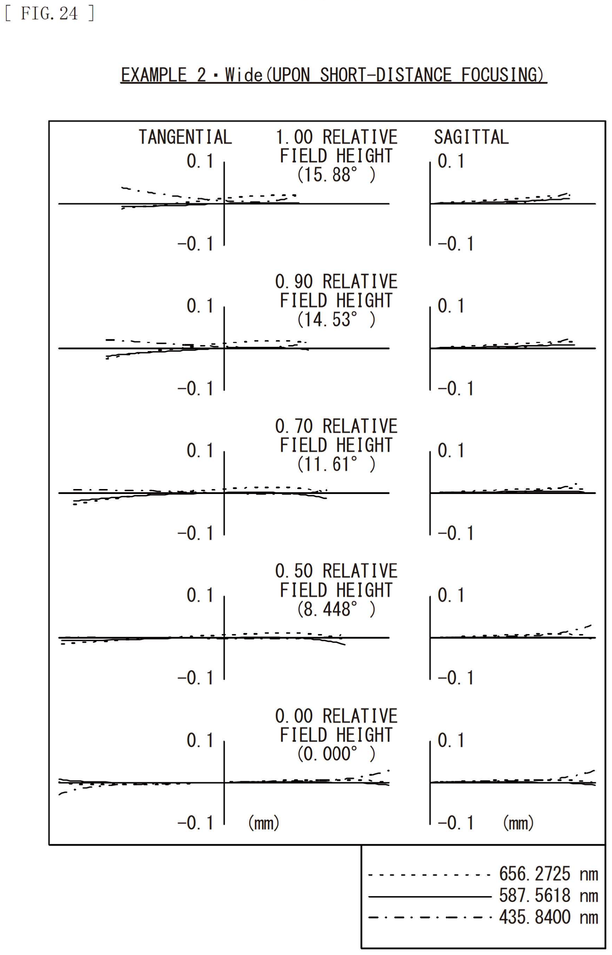

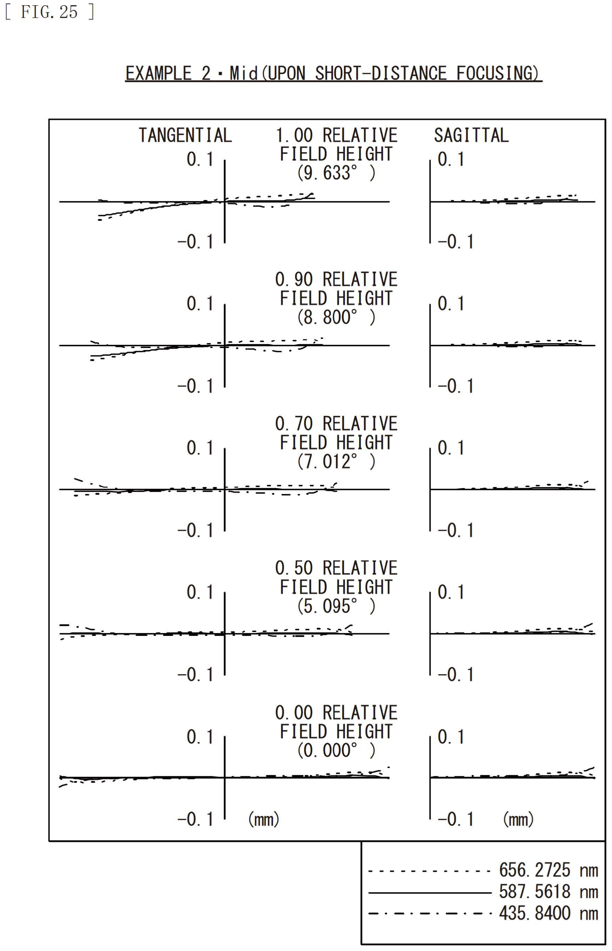

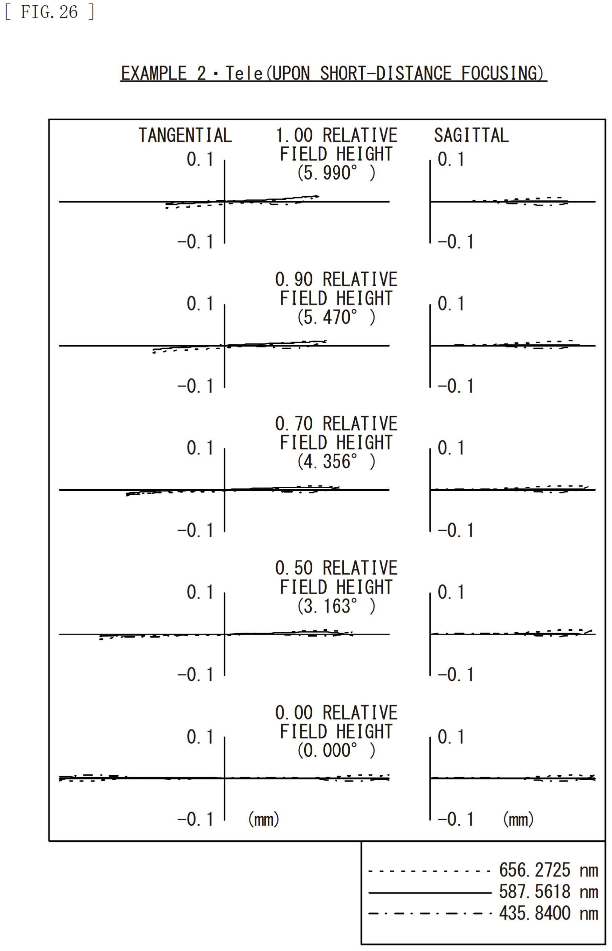

FIG. 15 illustrates longitudinal aberration upon infinity focusing at a wide-angle end of the zoom lens 2 according to Example 2. FIG. 16 illustrates longitudinal aberration upon infinity focusing at an intermediate position of the zoom lens 2 according to Example 2. FIG. 17 illustrates longitudinal aberration upon infinity focusing at a telephoto end of the zoom lens 2 according to Example 2. FIG. 18 illustrates longitudinal aberration upon short-distance focusing at the wide-angle end of the zoom lens 2 according to Example 2. FIG. 19 illustrates longitudinal aberration upon short-distance focusing at the intermediate position of the zoom lens 2 according to Example 2. FIG. 20 illustrates longitudinal aberration upon short-distance focusing at the telephoto end of the zoom lens 2 according to Example 2. FIG. 21 illustrates lateral aberration upon infinity focusing at the wide-angle end of the zoom lens 2 according to Example 2. FIG. 22 illustrates lateral aberration upon infinity focusing at the intermediate position of the zoom lens 2 according to Example 2. FIG. 23 illustrates lateral aberration upon infinity focusing at the telephoto end of the zoom lens 2 according to Example 2. FIG. 24 illustrates lateral aberration upon short-distance focusing at the wide-angle end of the zoom lens 2 according to Example 2. FIG. 25 illustrates lateral aberration upon short-distance focusing at the intermediate position of the zoom lens 2 according to Example 2. FIG. 26 illustrates lateral aberration upon short-distance focusing at the telephoto end of the zoom lens 2 according to Example 2.

As appreciated from each of the aberration diagrams, the zoom lens 2 according to Example 2 undergoes favorable correction of various aberrations, and thus has superior image-forming performance.

[Example 3]

Table 11 exhibits basic lens data of the zoom lens 3 according to Example 3 illustrated in FIG. 27. Table 12 exhibits values of the focal distance f of the total system, the F-value, the total angle of view 2ω, the image height Y, and the total optical length L in the zoom lens 3 according to Example 3. Table 13 exhibits data on a surface interval that is variable upon zooming and focusing in the zoom lens 3 according to Example 3. It is to be noted that Table 12 exhibits values for each of the wide-angle end (Wide), the intermediate position (Mid), and the telephoto end (Tele) in cases where the photographic distance and the object distance (d0) are each infinity. Table 13 exhibits values for each of the wide-angle end (Wide), the intermediate position (Mid), and the telephoto end (Tele) in cases where the photographic distance and the object distance (d0) are each infinity and in cases where the photographic distance and the object distance (d0) are each a short distance. Table 14 exhibits values of coefficients indicating shapes of aspherical surfaces in the zoom lens 3 according to Example 3. Table 15 exhibits a starting surface and a focal distance (unit: mm) of each of lens groups of the zoom lens 3 according to Example 3.

The zoom lens 3 according to Example 3 has a configuration in which the first lens group G1 to the seventh lens group G7 are disposed as the plurality of lens groups in order from the object side toward the image plane side. The aperture stop St is disposed on the object side of the third lens group G3.

The first lens group G1 has positive refractive power. The first lens group G1 includes the lenses L11 to L13 in order from the object side toward the image plane side. The lens L11 is a negative meniscus lens with a convex surface opposed to the object side. The lens L12 is a positive meniscus lens with a convex surface opposed to the object side. The lens L13 is a positive meniscus lens with a convex surface opposed to the object side. The lens L11 and the lens L12 are attached to each other to constitute a cemented lens.

The second lens group G2 has negative refractive power. The second lens group G2 includes the lenses L21 to L25 in order from the object side toward the image plane side. The lens L21 is a positive meniscus lens with a concave surface opposed to the object side. The lens L22 is a negative meniscus lens with a concave surface opposed to the object side. The lens L21 and the lens L22 are attached to each other to constitute a cemented lens. The lens L23 is a negative meniscus lens with a convex surface opposed to the object side. The lens L24 is a negative lens of a biconcave shape. The lens L25 is a positive lens of a biconvex shape. The lens L24 and the lens L25 are attached to each other to constitute a cemented lens.

The third lens group G3 has positive refractive power. The third lens group G3 includes the lens L31 and the lens L32 in order from the object side toward the image plane side. The lens L31 is a positive lens of a biconvex shape. The lens L32 is a negative meniscus lens with a concave surface opposed to the object side. The lens L31 and the lens L32 are attached to each other to constitute a cemented lens.

The fourth lens group G4 has negative refractive power. The fourth lens group G4 includes the lens L41 and the lens L42 in order from the object side toward the image plane side. The lens L41 is a negative meniscus lens with a concave surface opposed to the object side. The lens L42 is a positive lens of a biconvex shape. This allows, in the fourth lens group G4, a surface on a side closest to the object side to have a convex shape with respect to the image plane side.

The fifth lens group G5 has positive refractive power. The fifth lens group G5 includes the lenses L51 to L53 in order from the object side toward the image plane side. The lens L51 is a negative lens of a biconcave shape. The lens L52 is a positive lens of a biconvex shape. The lens L53 is a positive lens of a biconvex shape. The lens L51 and the lens L52 are attached to each other to constitute a cemented lens.

The sixth lens group G6 has negative refractive power. The sixth lens group G6 includes the lens L61 and the lens L62 in order from the object side toward the image plane side. The lens L61 is a positive lens of a biconvex shape. The lens L62 is a negative lens of a biconcave shape. The lens L61 and the lens L62 are attached to each other to constitute a cemented lens.

The seventh lens group G7 has negative refractive power. The seventh lens group G7 includes the lens L71 and the lens L72 in order from the object side toward the image plane side. The lens L71 is a positive lens of a biconvex shape. The lens L72 is a negative lens of a biconcave shape.

Upon zooming from the wide-angle end to the telephoto end, predetermined lens groups move to allow an interval between adjacent lens groups to change. Upon zooming, the second lens group G2 and the seventh lens group G7 (final lens group) are each immovable (fixed) with respect to the image plane IMG. Upon focusing in which the object distance changes from infinity to a short distance (finite distance), the fourth lens group G4 and the sixth lens group G6 move as the focus groups in the optical axis direction. Specifically, upon focusing in which the object distance changes from infinity to a short distance (finite distance), the fourth lens group G4 and the sixth lens group G6 move in trajectories different from each other; the fourth lens group G4 moves to the object side in the optical axis direction, and the sixth lens group G6 moves to the image plane side in the optical axis direction.

The zoom lens 3 according to Example 3 includes at least one movable lens group on the side closer to the image plane than the aperture stop St, and moves, as the focus group, the movable lens group Unmax having the strongest negative refractive power, among the at least one movable lens group, in the optical axis direction upon focusing from infinity to a finite distance. In the zoom lens 3 according to Example 3, the sixth lens group G6 is the movable lens group Unmax, and includes the lens L61 as the positive lens Lnmaxp in the movable lens group Unmax. In addition, the third lens group G3 and the movable lens group Unmax move integrally upon zooming.

The above-described configuration allows for achievement of a telephoto zoom lens having a high variable magnification ratio despite a small size and a light weight.

[Table 11]

| Example 3 | | | | | |
|---|---|---|---|---|---|
| Si | ri | di | ndi | vdi | φi |
| 0 (OBJ) | | (d0) | | | |
| 1 | 95.790 | 1.80 | 1.75453 | 35.3 | 59.03 |
| 2 | 66.110 | 0.00 | | | 57.55 |
| 3 | 66.110 | 7.57 | 1.49845 | 81.6 | 57.55 |
| 4 | 577.166 | 0.25 | | | 57.05 |
| 5 | 153.714 | 3.54 | 1.49845 | 81.6 | 56.18 |
| 6 | 873.381 | (d6) | | | 55.63 |
| 7 | -131.206 | 5.16 | 1.51978 | 52.1 | 25.68 |
| 8 | -33.143 | 0.90 | 1.96073 | 32.3 | 33.42 |
| 9 | -46.451 | 0.20 | | | 33.08 |
| 10 | 70.233 | 0.90 | 1.76760 | 48.5 | 26.73 |
| 11 | 29.925 | 6.92 | | | 24.68 |

(continued)

| Example 3 | | | | | |
|---|---|---|---|---|---|
| Si | ri | di | ndi | vdi | φi |
| 12 | -30.473 | 1.00 | 1.73234 | 54.7 | 23.30 |
| 13 | 46.490 | 3.17 | 1.93024 | 24.0 | 25.04 |
| 14 | -276.250 | (d14) | | | 25.32 |
| 15 (STO) | ∞ | 1.10 | | | 26.05 |
| 16 | 69.973 | 7.17 | 1.76760 | 48.5 | 26.98 |
| 17 | -27.616 | 1.00 | 1.91695 | 35.2 | 27.08 |
| 18 | -47.188 | (d18) | | | 27.40 |
| 19 | -28.045 | 1.00 | 1.82017 | 46.6 | 23.91 |
| 20 | -417.921 | 0.20 | | | 24.83 |
| 21 | 55.198 | 2.88 | 1.55206 | 75.5 | 25.67 |
| 22 | -387.675 | (d22) | | | 25.79 |
| 23 | -239.982 | 1.00 | 2.00996 | 25.5 | 26.11 |
| 24 | 49.226 | 4.90 | 1.59561 | 67.0 | 26.48 |
| 25 | -60.999 | 0.20 | | | 26.96 |
| 26 (ASP) | 48.821 | 6.03 | 1.76821 | 49.1 | 28.02 |
| 27 (ASP) | -46.315 | (d27) | | | 28.10 |
| 28 | 314.902 | 2.10 | 1.81643 | 22.8 | 25.48 |
| 29 | -95.018 | 1.00 | 1.83945 | 42.7 | 25.27 |
| 30 | 35.618 | (d30) | | | 24.45 |
| 31 | 148.555 | 5.61 | 1.67717 | 38.3 | 33.52 |
| 32 | -51.296 | 11.81 | | | 33.61 |
| 33 (ASP) | -45.111 | 1.10 | 1.77173 | 49.2 | 28.66 |
| 34 (ASP) | 87.842 | 31.14 | | | 29.30 |
| 35 (IMG) | ∞ | 0.00 | | | 43.33 |

[Table 12]

| Example 3 (Zoom Ratio: 3.74) | | | |
|---|---|---|---|
| | Wide | Mid | Tele |
| f (mm) | 51.56 | 119.73 | 192.91 |
| Fno | 4.12 | 4.27 | 4.14 |
| 2ω (°) | 45.52 | 20.48 | 12.80 |
| Y (mm) | 21.63 | 21.63 | 21.63 |
| L (mm) | 170.00 | 202.69 | 239.63 |

[Table 13]

| Example 3 · Variable Data | | | | | | |
|---|---|---|---|---|---|---|
| | Wide | Mid | Tele | Wide | Mid | Tele |
| Photographic Distance | ∞ | ∞ | ∞ | 1663 mm | 3695 mm | 5824 mm |
| d0 | ∞ | ∞ | ∞ | 1492.93 | 3492.23 | 5584.43 |

(continued)

| Example 3 · Variable Data | | | | | | |
|---|---|---|---|---|---|---|
| | Wide | Mid | Tele | Wide | Mid | Tele |
| d6 | 2.40 | 35.09 | 72.03 | 2.40 | 35.09 | 72.03 |
| d14 | 28.97 | 4.46 | 1.50 | 28.97 | 4.46 | 1.50 |
| d18 | 7.75 | 11.34 | 11.62 | 7.53 | 11.26 | 11.62 |
| d22 | 6.75 | 3.98 | 2.70 | 6.97 | 4.06 | 2.70 |
| d27 | 3.16 | 6.34 | 2.80 | 3.61 | 6.99 | 3.73 |
| d30 | 11.33 | 31.84 | 39.33 | 10.88 | 31.19 | 38.40 |

[Table 14]

| Example 3 ·Aspherical Data | | | | |
|---|---|---|---|---|
| Si | k | A4 | A6 | A8 |
| 26 | 0.00000E+00 | -4.08779E-06 | 6.00185E-09 | -4.09295E-11 |
| 27 | 0.00000E+00 | 3.23215E-06 | 5.25179E-09 | -5.10977E-11 |
| 33 | 0.00000E+00 | -5.20356E-06 | -4.17221E-08 | 4.43819E-10 |
| 34 | 0.00000E+00 | -1.59675E-06 | -3.88400E-08 | 3.79605E-10 |
| Si | A10 | A12 | | |
| 26 | 6.90685E-14 | 1.54520E-16 | | |
| 27 | 1.24888E-13 | 5.78366E-17 | | |
| 33 | -1.99063E-12 | 3.34926E-15 | | |
| 34 | -1.60700E-12 | 2.56787E-15 | | |

[Table 15]

| Example 3 | | |
|---|---|---|
| Lens Group | Starting Surface | Focal Distance |
| G1 | 1 | 172.60 |
| G2 | 7 | -34.88 |
| G3 | 15 | 41.29 |
| G4 | 19 | -64.79 |
| G5 | 23 | 32.94 |
| G6 | 28 | -47.50 |
| G7 | 31 | -385.65 |

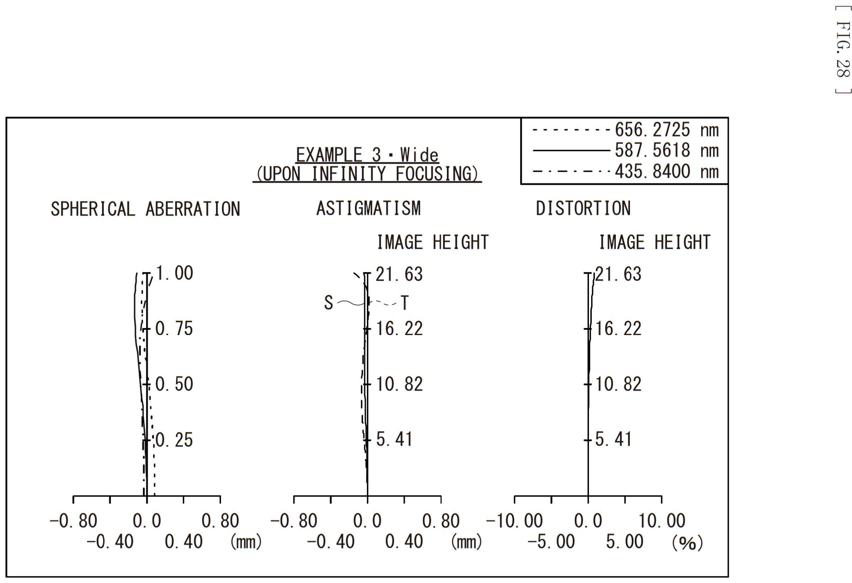

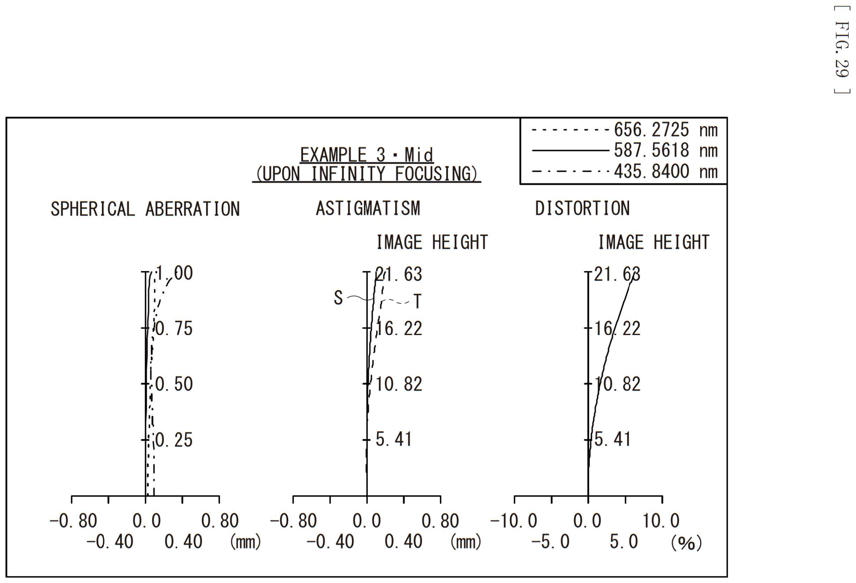

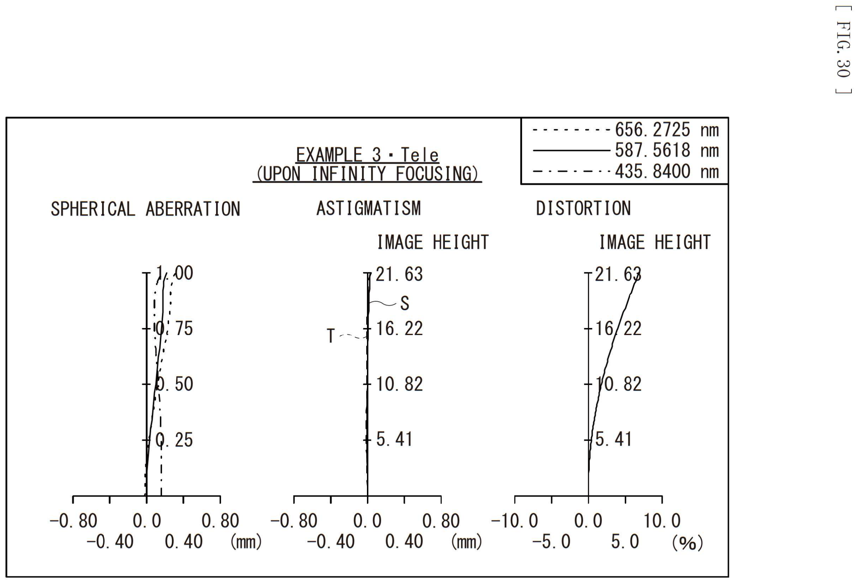

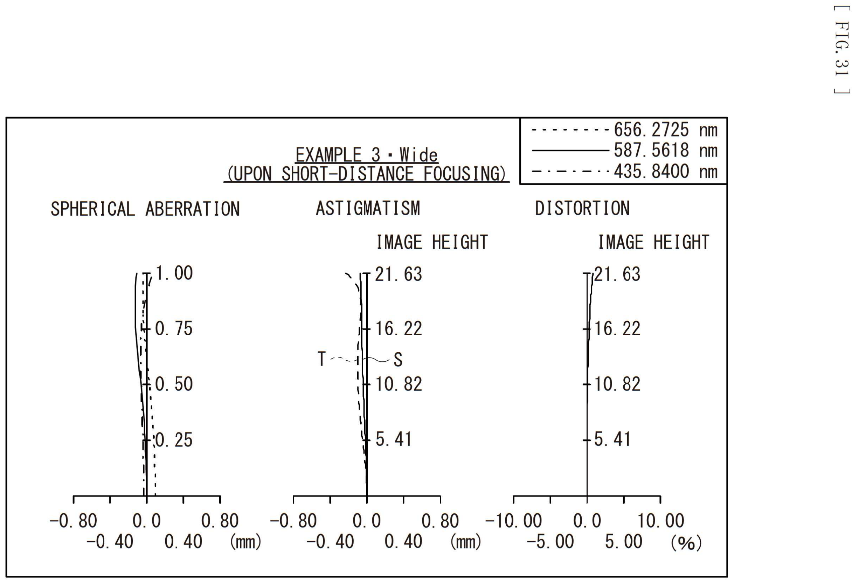

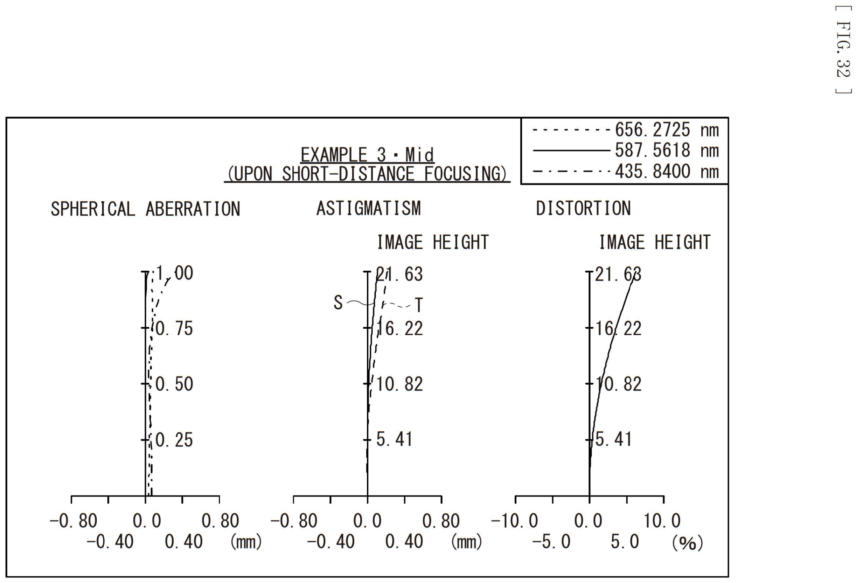

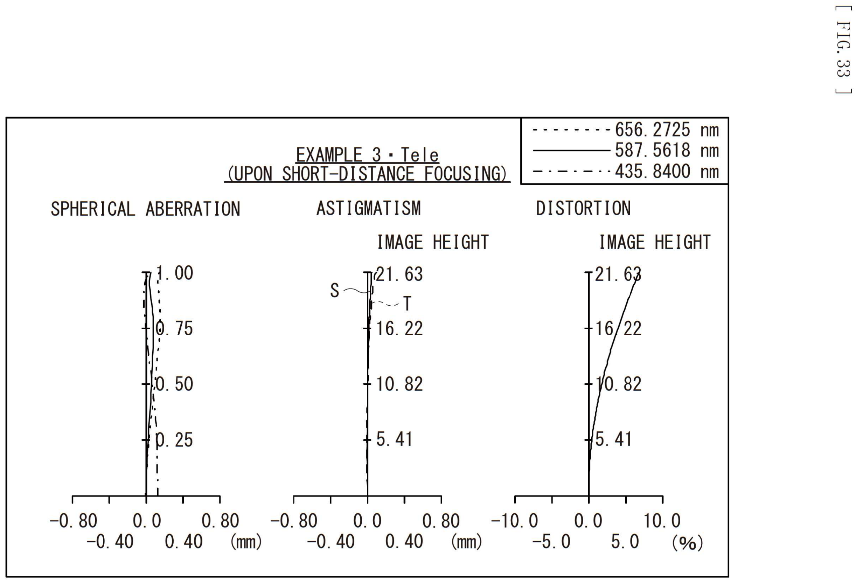

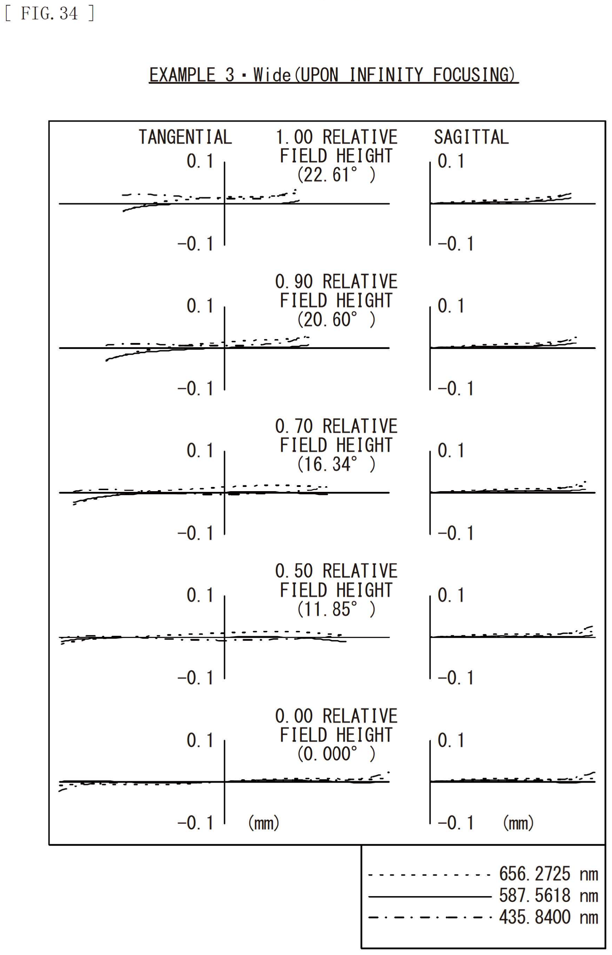

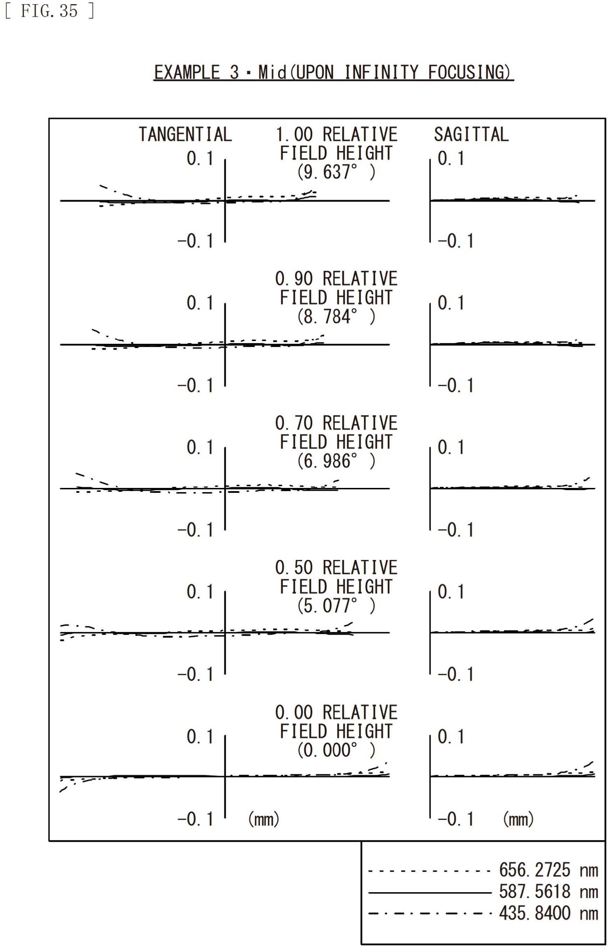

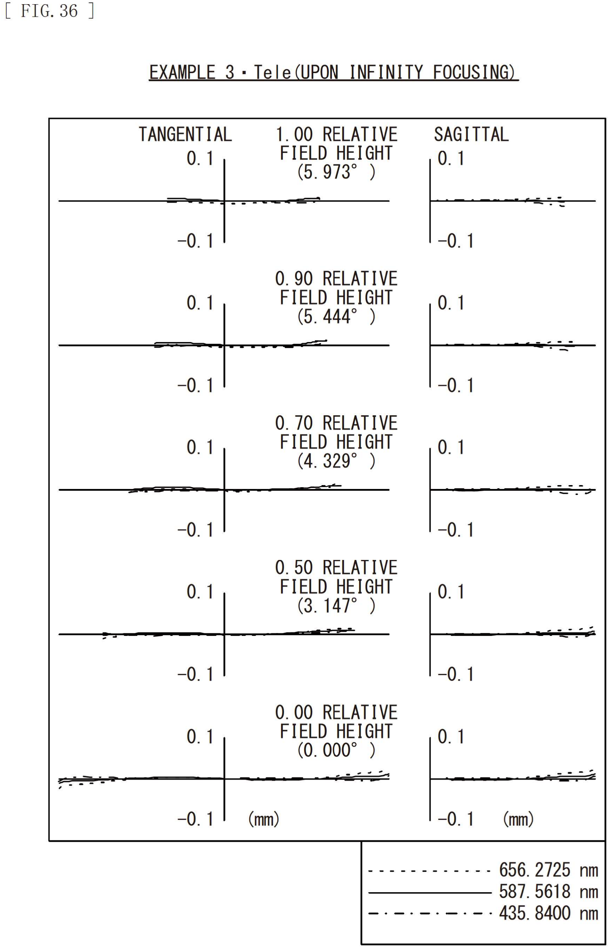

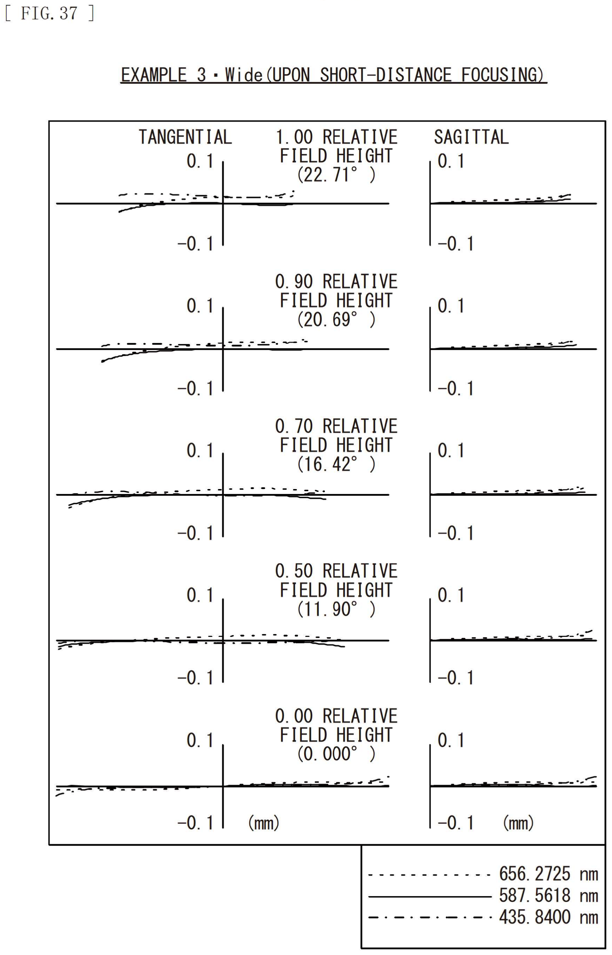

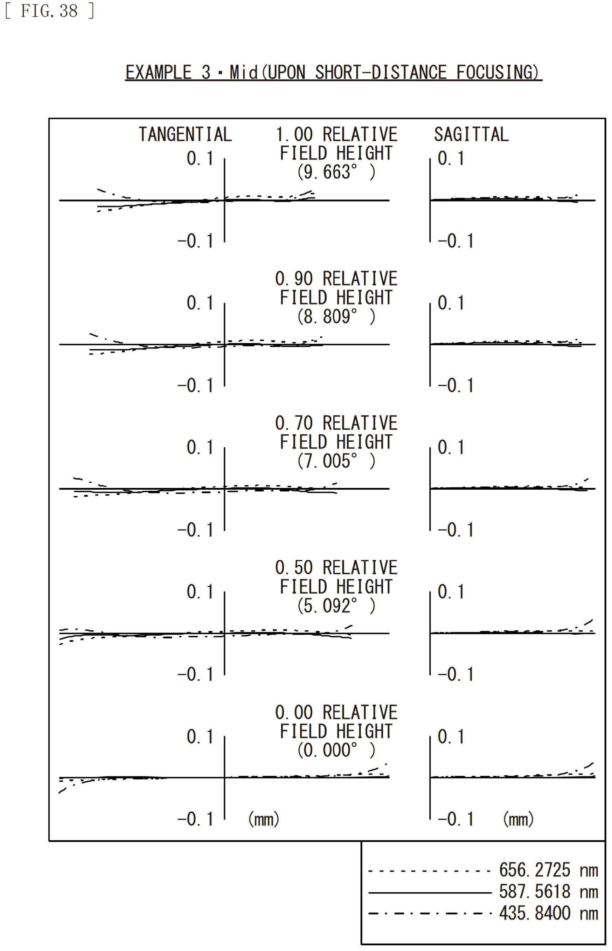

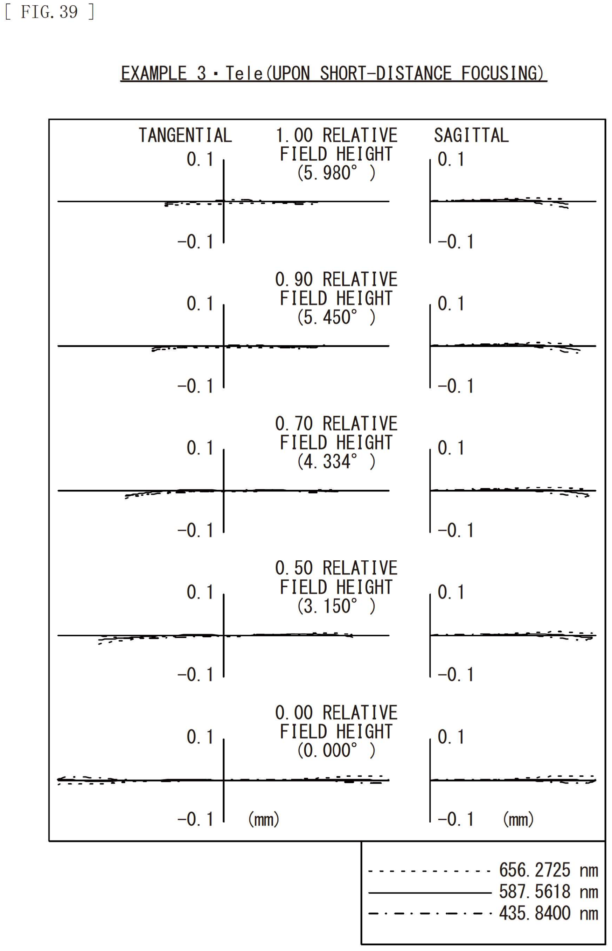

FIG. 28 illustrates longitudinal aberration upon infinity focusing at a wide-angle end of the zoom lens 3 according to Example 3. FIG. 29 illustrates longitudinal aberration upon infinity focusing at an intermediate position of the zoom lens 3 according to Example 3. FIG. 30 illustrates longitudinal aberration upon infinity focusing at a telephoto end of the zoom lens 3 according to Example 3. FIG. 31 illustrates longitudinal aberration upon short-distance focusing at the wide-angle end of the zoom lens 3 according to Example 3. FIG. 32 illustrates longitudinal aberration upon short-distance focusing at the intermediate position of the zoom lens 3 according to Example 3. FIG. 33 illustrates longitudinal aberration upon short-distance focusing at the telephoto end of the zoom lens 3 according to Example 3. FIG. 34 illustrates lateral aberration upon infinity focusing at the wide-angle end of the zoom lens 3 according to Example 3. FIG. 35 illustrates lateral aberration upon infinity focusing at the intermediate position of the zoom lens 3 according to Example 3. FIG. 36 illustrates lateral aberration upon infinity focusing at the telephoto end of the zoom lens 3 according to Example 3. FIG. 37 illustrates lateral aberration upon short-distance focusing at the wide-angle end of the zoom lens 3 according to Example 3. FIG. 38 illustrates lateral aberration upon short-distance focusing at the intermediate position of the zoom lens 3 according to Example 3. FIG. 39 illustrates lateral aberration upon short-distance focusing at the telephoto end of the zoom lens 3 according to Example 3.

As appreciated from each of the aberration diagrams, the zoom lens 3 according to Example 3 undergoes favorable correction of various aberrations, and thus has superior image-forming performance.

[Example 4]

Table 16 exhibits basic lens data of the zoom lens 4 according to Example 4 illustrated in FIG. 40. Table 17 exhibits values of the focal distance f of the total system, the F-value, the total angle of view 2ω, the image height Y, and the total optical length L in the zoom lens 4 according to Example 4. Table 18 exhibits data on a surface interval that is variable upon zooming and focusing in the zoom lens 4 according to Example 4. It is to be noted that Table 17 exhibits values for each of the wide-angle end (Wide), the intermediate position (Mid), and the telephoto end (Tele) in cases where the photographic distance and the object distance (d0) are each infinity. Table 18 exhibits values for each of the wide-angle end (Wide), the intermediate position (Mid), and the telephoto end (Tele) in cases where the photographic distance and the object distance (d0) are each infinity and in cases where the photographic distance and the object distance (d0) are each a short distance. Table 19 exhibits values of coefficients indicating shapes of aspherical surfaces in basic lens data of the zoom lens 4 according to Example 4. Table 20 exhibits a starting surface and a focal distance (unit: mm) of each of lens groups of the zoom lens 4 according to Example 4.

The zoom lens 4 according to Example 4 has a configuration in which the first lens group G1 to the seventh lens group G7 are disposed as the plurality of lens groups in order from the object side toward the image plane side. The aperture stop St is disposed on the object side of the third lens group G3.

The first lens group G1 has positive refractive power. The first lens group G1 includes the lenses L11 to L13 in order from the object side toward the image plane side. The lens L11 is a negative meniscus lens with a convex surface opposed to the object side. The lens L12 is a positive meniscus lens with a convex surface opposed to the object side. The lens L13 is a positive meniscus lens with a convex surface opposed to the object side. The lens L11 and the lens L12 are attached to each other to constitute a cemented lens.

The second lens group G2 has negative refractive power. The second lens group G2 includes the lenses L21 to L25 in order from the object side toward the image plane side. The lens L21 is a positive meniscus lens with a concave surface opposed to the object side. The lens L22 is a negative meniscus lens with a concave surface opposed to the object side. The lens L21 and the lens L22 are attached to each other to constitute a cemented lens. The lens L23 is a negative meniscus lens with a convex surface opposed to the object side. The lens L24 is a negative lens of a biconcave shape. The lens L25 is a positive lens of a biconvex shape. The lens L24 and the lens L25 are attached to each other to constitute a cemented lens.

The third lens group G3 has positive refractive power. The third lens group G3 includes the lens L31 and the lens L32 in order from the object side toward the image plane side. The lens L31 is a positive lens of a biconvex shape. The lens L32 is a negative meniscus lens with a concave surface opposed to the object side. The lens L31 and the lens L32 are attached to each other to constitute a cemented lens.

The fourth lens group G4 has negative refractive power. The fourth lens group G4 includes the lens L41 and the lens L42 in order from the object side toward the image plane side. The lens L41 is a negative meniscus lens with a concave surface opposed to the object side. The lens L42 is a positive lens of a biconvex shape. This allows, in the fourth lens group G4, a surface on a side closest to the object side to have a convex shape with respect to the image plane side.

The fifth lens group G5 has positive refractive power. The fifth lens group G5 includes the lenses L51 to L53 in order from the object side toward the image plane side. The lens L51 is a negative lens of a biconcave shape. The lens L52 is a positive lens of a biconvex shape. The lens L53 is a positive lens of a biconvex shape. The lens L51 and the lens L52 are attached to each other to constitute a cemented lens.

The sixth lens group G6 has negative refractive power. The sixth lens group G6 includes the lens L61 and the lens L62 in order from the object side toward the image plane side. The lens L61 is a positive lens of a biconvex shape. The lens L62 is a negative lens of a biconcave shape. The lens L61 and the lens L62 are attached to each other to constitute a cemented lens.

The seventh lens group G7 has negative refractive power. The seventh lens group G7 includes the lens L71 and the lens L72 in order from the object side toward the image plane side. The lens L71 is a positive lens of a biconvex shape. The lens L72 is a negative lens of a biconcave shape.

Upon zooming from the wide-angle end to the telephoto end, predetermined lens groups move to allow an interval between adjacent lens groups to change. Upon zooming, the second lens group G2 and the seventh lens group G7 (final lens group) are each immovable (fixed) with respect to the image plane IMG. Upon focusing in which the object distance changes from infinity to a short distance (finite distance), the fourth lens group G4 and the sixth lens group G6 move as the focus groups in the optical axis direction. Specifically, upon focusing in which the object distance changes from infinity to a short distance (finite distance), the fourth lens group G4 and the sixth lens group G6 move in trajectories different from each other; the fourth lens group G4 moves to the object side in the optical axis direction, and the sixth lens group G6 moves to the image plane side in the optical axis direction.

The zoom lens 4 according to Example 4 includes at least one movable lens group on the side closer to the image plane than the aperture stop St, and moves, as the focus group, the movable lens group Unmax having the strongest negative refractive power, among the at least one movable lens group, in the optical axis direction upon focusing from infinity to a finite distance. In the zoom lens 4 according to Example 4, the sixth lens group G6 is the movable lens group Unmax, and includes the lens L61 as the positive lens Lnmaxp in the movable lens group Unmax. In addition, the third lens group G3 and the movable lens group Unmax move integrally upon zooming.

In addition, in the zoom lens 4 according to Example 4, the final lens group (seventh lens group G7), among the plurality of lens groups, includes a negative lens (lens L72) having an aspherical shape in which negative refractive power becomes weaker in a peripheral part than in a center part.

The above-described configuration allows for achievement of a telephoto zoom lens having a high variable magnification ratio despite a small size and a light weight.

[Table 16]

| Si | ri | di | ndi | vdi | φi |
|---|---|---|---|---|---|
| Example 4 | | | | | |
| 0 (OBJ) | | (d0) | | | |
| 1 | 122.369 | 1.80 | 1.75453 | 35.3 | 59.24 |
| 2 | 81.970 | 0.00 | | | 58.08 |
| 3 | 81.970 | 4.81 | 1.49845 | 81.6 | 58.08 |
| 4 | 211.146 | 0.25 | | | 57.70 |
| 5 | 97.049 | 5.35 | 1.49845 | 81.6 | 57.04 |
| 6 | 873.381 | (d6) | | | 56.48 |
| 7 | -192.240 | 3.77 | 1.51978 | 52.1 | 26.15 |
| 8 | -50.378 | 0.90 | 1.96073 | 32.3 | 36.03 |
| 9 | -63.822 | 0.20 | | | 35.57 |
| 10 | 108.862 | 0.90 | 1.76760 | 48.5 | 30.03 |
| 11 | 42.080 | 6.95 | | | 28.05 |
| 12 | -33.566 | 1.00 | 1.73234 | 54.7 | 26.15 |
| 13 | 55.258 | 2.72 | 1.93024 | 24.0 | 25.58 |
| 14 | -423.654 | (d14) | | | 25.56 |
| 15 (STO) | ∞ | 1.30 | | | 26.13 |
| 16 | 436.124 | 6.94 | 1.76760 | 48.5 | 26.62 |
| 17 | -22.820 | 1.00 | 1.91695 | 35.2 | 26.99 |
| 18 | -37.778 | (d18) | | | 27.70 |
| 19 | -26.338 | 1.00 | 1.82017 | 46.6 | 24.69 |
| 20 | -143.788 | 0.20 | | | 25.94 |
| 21 | 32.209 | 6.10 | 1.55206 | 75.5 | 28.01 |
| 22 | -85.250 | (d22) | | | 27.94 |
| 23 | -130.289 | 1.00 | 2.00996 | 25.5 | 27.15 |
| 24 | 90.835 | 2.00 | 1.59561 | 67.0 | 27.11 |
| 25 | -2908.947 | 0.20 | | | 27.16 |
| 26 (ASP) | 67.806 | 6.97 | 1.76821 | 49.1 | 27.28 |
| 27 (ASP) | -37.189 | 0.10 | | | 27.40 |

(continued)

| Example 4 | | | | | |
|---|---|---|---|---|---|
| Si | ri | di | ndi | vdi | φi |
| 28 | ∞ | (d28) | | | 24.83 |
| 29 | 195.309 | 1.98 | 1.81643 | 22.8 | 25.34 |
| 30 | -132.320 | 1.00 | 1.83945 | 42.7 | 25.12 |
| 31 | 32.839 | (d31) | | | 24.25 |
| 32 | 89.441 | 6.75 | 1.67717 | 38.3 | 34.44 |
| 33 | -49.551 | 8.89 | | | 34.43 |
| 34 (ASP) | -50.688 | 1.10 | 1.77173 | 49.2 | 29.08 |
| 35 (ASP) | 55.941 | 31.93 | | | 29.26 |
| 36 (IMG) | ∞ | 0.00 | | | 43.36 |

[Table 17]

| Example 4 (Zoom Ratio: 3.74) | | | |
|---|---|---|---|
| | Wide | Mid | Tele |
| f (mm) | 51.55 | 108.32 | 192.85 |
| Fno | 4.12 | 4.15 | 4.14 |
| 2ω (°) | 45.53 | 22.59 | 12.80 |
| Y (mm) | 21.63 | 21.63 | 21.63 |
| L (mm) | 169.46 | 192.92 | 245.96 |

[Table 18]

| Example 4 · Variable Data | | | | | | |
|---|---|---|---|---|---|---|
| | Wide | Mid | Tele | Wide | Mid | Tele |
| Photographic Distance | ∞ | ∞ | ∞ | 1668 mm | 3370 mm | 5820 mm |
| d0 | ∞ | ∞ | ∞ | 1498.69 | 3177.08 | 5573.99 |
| d6 | 2.17 | 25.63 | 78.67 | 2.17 | 25.63 | 78.67 |
| d14 | 35.10 | 6.44 | 1.50 | 35.10 | 6.44 | 1.50 |
| d18 | 8.08 | 15.35 | 13.97 | 7.80 | 15.34 | 14.00 |
| d22 | 2.70 | 2.87 | 2.73 | 2.98 | 2.88 | 2.70 |
| d28 | 3.45 | 6.59 | 2.70 | 3.86 | 7.22 | 3.67 |
| d31 | 10.86 | 28.94 | 39.29 | 10.45 | 28.31 | 38.31 |

[Table 19]

| Example 4 · Aspherical Data | | | | |
|---|---|---|---|---|
| Si | k | A4 | A6 | A8 |
| 26 | 0.00000E+00 | -1.04908E-05 | 1.57572E-09 | -4.63905E-11 |
| 27 | 0.00000E+00 | 4.25494E-06 | 1.47757E-09 | -2.13975E-11 |
| 34 | 0.00000E+00 | -1.11243E-05 | 7.06375E-08 | -2.43226E-10 |
| 35 | 0.00000E+00 | -6.29119E-06 | 4.59560E-08 | -4.48378E-11 |

(continued)

| Si | A10 | A12 |
|----|-----|-----|
| 26 | 1.02908E-13 | 6.34181E-16 |
| 27 | 1.26141E-14 | 7.81546E-16 |
| 34 | -6.43499E-14 | 1.06924E-15 |
| 35 | -7.64043E-13 | 1.98737E-15 |

[Table 20]

| Example 4 | | |
|-----------|------------------|----------------|
| Lens Group | Starting Surface | Focal Distance |
| G1 | 1 | 190.93 |
| G2 | 7 | -41.21 |
| G3 | 15 | 51.66 |
| G4 | 19 | -1050.88 |
| G5 | 23 | 48.59 |
| G6 | 29 | -46.91 |
| G7 | 32 | -519.81 |

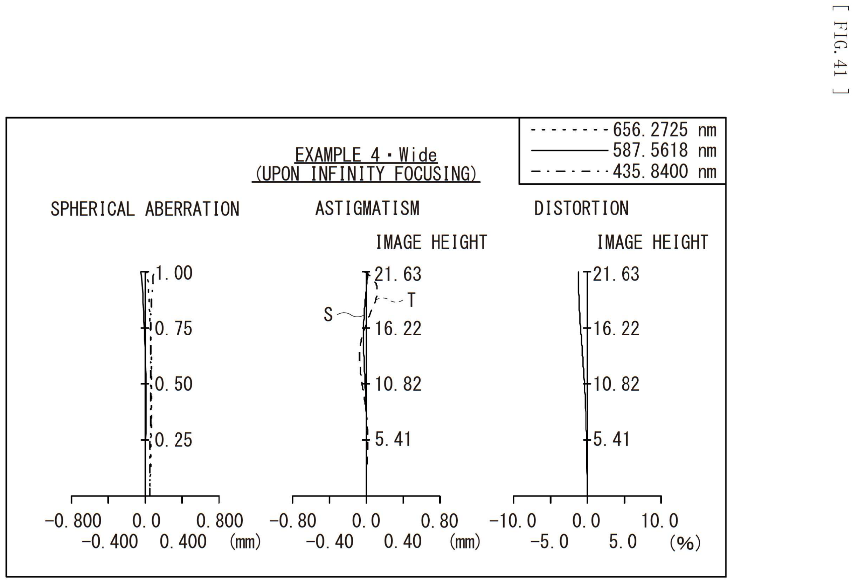

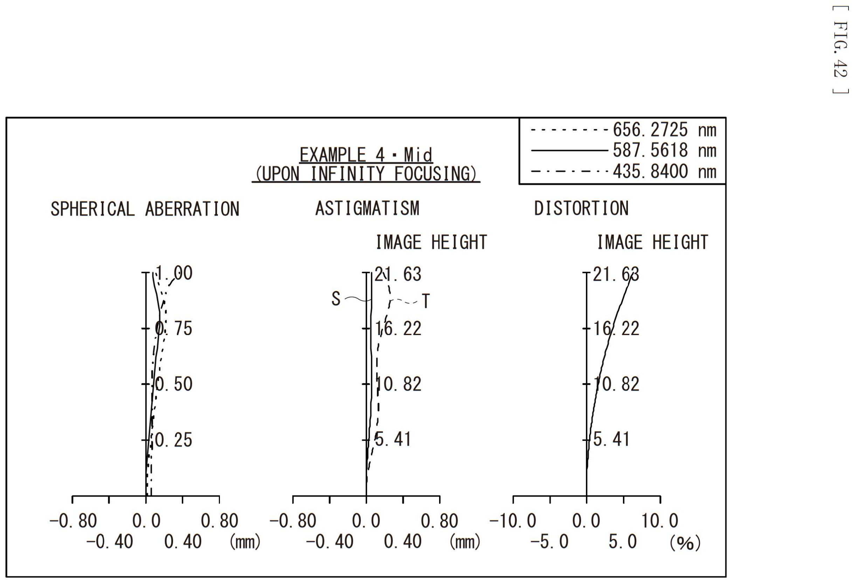

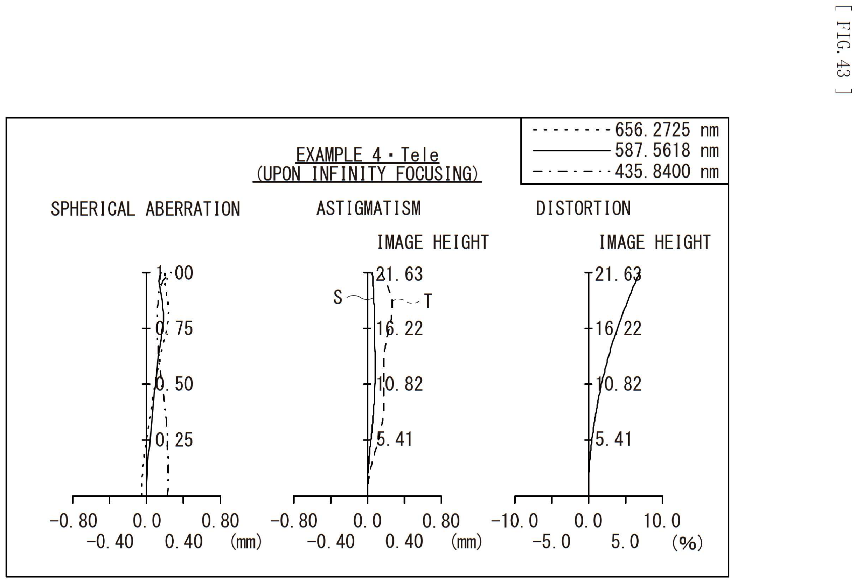

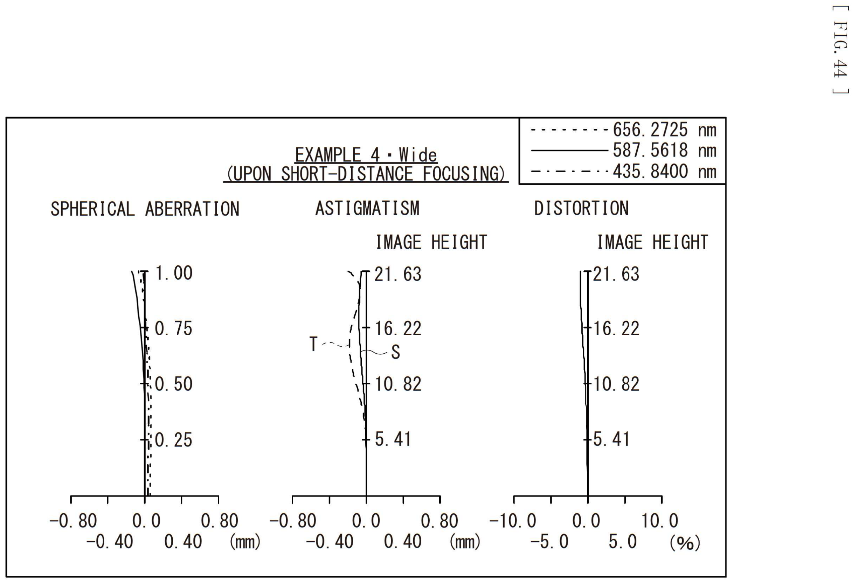

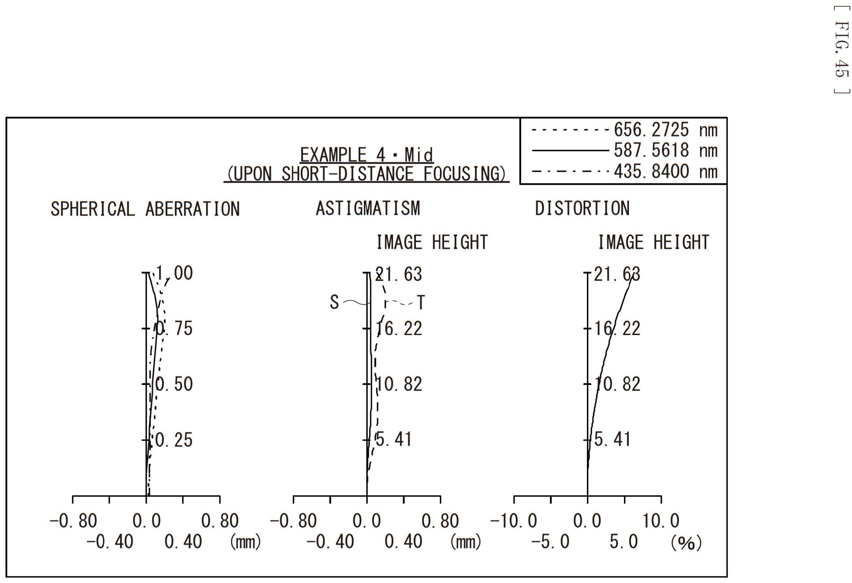

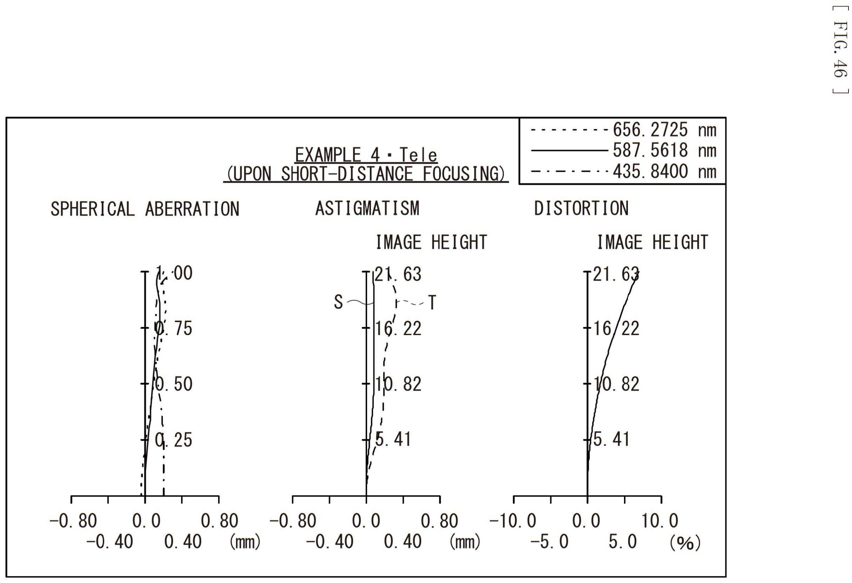

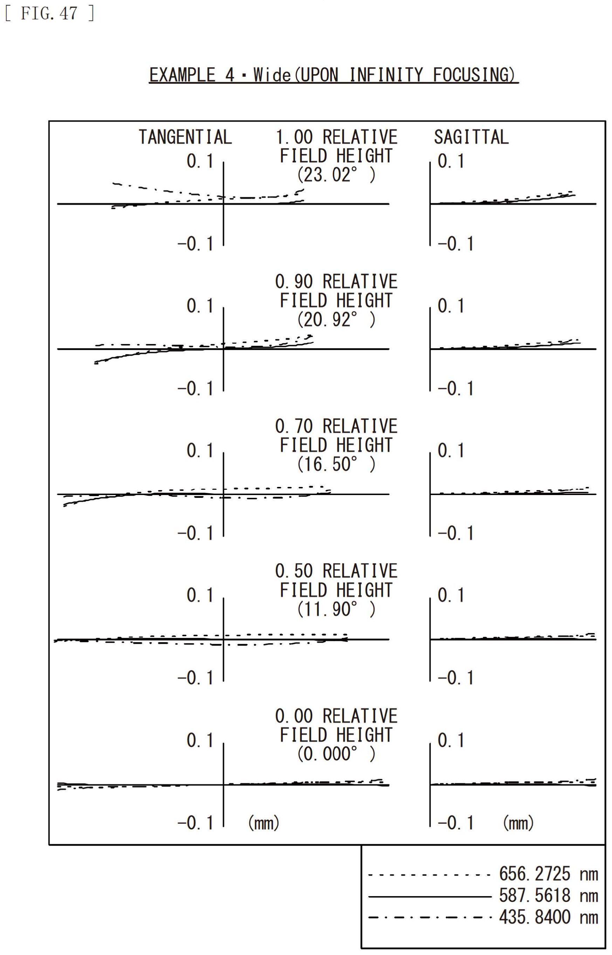

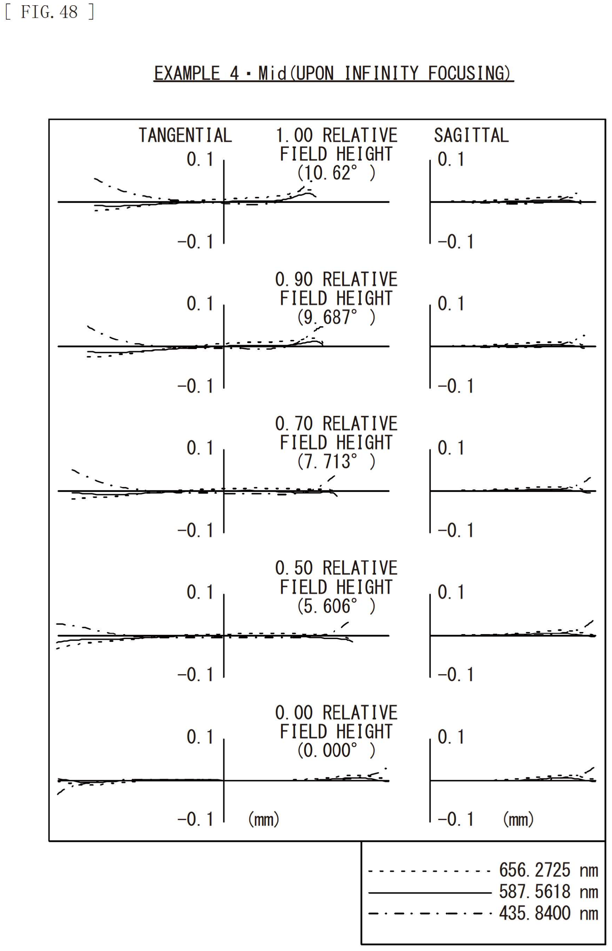

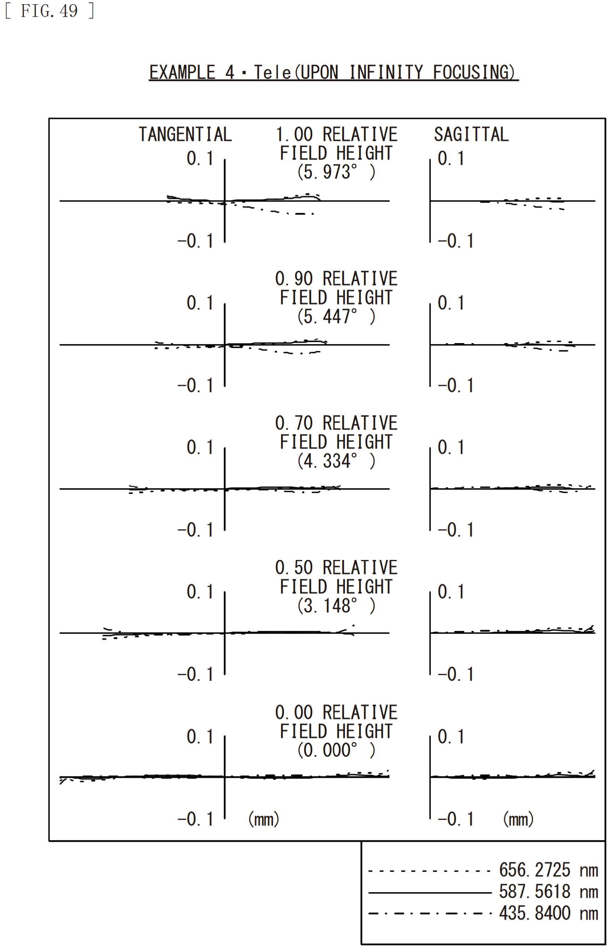

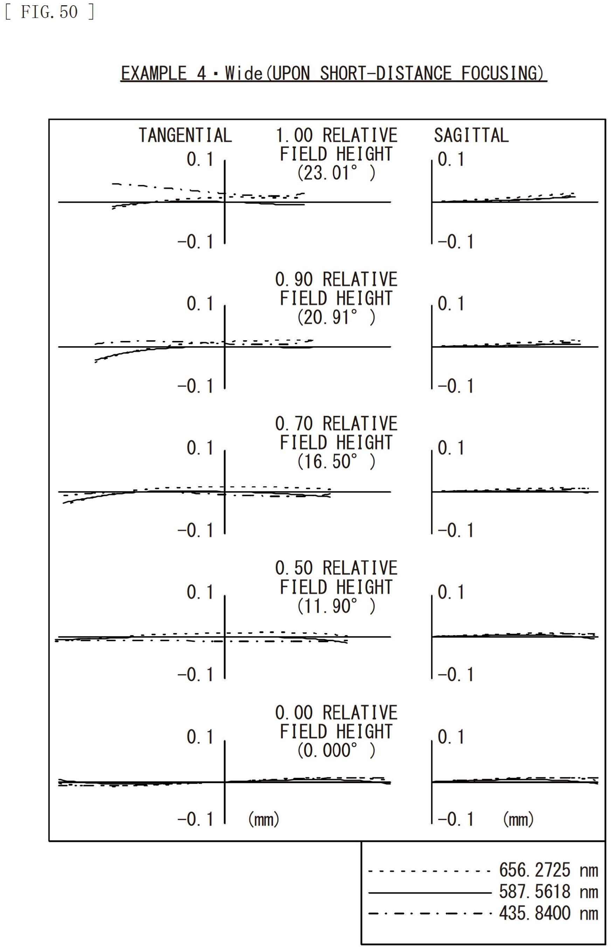

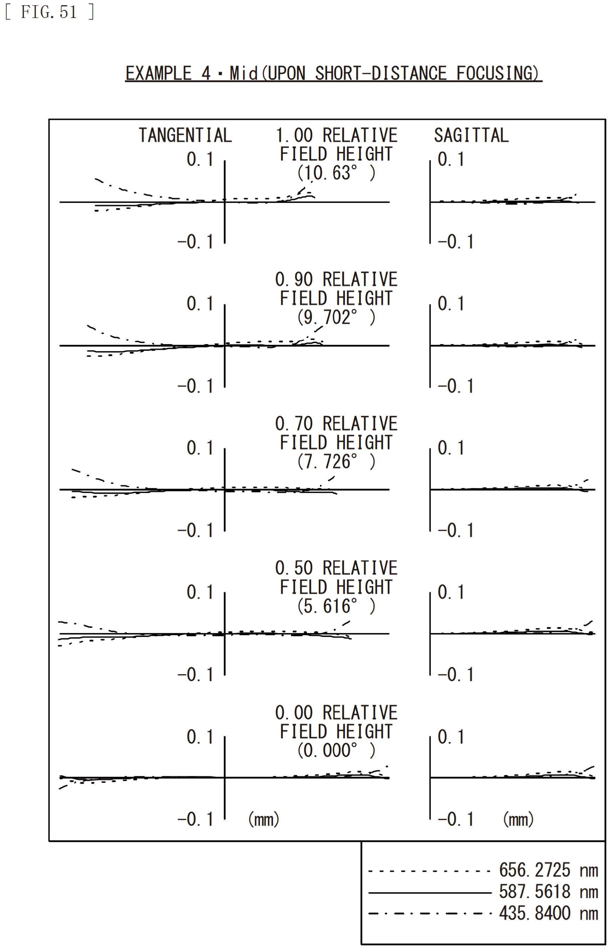

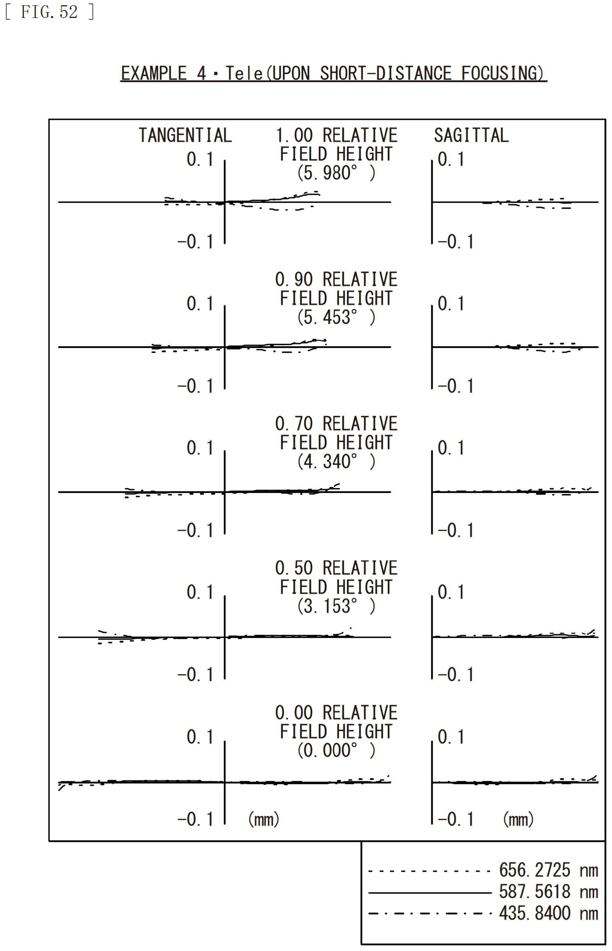

FIG. 41 illustrates longitudinal aberration upon infinity focusing at a wide-angle end of the zoom lens 4 according to Example 4. FIG. 42 illustrates longitudinal aberration upon infinity focusing at an intermediate position of the zoom lens 4 according to Example 4. FIG. 43 illustrates longitudinal aberration upon infinity focusing at a telephoto end of the zoom lens 4 according to Example 4. FIG. 44 illustrates longitudinal aberration upon short-distance focusing at the wide-angle end of the zoom lens 4 according to Example 4. FIG. 45 illustrates longitudinal aberration upon short-distance focusing at the intermediate position of the zoom lens 4 according to Example 4. FIG. 46 illustrates longitudinal aberration upon short-distance focusing at the telephoto end of the zoom lens 4 according to Example 4. FIG. 47 illustrates lateral aberration upon infinity focusing at the wide-angle end of the zoom lens 4 according to Example 4. FIG. 48 illustrates lateral aberration upon infinity focusing at the intermediate position of the zoom lens 4 according to Example 4. FIG. 49 illustrates lateral aberration upon infinity focusing at the telephoto end of the zoom lens 4 according to Example 4. FIG. 50 illustrates lateral aberration upon short-distance focusing at the wide-angle end of the zoom lens 4 according to Example 4. FIG. 51 illustrates lateral aberration upon short-distance focusing at the intermediate position of the zoom lens 4 according to Example 4. FIG. 52 illustrates lateral aberration upon short-distance focusing at the telephoto end of the zoom lens 4 according to Example 4.
As appreciated from each of the aberration diagrams, the zoom lens 4 according to Example 4 undergoes favorable correction of various aberrations, and thus has superior image-forming performance.

[Example 5]

Table 21 exhibits basic lens data of the zoom lens 5 according to Example 5 illustrated in FIG. 53. Table 22 exhibits values of the focal distance f of the total system, the F-value, the total angle of view 2ω, the image height Y, and the total optical length L in the zoom lens 5 according to Example 5. Table 23 exhibits data on a surface interval that is variable upon zooming and focusing in the zoom lens 5 according to Example 5. It is to be noted that Table 22 exhibits values for each of the wide-angle end (Wide), the intermediate position (Mid), and the telephoto end (Tele) in cases where the photographic distance and the object distance (d0) are each infinity. Table 23 exhibits values for each of the wide-angle end (Wide), the intermediate position (Mid), and the telephoto end (Tele) in cases where the photographic distance and the object distance (d0) are each infinity and in cases where the photographic distance and the object distance (d0) are each a short distance. Table 24 exhibits values of coefficients indicating shapes of aspherical surfaces in the zoom lens 5 according to Example 5. Table 25 exhibits a starting surface and a focal distance (unit: mm) of each of lens groups of the zoom lens 5 according to Example 5.
The zoom lens 5 according to Example 5 has a configuration in which the first lens group G1 to the sixth lens group G6 are disposed as the plurality of lens groups in order from the object side toward the image plane side. The aperture stop St is disposed inside the third lens group G3.
The first lens group G1 has positive refractive power. The first lens group G1 includes the lenses L11 to L13 in order from the object side toward the image plane side. The lens L11 is a negative meniscus lens with a convex surface opposed to the object side. The lens L12 is a positive lens of a biconvex shape. The lens L13 is a positive meniscus lens with a convex surface opposed to the object side. The lens L11 and the lens L12 are attached to each other to constitute a cemented lens.

The second lens group G2 has negative refractive power. The second lens group G2 includes the lenses L21 to L25 in order from the object side toward the image plane side. The lens L21 is a positive meniscus lens with a concave surface opposed to the object side. The lens L22 is a negative meniscus lens with a concave surface opposed to the object side. The lens L21 and the lens L22 are attached to each other to constitute a cemented lens. The lens L23 is a negative lens of a biconcave shape. The lens L24 is a negative lens of a biconcave shape. The lens L25 is a positive lens of a biconvex shape. The lens L24 and the lens L25 are attached to each other to constitute a cemented lens.

The third lens group G3 has positive refractive power. The third lens group G3 includes lenses L31 to L36 in order from the object side toward the image plane side. The lens L31 is a positive lens of a biconvex shape. The lens L32 is a negative meniscus lens with a concave surface opposed to the object side. The lens L31 and the lens L32 are attached to each other to constitute a cemented lens. The lens L33 is a positive lens of a biconvex shape. The lens L34 is a negative meniscus lens with a concave surface opposed to the object side. The lens L35 is a positive meniscus lens with a concave surface opposed to the object side. The lens L34 and the lens L35 are attached to each other to constitute a cemented lens. The lens L36 is a positive lens of a biconvex shape.

The fourth lens group G4 has negative refractive power. The fourth lens group G4 includes the lens L41 and the lens L42 in order from the object side toward the image plane side. The lens L41 is a positive meniscus lens with a convex surface opposed to the object side. The lens L42 is a negative meniscus lens with a convex surface opposed to the object side.

The fifth lens group G5 has positive refractive power. The fifth lens group G5 includes the lens L51. The lens L51 is a positive lens of a biconvex shape.

The sixth lens group G6 has negative refractive power. The sixth lens group G6 includes the lens L61. The lens L61 is a negative meniscus lens with a convex surface opposed to the object side.

Upon zooming from the wide-angle end to the telephoto end, predetermined lens groups move to allow an interval between adjacent lens groups to change. Upon zooming, the second lens group G2 and the sixth lens group G6 (final lens group) are each immovable (fixed) with respect to the image plane IMG. Upon focusing in which the object distance changes from infinity to a short distance (finite distance), the fourth lens group G4 and the fifth lens group G5 move as the focus groups in the optical axis direction. Specifically, upon focusing in which the object distance changes from infinity to a short distance (finite distance), the fourth lens group G4 and the fifth lens group G5 move in trajectories different from each other; the fourth lens group G4 moves to the image plane side in the optical axis direction, and the fifth lens group G5 moves to the object side in the optical axis direction.

The zoom lens 5 according to Example 5 includes at least one movable lens group on the side closer to the image plane than the aperture stop St, and moves, as the focus group, the movable lens group Unmax having the strongest negative refractive power, among the at least one movable lens group, in the optical axis direction upon focusing from infinity to a finite distance. In the zoom lens 5 according to Example 5, the fourth lens group G4 is the movable lens group Unmax, and includes the lens L41 as the positive lens Lnmaxp in the movable lens group Unmax.

In addition, in the zoom lens 5 according to Example 5, the final lens group (sixth lens group G6), among the plurality of lens groups, includes a negative lens (lens L61) having an aspherical shape in which negative refractive power becomes weaker in a peripheral part than in a center part.

The above-described configuration allows for achievement of a telephoto zoom lens having a high variable magnification ratio despite a small size and a light weight.

[Table 21]

| Example 5 | | | | | |
|---|---|---|---|---|---|
| Si | ri | di | ndi | vdi | φi |
| 0 (OBJ) | | (d0) | | | |
| 1 | 249.567 | 2.20 | 1.75453 | 35.3 | 59.69 |
| 2 | 116.562 | 5.37 | 1.49845 | 81.6 | 58.71 |
| 3 | -3999.830 | 0.25 | | | 58.42 |
| 4 | 115.928 | 4.60 | 1.49845 | 81.6 | 57.27 |
| 5 | 898.096 | (d5) | | | 56.74 |
| 6 | -388.345 | 4.33 | 1.54344 | 47.2 | 25.99 |

(continued)

| Example 5 | | | | | |
|---|---|---|---|---|---|
| Si | ri | di | ndi | vdi | φi |
| 7 | -29.916 | 0.90 | 1.96073 | 32.3 | 25.78 |
| 8 | -43.245 | 2.08 | | | 25.96 |
| 9 | -365.237 | 0.90 | 1.49845 | 81.6 | 24.32 |
| 10 | 28.969 | 7.03 | | | 23.43 |
| 11 | -28.182 | 1.10 | 1.70559 | 41.1 | 23.61 |
| 12 | 43.580 | 3.79 | 2.00996 | 25.5 | 26.02 |
| 13 | -167.687 | (d13) | | | 26.35 |
| 14 | 65.930 | 5.77 | 1.76760 | 48.5 | 27.97 |
| 15 | -45.415 | 0.95 | 1.91695 | 35.2 | 27.97 |
| 16 | -524.204 | 3.86 | | | 28.13 |
| 17 | 42.103 | 3.81 | 1.49845 | 81.6 | 28.48 |
| 18 | -1960.209 | 2.74 | | | 28.22 |
| 19 (STO) | ∞ | 4.04 | | | 27.35 |
| 20 | -36.804 | 0.90 | 2.00996 | 25.5 | 26.88 |
| 21 | -2183.837 | 2.89 | 1.49845 | 81.6 | 27.74 |
| 22 | -67.162 | 2.84 | | | 28.24 |
| 23 (ASP) | 85.156 | 6.10 | 1.77080 | 49.2 | 29.89 |
| 24 (ASP) | -38.000 | (d24) | | | 30.06 |
| 25 | 48.451 | 2.91 | 1.81643 | 22.8 | 27.23 |
| 26 | 656.440 | 0.90 | 1.83945 | 42.7 | 26.79 |
| 27 | 27.149 | (d27) | | | 25.26 |
| 28 | 104.181 | 5.77 | 1.49845 | 81.6 | 32.30 |
| 29 | -52.401 | (d29) | | | 32.37 |
| 30 (ASP) | 203.546 | 1.10 | 1.77373 | 49.4 | 30.78 |
| 31 (ASP) | 31.844 | 33.88 | | | 29.85 |
| 32 (IMG) | ∞ | 0.00 | | | 43.37 |

[Table 22]

| Example 5 (Zoom Ratio: 2.81) | | | |
|---|---|---|---|
| | Wide | Mid | Tele |
| f (mm) | 61.83 | 119.73 | 173.70 |
| Fno | 4.12 | 4.12 | 4.14 |
| 2ω (°) | 38.57 | 20.48 | 14.20 |
| Y (mm) | 21.63 | 21.63 | 21.63 |
| L (mm) | 167.60 | 198.67 | 244.00 |

[Table 23]

| Example 5 · Variable Data | | | | | | |
|---|---|---|---|---|---|---|
| | Wide | Mid | Tele | Wide | Mid | Tele |
| Photographic Distance | ∞ | ∞ | ∞ | 1979 mm | 3716 mm | 5296 mm |
| d0 | ∞ | ∞ | ∞ | 1810.96 | 3516.97 | 5051.94 |
| d5 | 2.08 | 33.15 | 78.48 | 2.08 | 33.15 | 78.48 |
| d13 | 23.07 | 3.27 | 2.60 | 23.07 | 3.27 | 2.60 |
| d24 | 2.80 | 9.36 | 5.14 | 3.47 | 10.55 | 6.85 |
| d27 | 18.76 | 36.84 | 44.23 | 17.92 | 35.69 | 43.03 |
| d29 | 9.84 | 5.02 | 2.50 | 10.02 | 4.97 | 2.00 |

[Table 24]

| Example 5 ·Aspherical Data | | | | |
|---|---|---|---|---|
| Si | k | A4 | A6 | A8 |
| 23 | 0.00000E+00 | -5.93061E-06 | 3.02796E-09 | -1.08920E-11 |
| 24 | 0.00000E+00 | 2.77790E-06 | -2.50769E-09 | 2.31335E-12 |
| 30 | 0.00000E+00 | 2.12933E-06 | -2.94522E-08 | 1.12313E-10 |
| 31 | 0.00000E+00 | 3.70613E-06 | -3.44463E-08 | 1.40021E-10 |
| Si | A10 | A12 | | |
| 23 | 2.69102E-14 | -2.30319E-18 | | |
| 24 | -1.25928E-14 | 4.76093E-17 | | |
| 30 | -3.00074E-13 | 4.32456E-16 | | |
| 31 | -4.47105E-13 | 7.29004E-16 | | |

[Table 25]

| Example 5 | | |
|---|---|---|
| Lens Group | Starting Surface | Focal Distance |
| G1 | 1 | 213.46 |
| G2 | 6 | -42.33 |
| G3 | 14 | 37.75 |
| G4 | 25 | -77.20 |
| G5 | 28 | 71.02 |
| G6 | 30 | -49.16 |

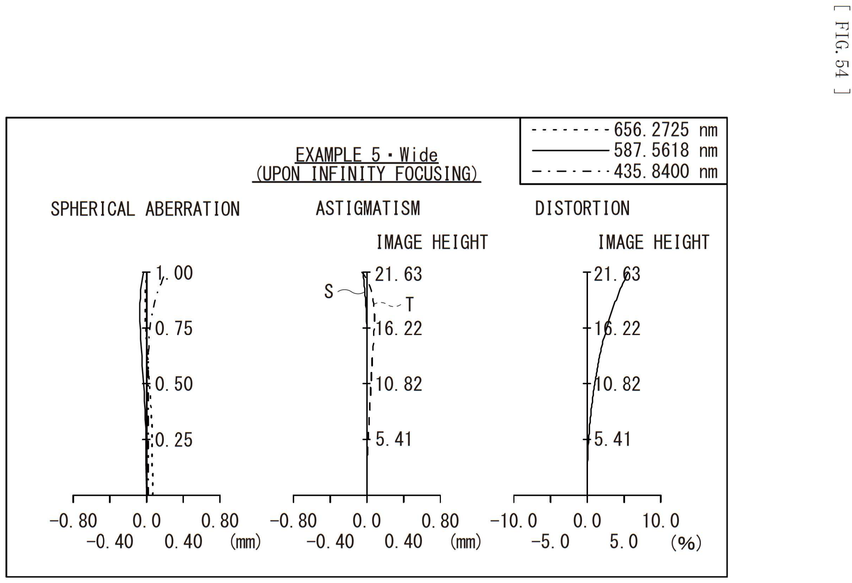

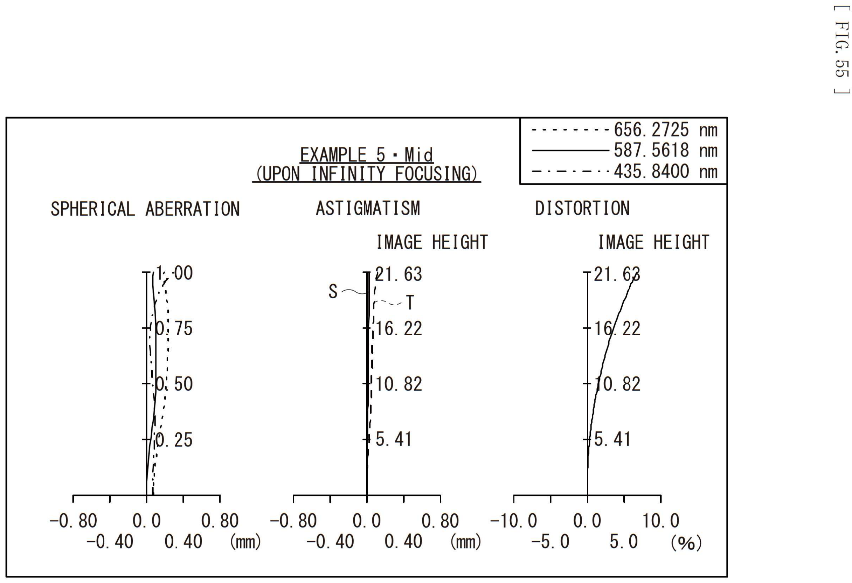

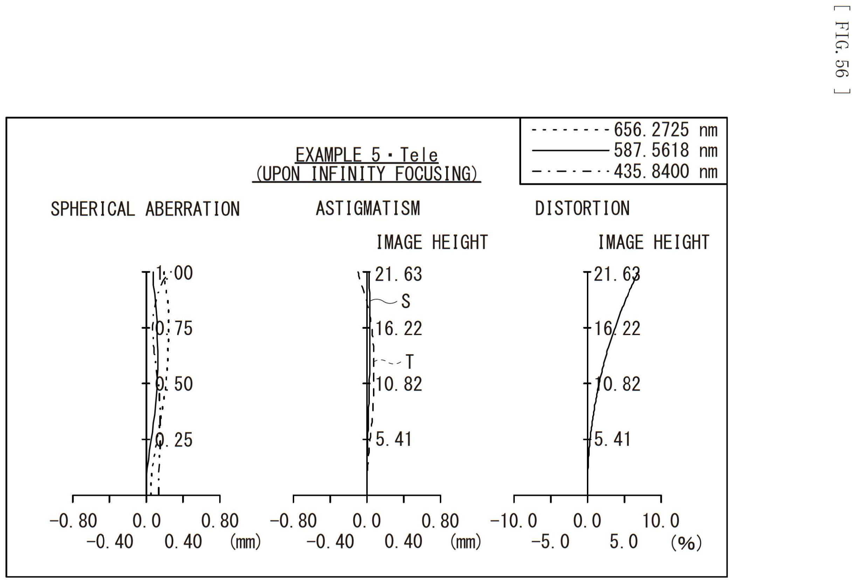

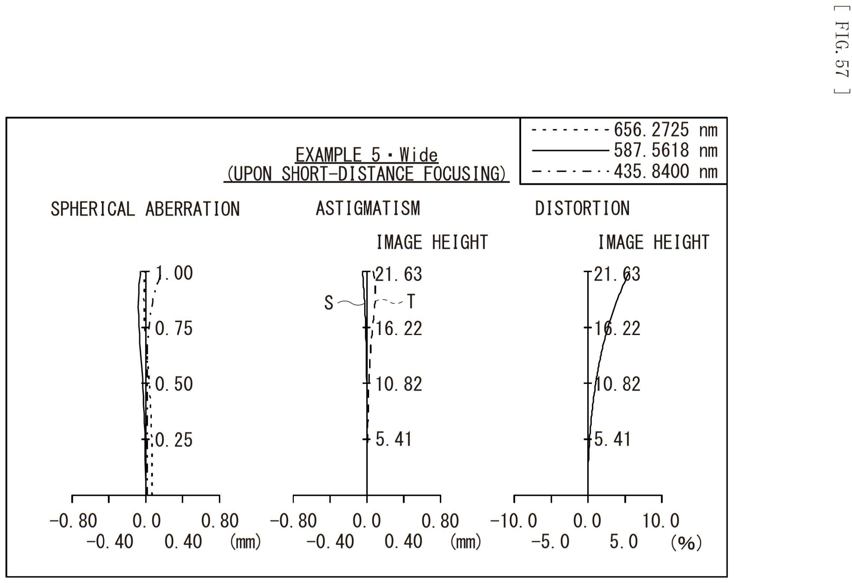

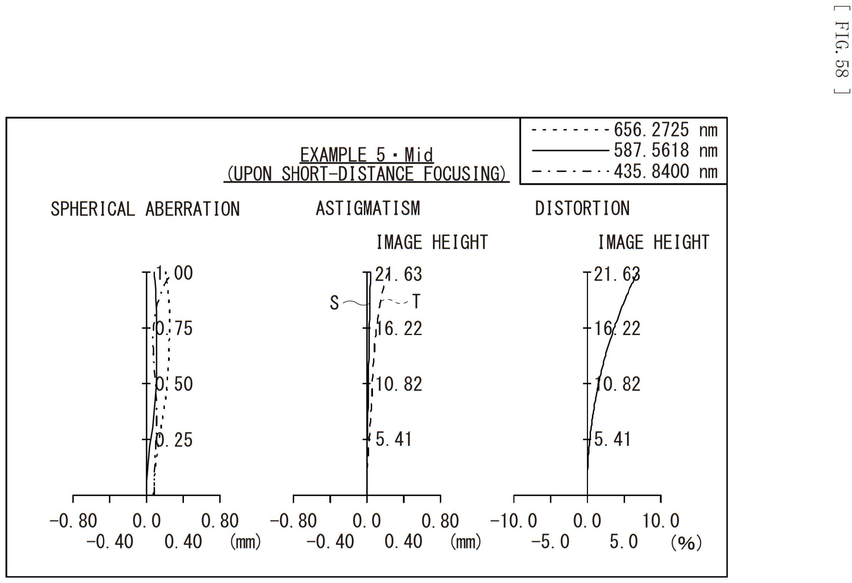

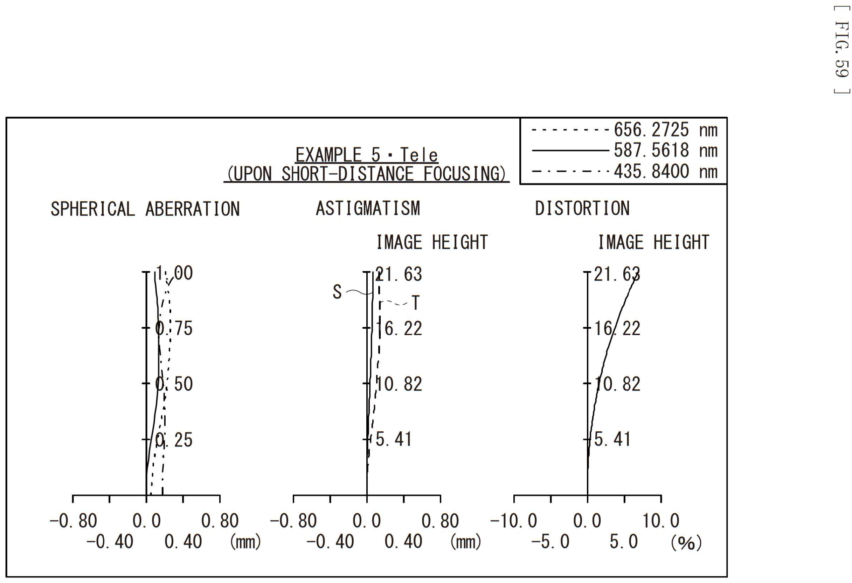

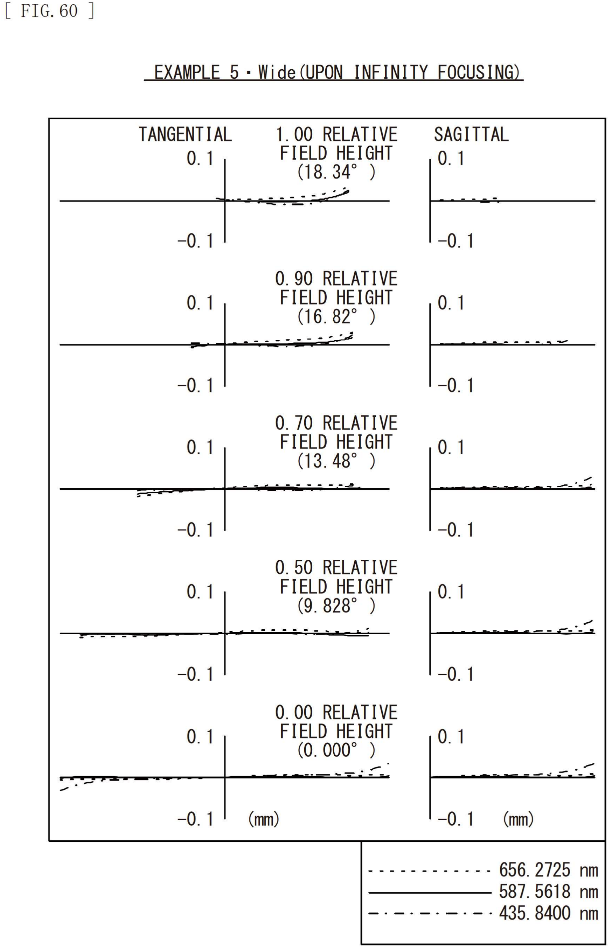

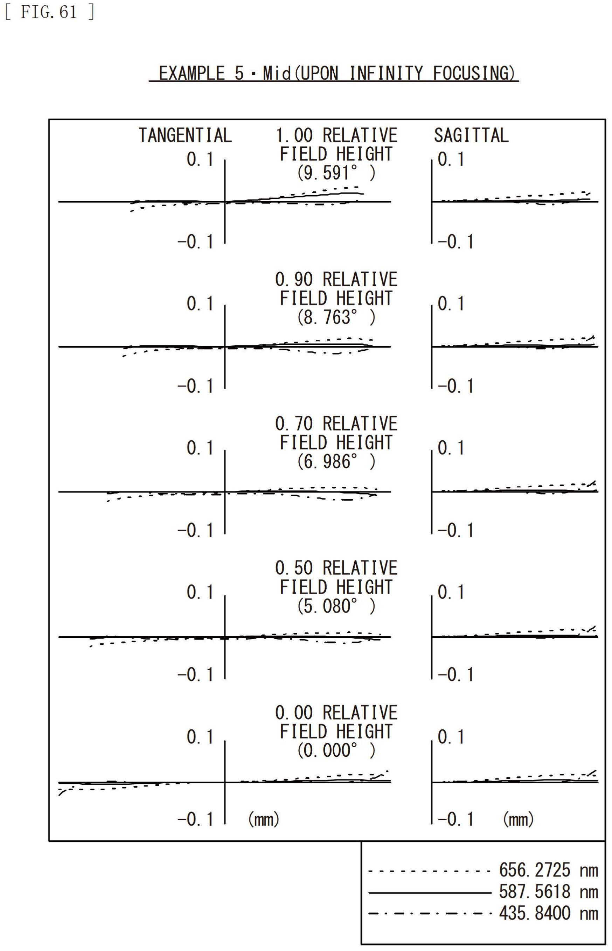

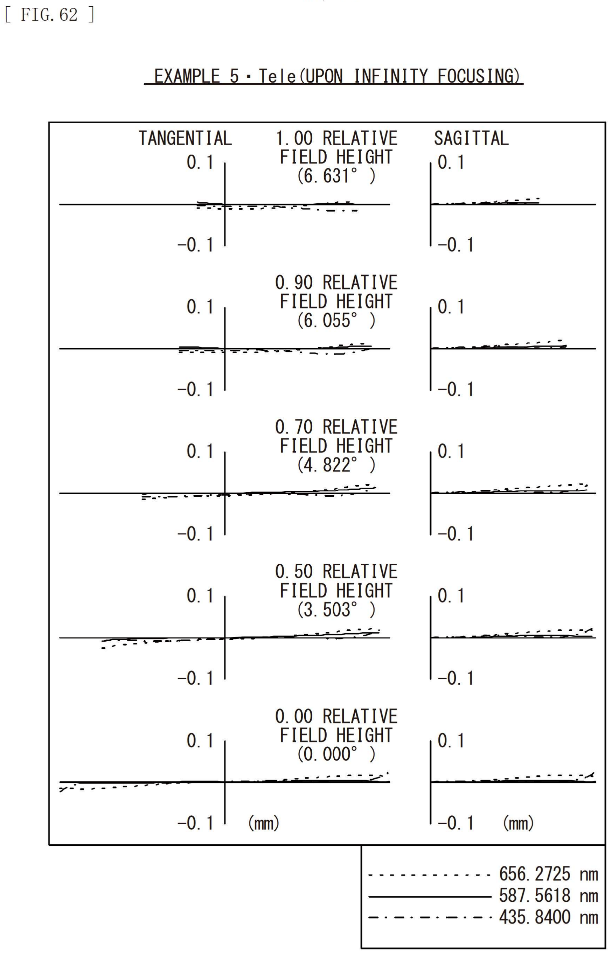

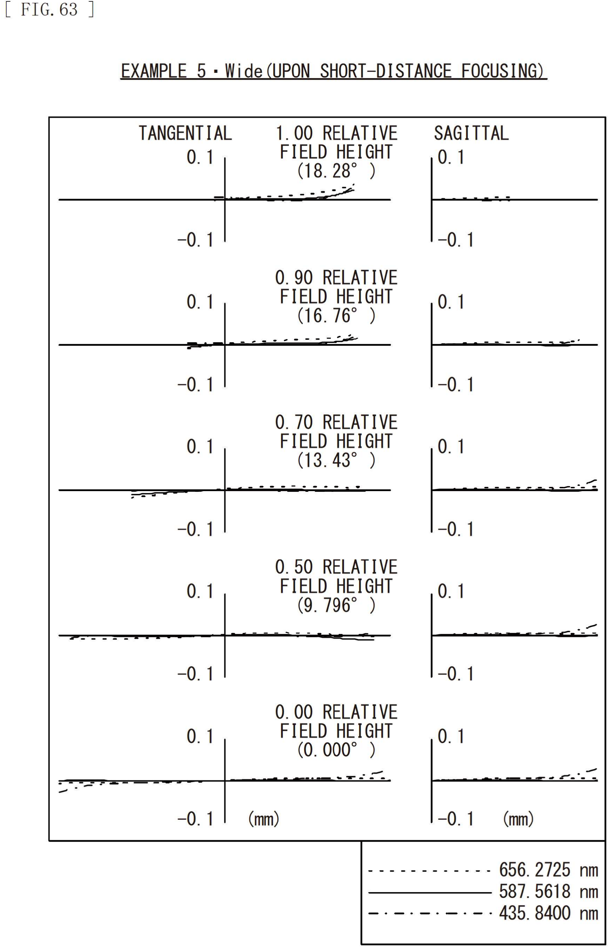

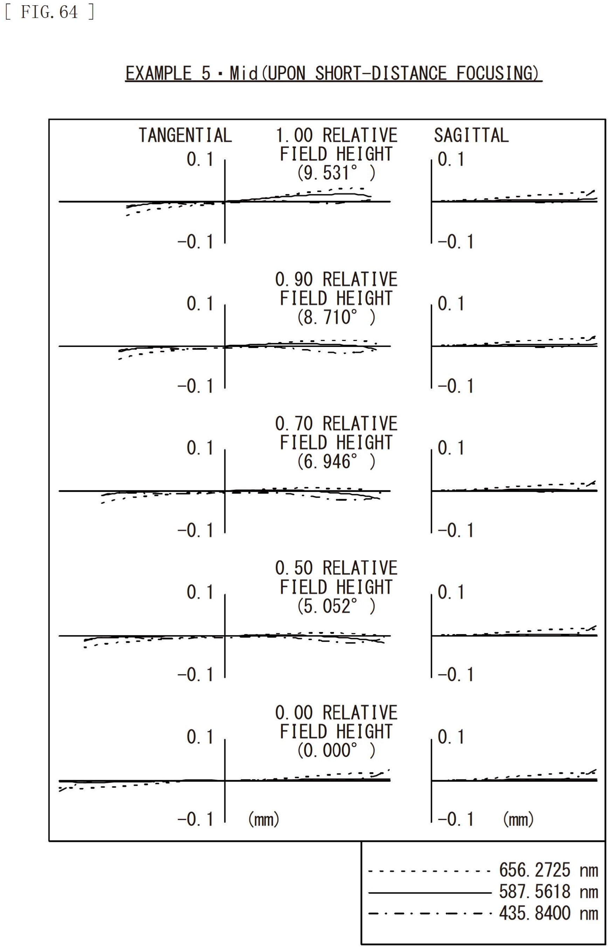

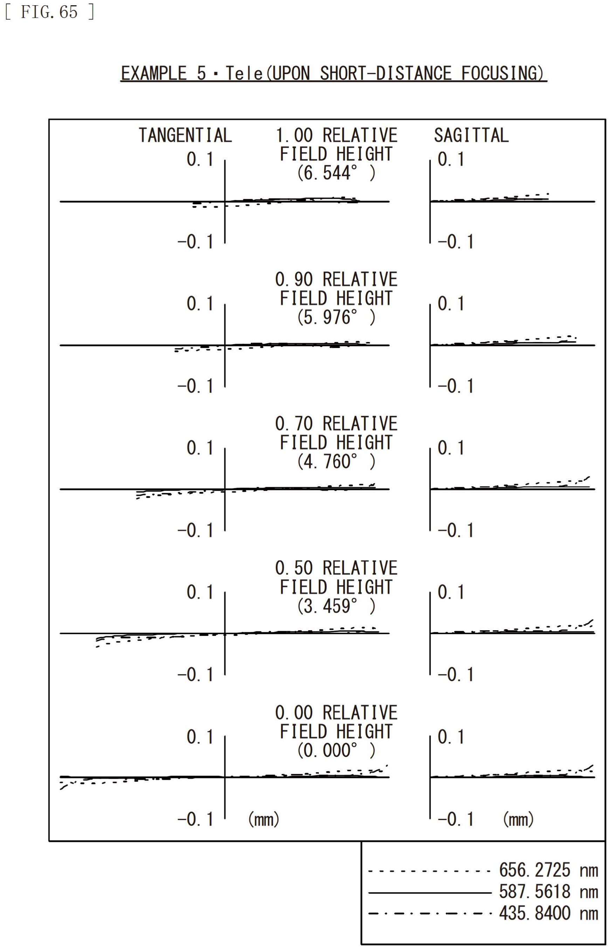

FIG. 54 illustrates longitudinal aberration upon infinity focusing at a wide-angle end of the zoom lens 5 according to Example 5. FIG. 55 illustrates longitudinal aberration upon infinity focusing at an intermediate position of the zoom lens 5 according to Example 5. FIG. 56 illustrates longitudinal aberration upon infinity focusing at a telephoto end of the zoom lens 5 according to Example 5. FIG. 57 illustrates longitudinal aberration upon short-distance focusing at the wide-angle end of the zoom lens 5 according to Example 5. FIG. 58 illustrates longitudinal aberration upon short-distance focusing at the intermediate position of the zoom lens 5 according to Example 5. FIG. 59 illustrates longitudinal aberration upon short-distance focusing at the telephoto end of the zoom lens 5 according to Example 5. FIG. 60 illustrates lateral aberration upon infinity focusing at the wide-angle end of the zoom lens 5 according to Example 5. FIG. 61 illustrates lateral aberration upon infinity focusing at the intermediate position of the zoom lens 5 according to Example 5. FIG. 62 illustrates lateral aberration upon infinity focusing at the telephoto end of the zoom lens 5 according to Example 5. FIG. 63 illustrates lateral aberration upon short-distance focusing at the wide-angle end of the zoom lens 5 according to Example 5. FIG. 64 illustrates lateral aberration upon short-distance focusing at the intermediate position of the zoom lens 5 according to Example 5. FIG. 65 illustrates lateral aberration upon short-distance focusing at the telephoto end of the zoom lens 5 according to Example 5.

As appreciated from each of the aberration diagrams, the zoom lens 5 according to Example 5 undergoes favorable correction of various aberrations, and thus has superior image-forming performance.

[Example 6]

Table 26 exhibits basic lens data of the zoom lens 6 according to Example 6 illustrated in FIG. 66. Table 27 exhibits values of the focal distance f of the total system, the F-value, the total angle of view 2ω, the image height Y, and the total optical length L in the zoom lens 6 according to Example 6. Table 28 exhibits data on a surface interval that is variable upon zooming and focusing in the zoom lens 6 according to Example 6. It is to be noted that Table 27 exhibits values for each of the wide-angle end (Wide), the intermediate position (Mid), and the telephoto end (Tele) in cases where the photographic distance and the object distance (d0) are each infinity. Table 28 exhibits values for each of the wide-angle end (Wide), the intermediate position (Mid), and the telephoto end (Tele) in cases where the photographic distance and the object distance (d0) are each infinity and in cases where the photographic distance and the object distance (d0) are each a short distance. Table 29 exhibits values of coefficients indicating shapes of aspherical surfaces in the zoom lens 6 according to Example 6. Table 30 exhibits a starting surface and a focal distance (unit: mm) of each of lens groups of the zoom lens 6 according to Example 6.

The zoom lens 6 according to Example 6 has a configuration in which the first lens group G1 to the seventh lens group G7 are disposed as the plurality of lens groups in order from the object side toward the image plane side. The aperture stop St is disposed on the object side of the third lens group G3.

The first lens group G1 has positive refractive power. The first lens group G1 includes the lenses L11 to L13 in order from the object side toward the image plane side. The lens L11 is a negative meniscus lens with a convex surface opposed to the object side. The lens L12 is a positive lens of a biconvex shape. The lens L13 is a positive meniscus lens with a convex surface opposed to the object side. The lens L11 and the lens L12 are attached to each other to constitute a cemented lens.

The second lens group G2 has negative refractive power. The second lens group G2 includes the lenses L21 to L24 in order from the object side toward the image plane side. The lens L21 is a negative meniscus lens with a convex surface opposed to the object side. The lens L22 is a negative lens of a biconcave shape. The lens L23 is a positive lens of a biconvex shape. The lens L22 and the lens L23 are attached to each other to constitute a cemented lens. The lens L24 is a negative meniscus lens with a concave surface opposed to the object side.

The third lens group G3 has positive refractive power. The third lens group G3 includes the lens L31 and the lens L32 in order from the object side toward the image plane side. The lens L31 is a negative meniscus lens with a convex surface opposed to the object side. The lens L32 is a positive lens of a biconvex shape. The lens L31 and the lens L32 are attached to each other to constitute a cemented lens.

The fourth lens group G4 has negative refractive power. The fourth lens group G4 includes the lens L41 and the lens L42 in order from the object side toward the image plane side. The lens L41 is a negative meniscus lens with a concave surface opposed to the object side. The lens L42 is a positive lens of a biconvex shape. This allows, in the fourth lens group G4, a surface on a side closest to the object side to have a convex shape with respect to the image plane side.

The fifth lens group G5 has positive refractive power. The fifth lens group G5 includes the lenses L51 to L53 in order from the object side toward the image plane side. The lens L51 is a negative meniscus lens with a convex surface opposed to the object side. The lens L52 is a positive lens of a biconvex shape. The lens L53 is a positive lens of a biconvex shape. The lens L51 and the lens L52 are attached to each other to constitute a cemented lens.

The sixth lens group G6 has negative refractive power. The sixth lens group G6 includes the lens L61 and the lens L62 in order from the object side toward the image plane side. The lens L61 is a positive lens of a biconvex shape. The lens L62 is a negative lens of a biconcave shape. The lens L61 and the lens L62 are attached to each other to constitute a cemented lens.

The seventh lens group G7 has negative refractive power. The seventh lens group G7 includes lenses L71 to L73 in order from the object side toward the image plane side. The lens L71 is a positive lens of a biconvex shape. The lens L72 is a negative meniscus lens with a convex surface opposed to the object side. The lens L73 is a negative meniscus lens with a concave surface opposed to the object side.

Upon zooming from the wide-angle end to the telephoto end, predetermined lens groups move to allow an interval between adjacent lens groups to change. Upon zooming, the second lens group G2 and the seventh lens group G7 (final lens group) are each immovable (fixed) with respect to the image plane IMG. Upon focusing in which the object distance changes from infinity to a short distance (finite distance), the fourth lens group G4 and the sixth lens group G6 move as the focus groups in the optical axis direction. Specifically, upon focusing in which the object distance changes from infinity to a short distance (finite distance), the fourth lens group G4 and the sixth lens group G6 move in trajectories different from each other; the fourth lens group G4 moves to the object side in the optical axis direction, and the sixth lens group G6 moves to the image plane side in the optical axis direction.

The zoom lens 6 according to Example 6 includes at least one movable lens group on the side closer to the image plane than the aperture stop St, and moves, as the focus group, the movable lens group Unmax having the strongest negative refractive power, among the at least one movable lens group, in the optical axis direction upon focusing from infinity to a finite distance. In the zoom lens 6 according to Example 6, the sixth lens group G6 is the movable lens group Unmax, and includes the lens L61 as the positive lens Lnmaxp in the movable lens group Unmax. In addition, the third lens group G3 and the movable lens group Unmax move integrally upon zooming.

In the zoom lens 6 according to Example 6, the fifth lens group G5, which is a lens group on the side closer to the object than the final lens group (seventh lens group G7), among the plurality of lens groups, includes a positive lens (lens L53) having an aspherical shape in which positive refractive power becomes weaker in a peripheral part than in a center part.

In addition, in the zoom lens 6 according to Example 6, the final lens group (seventh lens group G7), among the plurality of lens groups, includes a negative lens (lens L73) having an aspherical shape in which negative refractive power becomes weaker in a peripheral part than in a center part.

The above-described configuration allows for achievement of a telephoto zoom lens having a high variable magnification ratio despite a small size and a light weight.

[Table 26]

| Example 6 | | | | | |
|---|---|---|---|---|---|
| Si | ri | di | ndi | vdi | φi |
| 0 (OBJ) | | (d0) | | | |
| 1 | 214.140 | 1.50 | 1.80633 | 29.8 | 55.24 |
| 2 | 110.752 | 5.34 | 1.49845 | 81.6 | 54.40 |
| 3 | -956.928 | 0.25 | | | 54.04 |
| 4 | 125.178 | 3.90 | 1.59489 | 68.6 | 52.76 |
| 5 | 950.028 | (d5) | | | 52.19 |
| 6 | 383.145 | 0.90 | 1.81081 | 40.7 | 26.00 |
| 7 | 34.771 | 4.36 | | | 24.79 |
| 8 | -242.210 | 0.90 | 1.59489 | 68.6 | 24.57 |
| 9 | 31.793 | 3.50 | 1.86252 | 25.2 | 24.52 |
| 10 | 4375.070 | 3.02 | | | 24.38 |
| 11 | -44.357 | 1.00 | 1.85646 | 40.8 | 24.06 |
| 12 | -104.578 | (d12) | | | 24.31 |
| 13 (STO) | ∞ | 1.00 | | | 25.05 |
| 14 | 50.943 | 1.00 | 1.77660 | 29.7 | 26.02 |
| 15 | 39.793 | 5.93 | 1.62067 | 49.8 | 26.00 |
| 16 | -54.587 | (d16) | | | 26.12 |
| 17 | -27.485 | 0.90 | 1.96073 | 32.3 | 23.45 |
| 18 | -76.099 | 0.20 | | | 24.36 |
| 19 | 53.800 | 2.76 | 1.49845 | 81.6 | 25.40 |
| 20 | -1013.442 | (d20) | | | 25.50 |
| 21 | 181.488 | 0.90 | 2.00996 | 25.5 | 25.96 |
| 22 | 43.065 | 4.30 | 1.43810 | 95.1 | 25.93 |
| 23 | -116.837 | 0.20 | | | 26.30 |
| 24 (ASP) | 48.335 | 6.01 | 1.77080 | 49.2 | 26.96 |
| 25 (ASP) | -43.596 | (d25) | | | 26.80 |

(continued)

| Example 6 | | | | | |
|---|---|---|---|---|---|
| Si | ri | di | ndi | vdi | φi |
| 26 | 189.623 | 2.46 | 1.78595 | 23.9 | 24.67 |
| 27 | -76.447 | 0.90 | 1.81078 | 40.9 | 24.43 |
| 28 | 36.051 | (d28) | | | 23.61 |
| 29 | 98.423 | 4.92 | 1.72793 | 38.0 | 29.63 |
| 30 | -55.634 | 0.20 | | | 29.64 |
| 31 | 54.559 | 1.10 | 1.49845 | 81.6 | 28.02 |
| 32 | 34.051 | 8.87 | | | 27.09 |
| 33 (ASP) | -23.236 | 1.10 | 1.77373 | 49.4 | 26.54 |
| 34 (ASP) | -102.142 | 29.60 | | | 28.01 |
| 35 (IMG) | ∞ | 0.00 | | | 43.35 |

[Table 27]

| Example 6 (Zoom Ratio: 2.89) | | | |
|---|---|---|---|
| | Wide | Mid | Tele |
| f (mm) | 50.05 | 108.65 | 144.71 |
| Fno | 4.12 | 4.12 | 4.14 |
| 2ω (°) | 46.75 | 22.52 | 17.00 |
| Y (mm) | 21.63 | 21.63 | 21.63 |
| L (mm) | 155.00 | 186.98 | 215.00 |

[Table 28]

| Example 6 · Variable Data | | | | | | |
|---|---|---|---|---|---|---|
| | Wide | Mid | Tele | Wide | Mid | Tele |
| Photographic Distance | ∞ | ∞ | ∞ | 1611 mm | 3368 mm | 4416 mm |
| d0 | ∞ | ∞ | ∞ | 1456.14 | 3181.11 | 4201.24 |
| d5 | 1.98 | 33.96 | 61.98 | 1.98 | 33.96 | 61.98 |
| d12 | 24.66 | 2.70 | 1.50 | 24.66 | 2.70 | 1.50 |
| d16 | 9.06 | 12.69 | 13.43 | 8.68 | 12.61 | 13.43 |
| d20 | 7.08 | 3.44 | 2.70 | 7.45 | 3.52 | 2.70 |
| d25 | 2.80 | 4.91 | 2.80 | 3.31 | 5.56 | 3.62 |
| d28 | 12.40 | 32.25 | 35.56 | 11.89 | 31.60 | 34.74 |

[Table 29]

| Example 6 ·Aspherical Data | | | | |
|---|---|---|---|---|
| Si | k | A4 | A6 | A8 |
| 24 | 0.00000E+00 | -4.59555E-06 | 8.52834E-09 | -8.80294E-11 |
| 25 | 0.00000E+00 | 4.15500E-06 | 5.32405E-09 | -8.50827E-11 |
| 33 | 0.00000E+00 | 7.68529E-06 | 4.34099E-08 | -3.79597E-10 |
| 34 | 0.00000E+00 | 2.79224E-06 | 2.81321E-08 | -2.79003E-10 |

(continued)

| Si | A10 | A12 |  |
|----|-----|-----|--|
| 24 | 4.10726E-13 | -8.13750E-16 |  |
| 25 | 4.08586E-13 | -8.05405E-16 |  |
| 33 | 2.03582E-12 | -3.67001E-15 |  |
| 34 | 1.29627E-12 | -2.14969E-15 |  |

[Table 30]

| Example 6 | | |
|-----------|--|--|
| Lens Group | Starting Surface | Focal Distance |
| G1 | 1 | 178.04 |
| G2 | 6 | -36.10 |
| G3 | 13 | 45.31 |
| G4 | 17 | -83.13 |
| G5 | 21 | 33.68 |
| G6 | 26 | -54.21 |
| G7 | 29 | -169.49 |

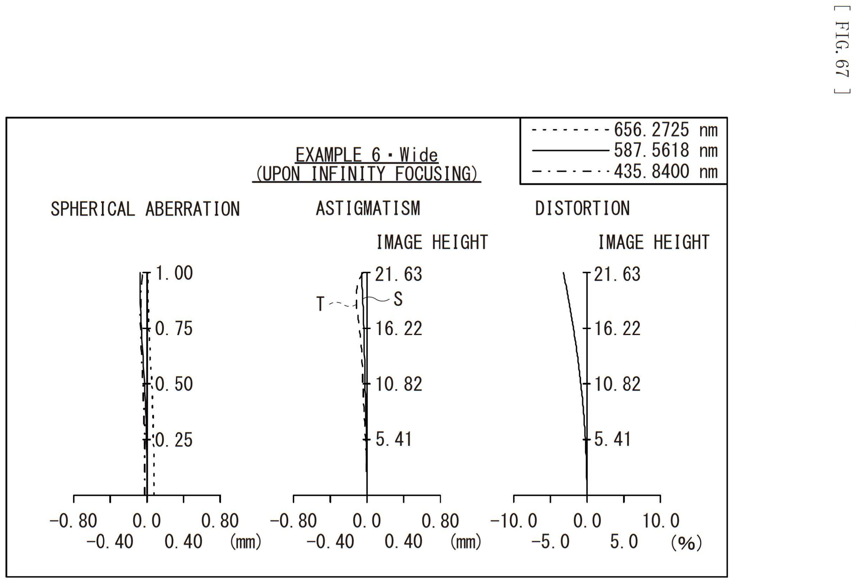

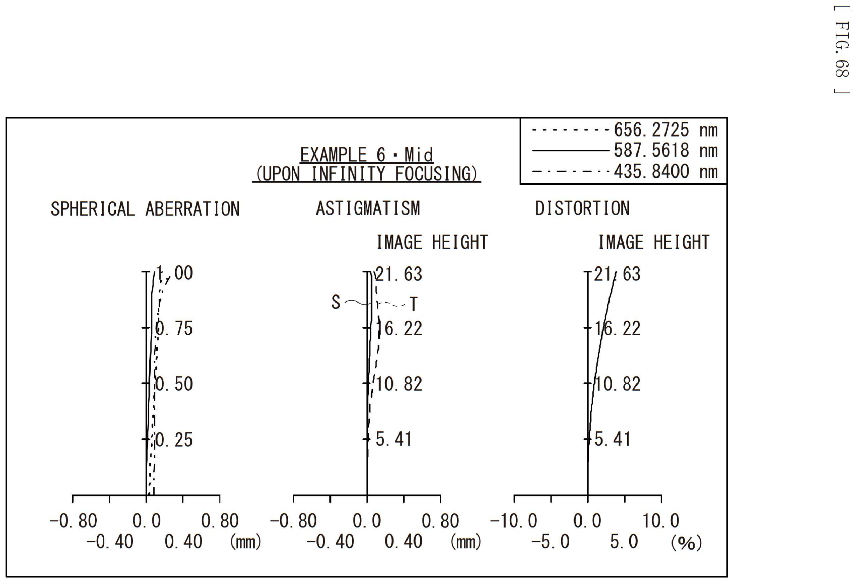

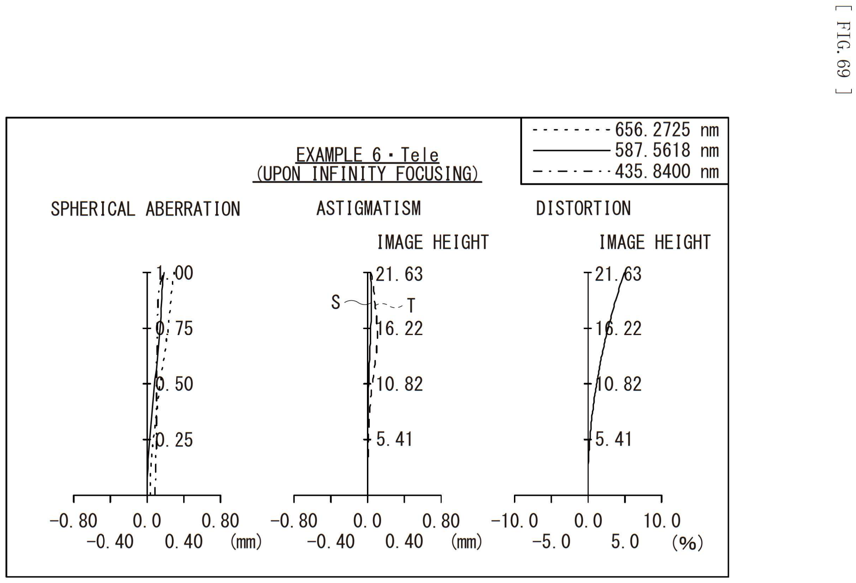

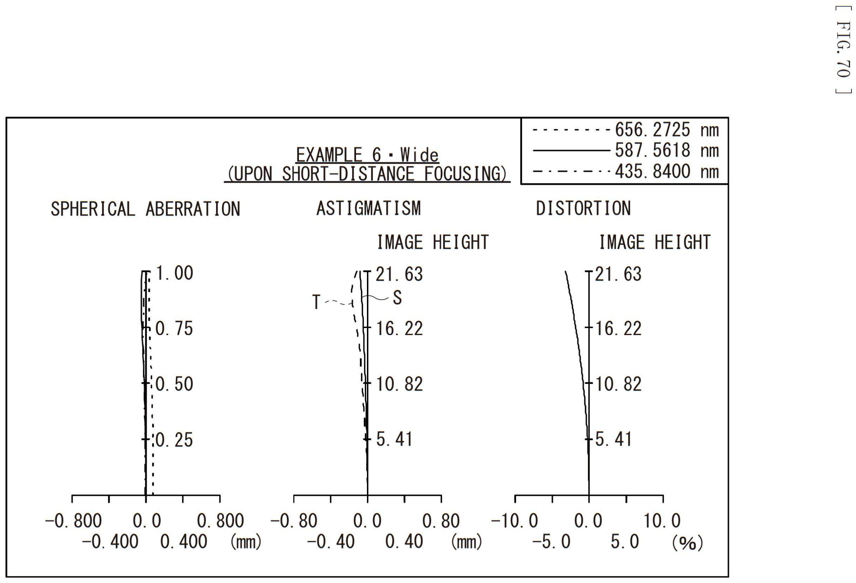

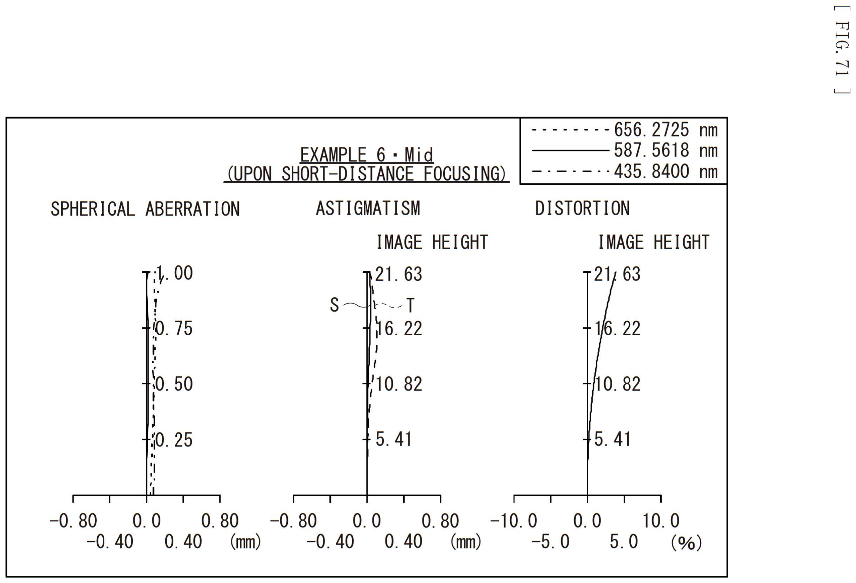

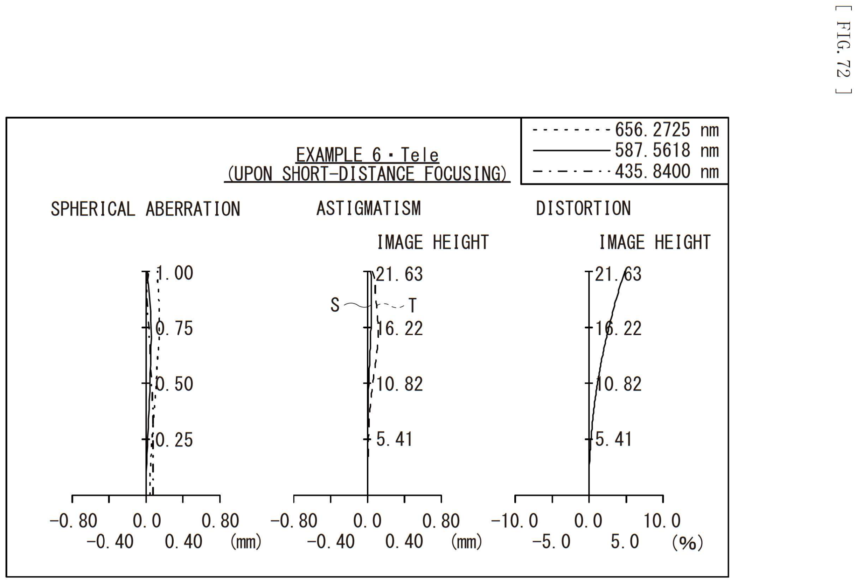

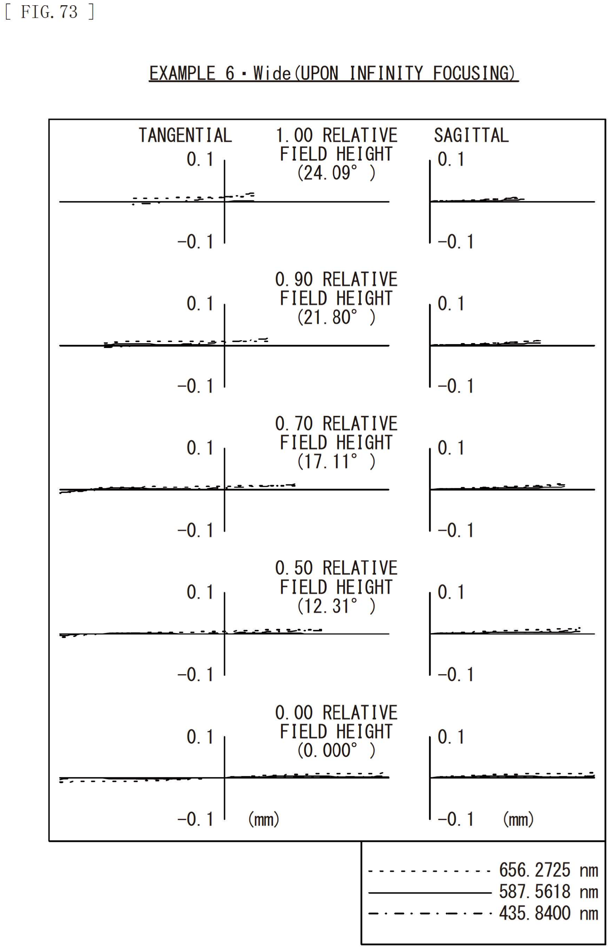

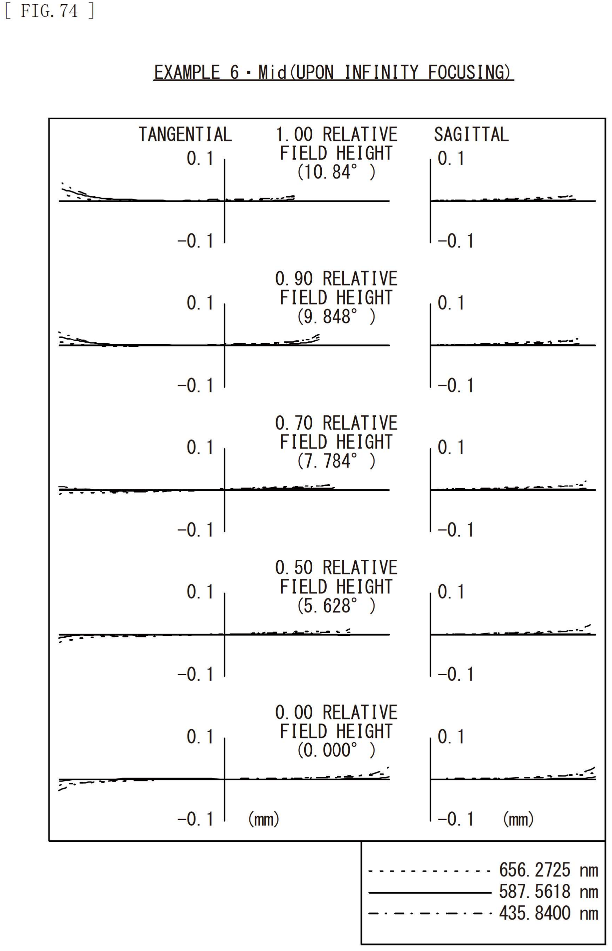

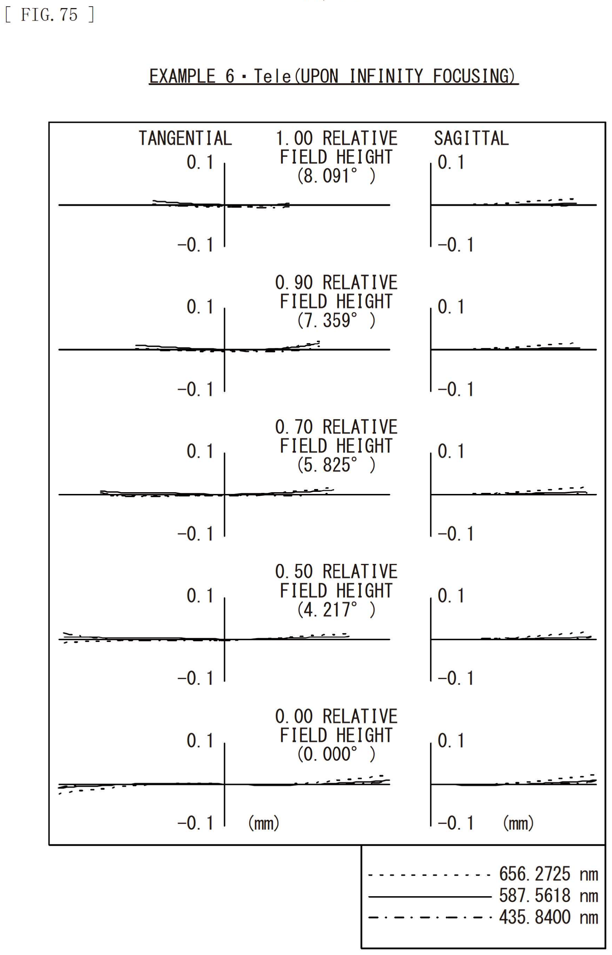

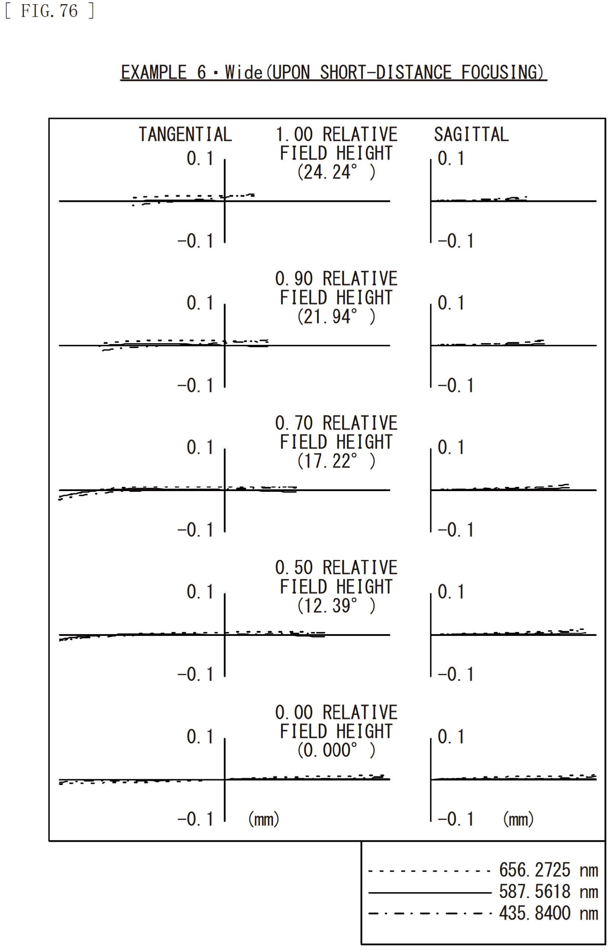

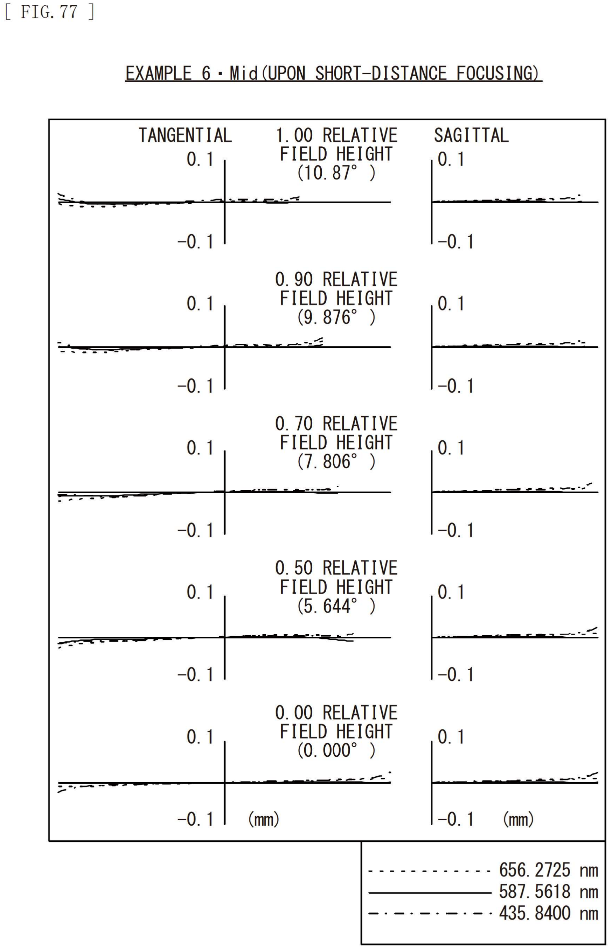

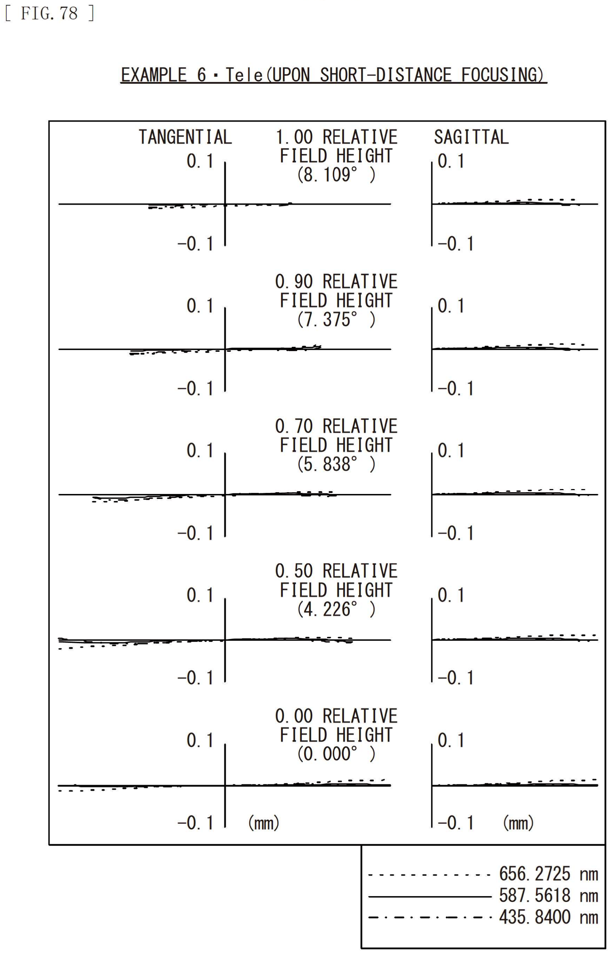

FIG. 67 illustrates longitudinal aberration upon infinity focusing at a wide-angle end of the zoom lens 6 according to Example 6. FIG. 68 illustrates longitudinal aberration upon infinity focusing at an intermediate position of the zoom lens 6 according to Example 6. FIG. 69 illustrates longitudinal aberration upon infinity focusing at a telephoto end of the zoom lens 6 according to Example 6. FIG. 70 illustrates longitudinal aberration upon short-distance focusing at the wide-angle end of the zoom lens 6 according to Example 6. FIG. 71 illustrates longitudinal aberration upon short-distance focusing at the intermediate position of the zoom lens 6 according to Example 6. FIG. 72 illustrates longitudinal aberration upon short-distance focusing at the telephoto end of the zoom lens 6 according to Example 6. FIG. 73 illustrates lateral aberration upon infinity focusing at the wide-angle end of the zoom lens 6 according to Example 6. FIG. 74 illustrates lateral aberration upon infinity focusing at the intermediate position of the zoom lens 6 according to Example 6. FIG. 75 illustrates lateral aberration upon infinity focusing at the telephoto end of the zoom lens 6 according to Example 6. FIG. 76 illustrates lateral aberration upon short-distance focusing at the wide-angle end of the zoom lens 6 according to Example 6. FIG. 77 illustrates lateral aberration upon short-distance focusing at the intermediate position of the zoom lens 6 according to Example 6. FIG. 78 illustrates lateral aberration upon short-distance focusing at the telephoto end of the zoom lens 6 according to Example 6.

As appreciated from each of the aberration diagrams, the zoom lens 6 according to Example 6 undergoes favorable correction of various aberrations, and thus has superior image-forming performance.

[Example 7]

Table 31 exhibits basic lens data of the zoom lens 7 according to Example 7 illustrated in FIG. 79. Table 32 exhibits values of the focal distance f of the total system, the F-value, the total angle of view 2ω, the image height Y, and the total optical length L in the zoom lens 7 according to Example 7. Table 33 exhibits data on a surface interval that is variable upon zooming and focusing in the zoom lens 7 according to Example 7. It is to be noted that Table 32 exhibits values for each of the wide-angle end (Wide), the intermediate position (Mid), and the telephoto end (Tele) in cases where the photographic distance and the object distance (d0) are each infinity. Table 33 exhibits values for each of the wide-angle end (Wide), the intermediate position (Mid), and the telephoto end (Tele) in cases where the photographic distance and the object distance (d0) are each infinity and in cases where the photographic distance and the object distance (d0) are each a short distance. Table 34 exhibits values of coefficients indicating shapes of aspherical surfaces in the zoom lens 7 according to Example 7. Table 35 exhibits a starting surface and a focal distance (unit: mm) of each of lens groups of the zoom lens 7 according to Example 7.

The zoom lens 7 according to Example 7 has a configuration in which the first lens group G1 to the seventh lens group G7 are disposed as the plurality of lens groups in order from the object side toward the image plane side. The aperture stop St is disposed on the object side of the third lens group G3.

The first lens group G1 has positive refractive power. The first lens group G1 includes the lenses L11 to L13 in order from the object side toward the image plane side. The lens L11 is a positive meniscus lens with a convex surface opposed to the object side. The lens L12 is a negative meniscus lens with a convex surface opposed to the object side. The lens L13 is a positive meniscus lens with a convex surface opposed to the object side. The lens L12 and the lens L13 are attached to each other to constitute a cemented lens.

The second lens group G2 has negative refractive power. The second lens group G2 includes the lenses L21 to L25 in order from the object side toward the image plane side. The lens L21 is a positive lens of a biconvex shape. The lens L22 is a negative meniscus lens with a concave surface opposed to the object side. The lens L21 and the lens L22 are attached to each other to constitute a cemented lens. The lens L23 is a negative meniscus lens with a convex surface opposed to the object side. The lens L24 is a negative lens of a biconcave shape. The lens L25 is a positive lens of a biconvex shape. The lens L24 and the lens L25 are attached to each other to constitute a cemented lens.

The third lens group G3 has positive refractive power. The third lens group G3 includes the lens L31 and the lens L32 in order from the object side toward the image plane side. The lens L31 is a negative meniscus lens with a convex surface opposed to the object side. The lens L32 is a positive lens of a biconvex shape. The lens L31 and the lens L32 are attached to each other to constitute a cemented lens.

The fourth lens group G4 has negative refractive power. The fourth lens group G4 includes the lens L41 and the lens L42 in order from the object side toward the image plane side. The lens L41 is a negative meniscus lens with a concave surface opposed to the object side. The lens L42 is a positive lens of a biconvex shape. This allows, in the fourth lens group G4, a surface on a side closest to the object side to have a convex shape with respect to the image plane side.

The fifth lens group G5 has positive refractive power. The fifth lens group G5 includes the lenses L51 to L53 in order from the object side toward the image plane side. The lens L51 is a negative lens of a biconcave shape. The lens L52 is a positive meniscus lens with a convex surface opposed to the object side. The lens L53 is a positive lens of a biconvex shape. The lens L51 and the lens L52 are attached to each other to constitute a cemented lens.

The sixth lens group G6 has negative refractive power. The sixth lens group G6 includes the lens L61 and the lens L62 in order from the object side toward the image plane side. The lens L61 is a positive lens of a biconvex shape. The lens L62 is a negative lens of a biconcave shape. The lens L61 and the lens L62 are attached to each other to constitute a cemented lens.

The seventh lens group G7 has negative refractive power. The seventh lens group G7 includes the lens L71 and the lens L72 in order from the object side toward the image plane side. The lens L71 is a positive lens of a biconvex shape. The lens L72 is a negative lens of a biconcave shape.

Upon zooming from the wide-angle end to the telephoto end, predetermined lens groups move to allow an interval between adjacent lens groups to change. Upon zooming, the second lens group G2 and the seventh lens group G7 (final lens group) are each immovable (fixed) with respect to the image plane IMG. Upon focusing in which the object distance changes from infinity to a short distance (finite distance), the fourth lens group G4 and the sixth lens group G6 move as the focus groups in the optical axis direction. Specifically, upon focusing in which the object distance changes from infinity to a short distance (finite distance), the fourth lens group G4 and the sixth lens group G6 move in trajectories different from each other; the fourth lens group G4 moves to the object side in the optical axis direction, and the sixth lens group G6 moves to the image plane side in the optical axis direction.

The zoom lens 7 according to Example 7 includes at least one movable lens group on the side closer to the image plane than the aperture stop St, and moves, as the focus group, the movable lens group Unmax having the strongest negative refractive power, among the at least one movable lens group, in the optical axis direction upon focusing from infinity to a finite distance. In the zoom lens 7 according to Example 7, the sixth lens group G6 is the movable lens group Unmax, and includes the lens L61 as the positive lens Lnmaxp in the movable lens group Unmax. In addition, the third lens group G3 and the movable lens group Unmax move integrally upon zooming.

In the zoom lens 7 according to Example 7, the fifth lens group G5, which is a lens group on the side closer to the object than the final lens group (seventh lens group G7), among the plurality of lens groups, includes a positive lens (lens L53) having an aspherical shape in which positive refractive power becomes weaker in a peripheral part than in a center part.

In addition, in the zoom lens 7 according to Example 7, the final lens group (seventh lens group G7), among the plurality of lens groups, includes a negative lens (lens L72) having an aspherical shape in which negative refractive power becomes weaker in a peripheral part than in a center part.

The above-described configuration allows for achievement of a telephoto zoom lens having a high variable magnification ratio despite a small size and a light weight.

[Table 31]

| Example 7 | | | | | |
|---|---|---|---|---|---|
| Si | ri | di | ndi | vdi | φi |
| 0 (OBJ) | | (d0) | | | |

(continued)

| Si | ri | di | ndi | vdi | φi |
|---|---|---|---|---|---|
| Example 7 | | | | | |
| 1 | 132.640 | 4.30 | 1.49845 | 81.6 | 63.42 |
| 2 | 499.841 | 0.25 | | | 63.05 |
| 3 | 92.225 | 1.80 | 1.75453 | 35.3 | 61.58 |
| 4 | 66.222 | 8.21 | 1.43810 | 95.1 | 59.82 |
| 5 | 633.575 | (d5) | | | 59.15 |
| 6 | 164.467 | 5.78 | 1.49845 | 81.6 | 31.36 |
| 7 | -38.465 | 0.90 | 1.91695 | 35.2 | 30.68 |
| 8 | -54.491 | 0.20 | | | 30.52 |
| 9 | -2289.017 | 0.90 | 1.62228 | 63.9 | 28.90 |
| 10 | 45.044 | 6.67 | | | 27.68 |
| 11 | -36.706 | 0.90 | 1.73234 | 54.7 | 27.24 |
| 12 | 71.808 | 2.90 | 1.93024 | 24.0 | 28.25 |
| 13 | -218.983 | (d13) | | | 28.39 |
| 14 (STO) | ∞ | 1.10 | | | 28.69 |
| 15 | 261.456 | 0.95 | 1.62067 | 49.8 | 28.94 |
| 16 | 119.397 | 4.64 | 1.73234 | 54.7 | 29.02 |
| 17 | -46.218 | (d17) | | | 29.08 |
| 18 | -29.709 | 0.90 | 1.82017 | 46.5 | 26.97 |
| 19 | -381.733 | 0.20 | | | 28.13 |
| 20 | 38.198 | 5.34 | 1.49845 | 81.6 | 29.90 |
| 21 | -83.330 | (d21) | | | 29.92 |
| 22 | -83.188 | 0.90 | 1.85505 | 23.8 | 29.45 |
| 23 | 96.482 | 2.00 | 1.75453 | 35.3 | 29.78 |
| 24 | 122.913 | 0.23 | | | 29.99 |
| 25 (ASP) | 53.291 | 6.11 | 1.77080 | 49.2 | 30.46 |
| 26 (ASP) | -35.878 | (d26) | | | 30.54 |
| 27 | 130.776 | 2.18 | 1.87985 | 20.0 | 27.66 |
| 28 | -100.143 | 0.90 | 1.83945 | 42.7 | 22.43 |
| 29 | 27.668 | (d29) | | | 20.84 |
| 30 | 231.068 | 5.27 | 1.58481 | 40.9 | 32.07 |
| 31 | -46.366 | 8.81 | | | 32.25 |
| 32 (ASP) | -142.143 | 1.10 | 1.85639 | 40.1 | 29.16 |
| 33 (ASP) | 53.924 | 32.03 | | | 29.14 |
| 34 (IMG) | ∞ | 0.00 | | | 43.34 |

[Table 32]

| Example 7 (Zoom Ratio: 2.81) | | | |
|---|---|---|---|
| | Wide | Mid | Tele |
| f (mm) | 103.03 | 166.15 | 289.11 |
| Fno | 4.63 | 4.63 | 4.66 |
| 2ω (°) | 23.72 | 14.84 | 8.56 |
| Y (mm) | 21.63 | 21.63 | 21.63 |
| L (mm) | 169.70 | 198.89 | 248.12 |

[Table 33]

| Example 7 · Variable Data | | | | | | |
|---|---|---|---|---|---|---|
| | Wide | Mid | Tele | Wide | Mid | Tele |
| Photographic Distance | ∞ | ∞ | ∞ | 3211 mm | 5106 mm | 8714 mm |
| d0 | ∞ | ∞ | ∞ | 3041.02 | 4906.80 | 8465.57 |
| d5 | 1.58 | 30.77 | 80.00 | 1.58 | 30.77 | 80.00 |
| d13 | 19.37 | 5.58 | 1.50 | 19.37 | 5.58 | 1.50 |
| d17 | 6.32 | 7.32 | 7.24 | 6.23 | 7.34 | 7.24 |
| d21 | 3.69 | 3.26 | 2.70 | 3.78 | 3.24 | 2.70 |
| d26 | 13.31 | 11.50 | 2.80 | 13.93 | 12.23 | 3.83 |
| d29 | 19.96 | 34.98 | 48.41 | 19.34 | 34.24 | 47.38 |

[Table 34]

| Example 7 · Aspherical Data | | | | |
|---|---|---|---|---|
| Si | k | A4 | A6 | A8 |
| 25 | 0.00000E+00 | -7.56206E-06 | 1.00512E-08 | -1.00024E-10 |
| 26 | 0.00000E+00 | 4.49465E-06 | 6.72099E-09 | -8.54784E-11 |
| 32 | 0.00000E+00 | -8.76258E-07 | -5.55349E-08 | 3.16034E-10 |
| 33 | 0.00000E+00 | 1.68039E-06 | -4.20743E-08 | 1.93863E-10 |
| Si | A10 | A12 | | |
| 25 | 4.13418E-13 | -7.83350E-16 | | |
| 26 | 3.67549E-13 | -7.06299E-16 | | |
| 32 | -7.75460E-13 | 6.76516E-16 | | |
| 33 | -2.84305E-13 | -5.31643E-17 | | |

[Table 35]

| Example 7 | | |
|---|---|---|
| Lens Group | Starting Surface | Focal Distance |
| G1 | 1 | 180.68 |
| G2 | 6 | -56.05 |
| G3 | 14 | 52.88 |
| G4 | 18 | -175.02 |
| G5 | 22 | 51.66 |

(continued)

| Example 7 | | |
|---|---|---|
| Lens Group | Starting Surface | Focal Distance |
| G6 | 27 | -43.78 |
| G7 | 30 | -271.52 |

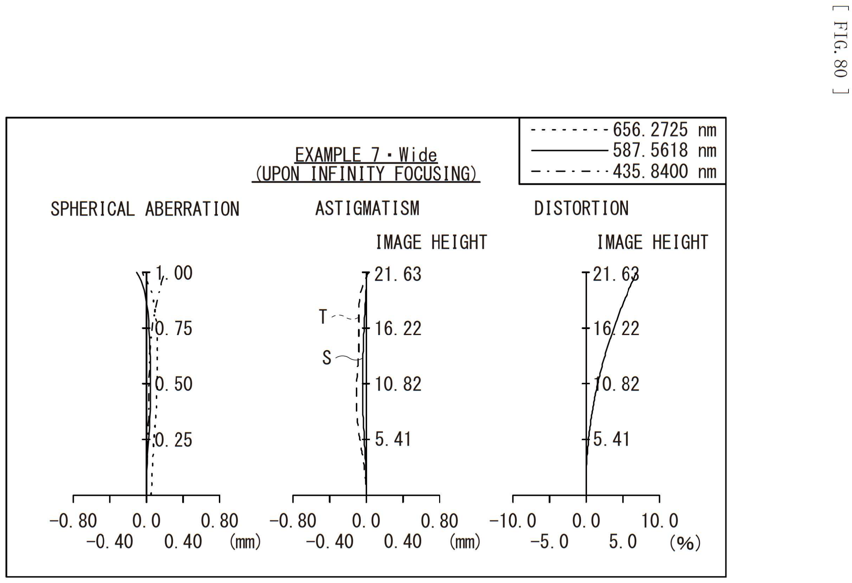

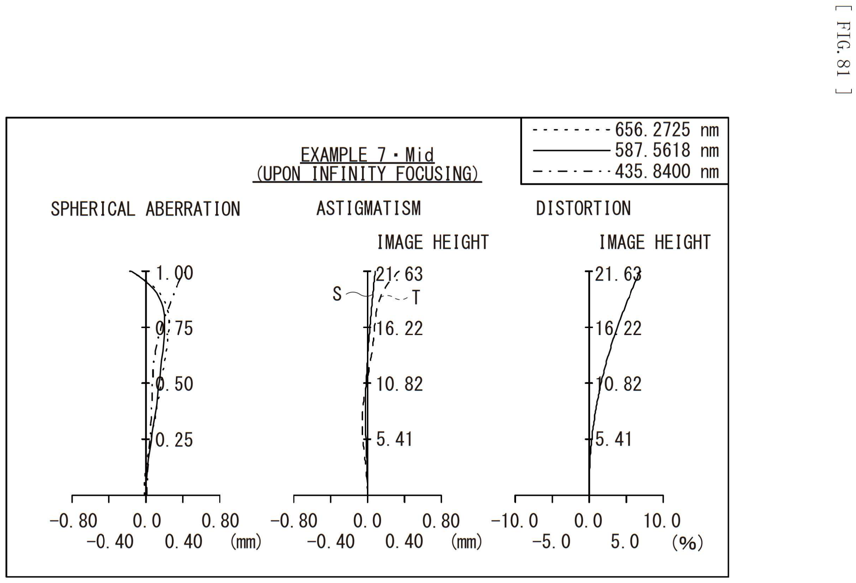

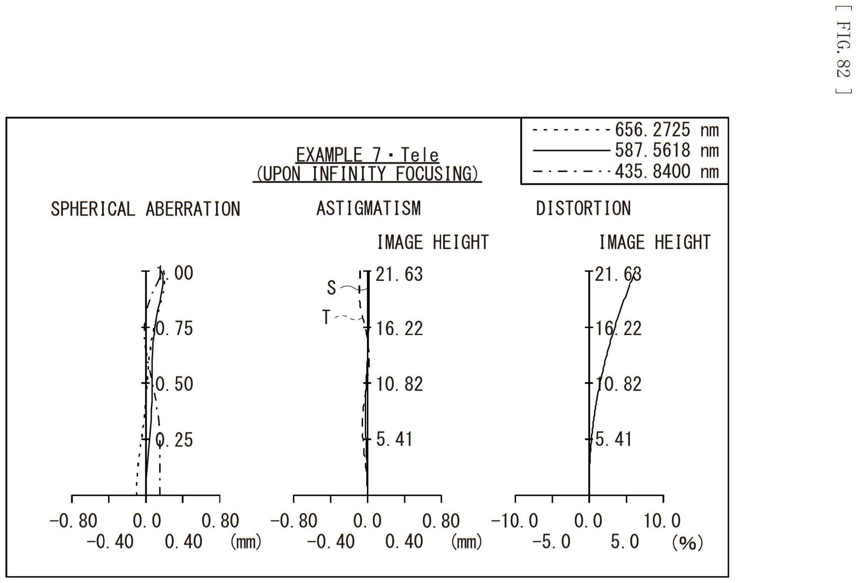

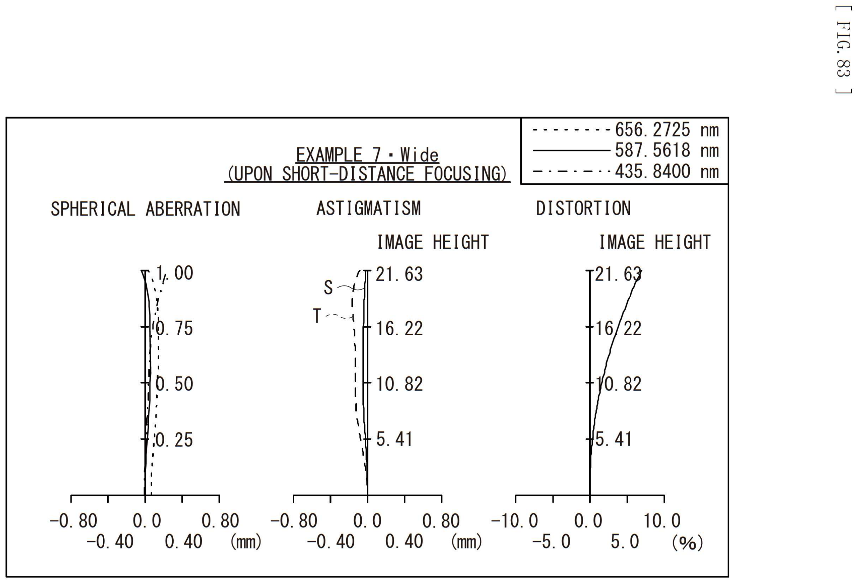

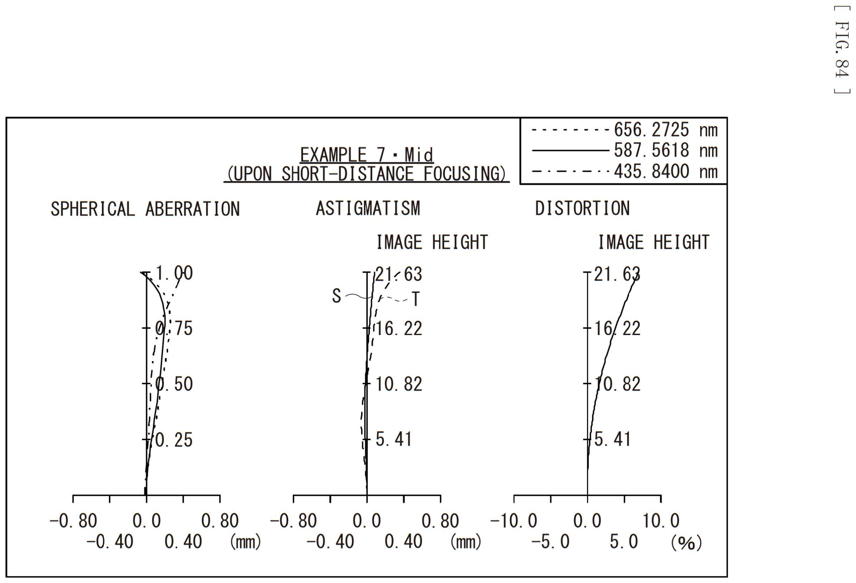

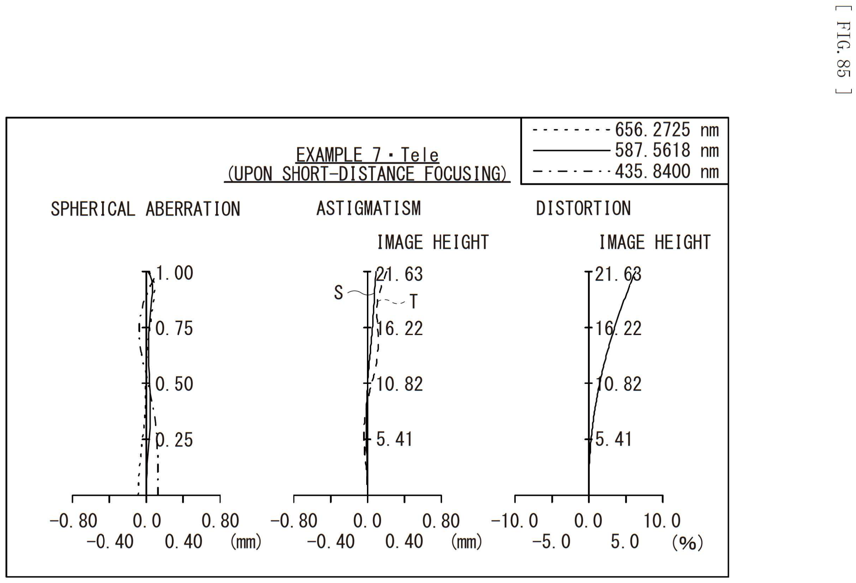

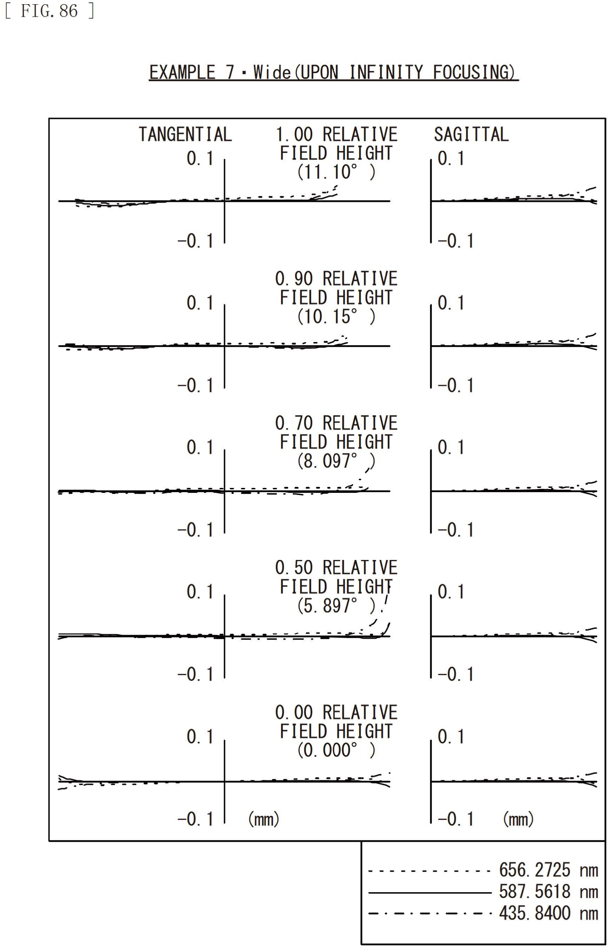

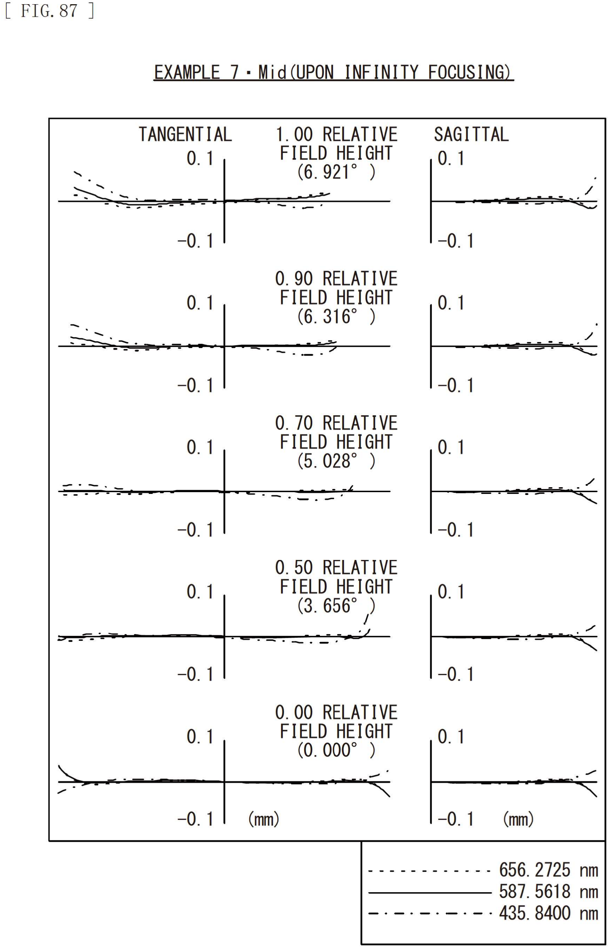

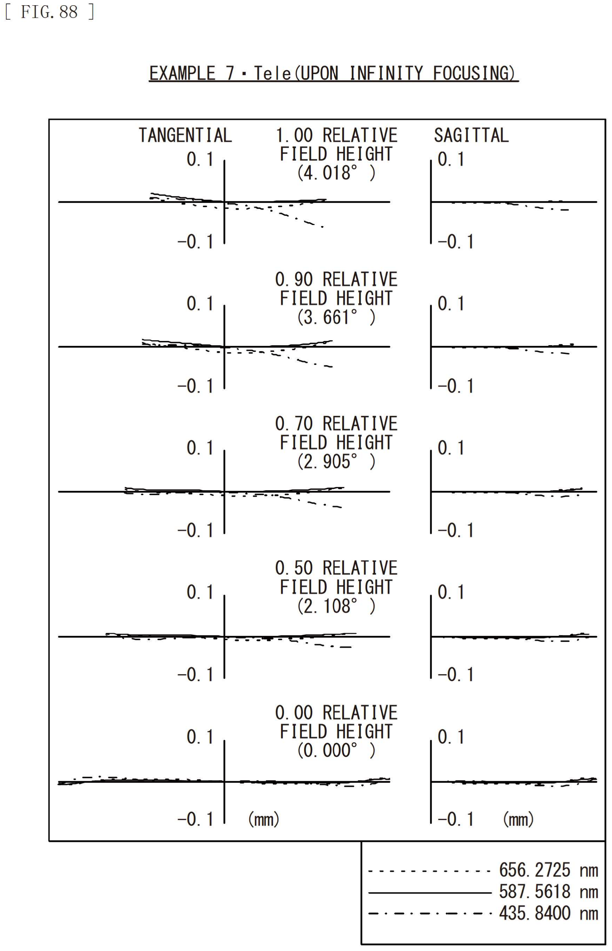

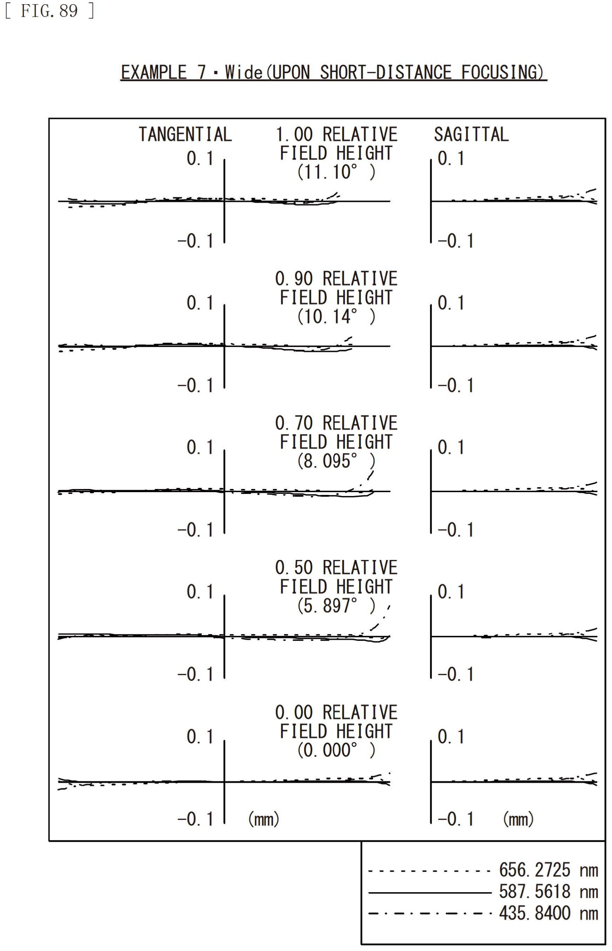

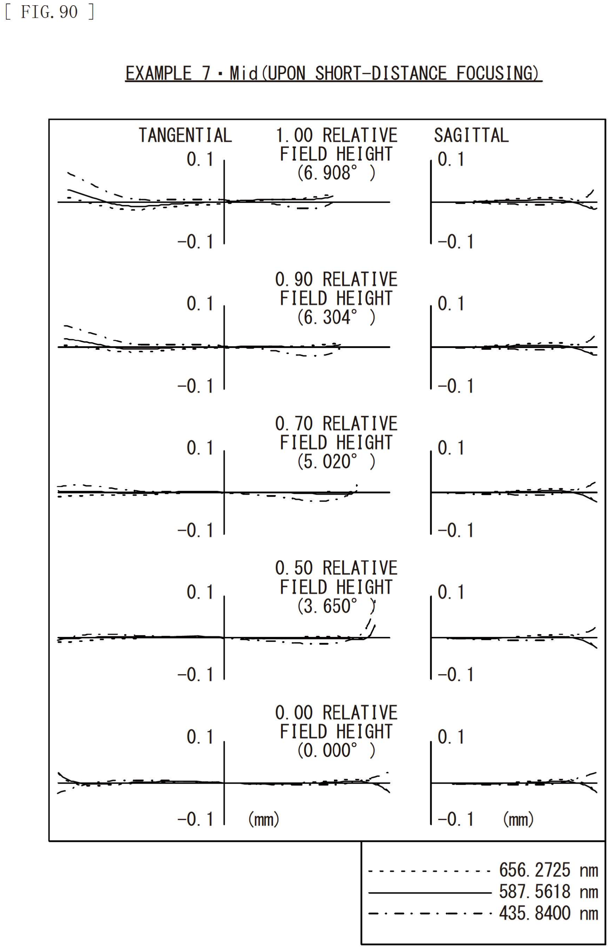

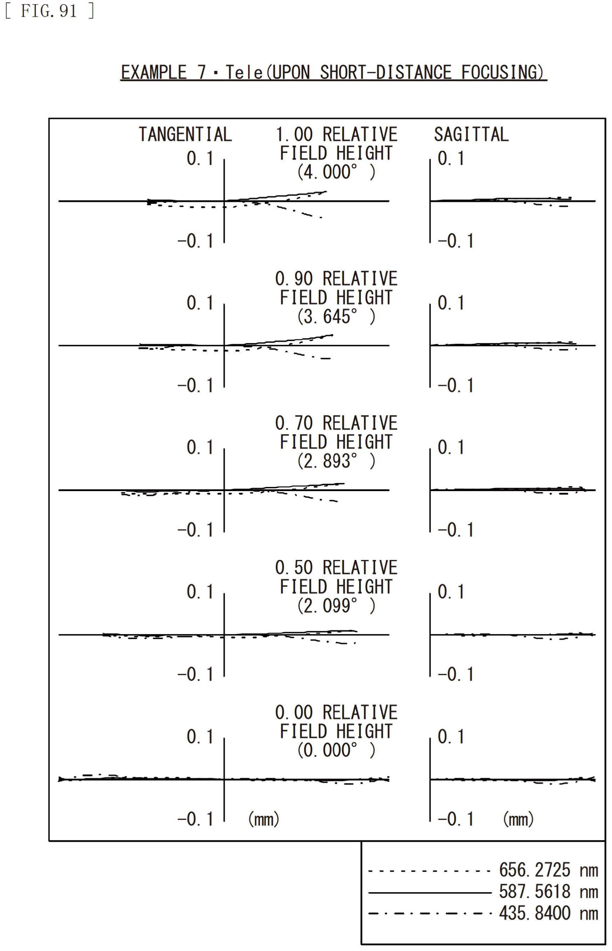

FIG. 80 illustrates longitudinal aberration upon infinity focusing at a wide-angle end of the zoom lens 7 according to Example 7. FIG. 81 illustrates longitudinal aberration upon infinity focusing at an intermediate position of the zoom lens 7 according to Example 7. FIG. 82 illustrates longitudinal aberration upon infinity focusing at a telephoto end of the zoom lens 7 according to Example 7. FIG. 83 illustrates longitudinal aberration upon short-distance focusing at the wide-angle end of the zoom lens 7 according to Example 7. FIG. 84 illustrates longitudinal aberration upon short-distance focusing at the intermediate position of the zoom lens 7 according to Example 7. FIG. 85 illustrates longitudinal aberration upon short-distance focusing at the telephoto end of the zoom lens 7 according to Example 7. FIG. 86 illustrates lateral aberration upon infinity focusing at the wide-angle end of the zoom lens 7 according to Example 7. FIG. 87 illustrates lateral aberration upon infinity focusing at the intermediate position of the zoom lens 7 according to Example 7. FIG. 88 illustrates lateral aberration upon infinity focusing at the telephoto end of the zoom lens 7 according to Example 7. FIG. 89 illustrates lateral aberration upon short-distance focusing at the wide-angle end of the zoom lens 7 according to Example 7. FIG. 90 illustrates lateral aberration upon short-distance focusing at the intermediate position of the zoom lens 7 according to Example 7. FIG. 91 illustrates lateral aberration upon short-distance focusing at the telephoto end of the zoom lens 7 according to Example 7.

As appreciated from each of the aberration diagrams, the zoom lens 7 according to Example 7 undergoes favorable correction of various aberrations, and thus has superior image-forming performance.

[Other Numerical Data of Each Example]

Tables 36 and 37 summarize values related to the above-described respective conditional expressions for each of the Examples. As appreciated from Table 37, the values of each of the Examples fall within the respective numerical ranges for the conditional expressions.

[Table 36]

| Conditional Expression Parameter | Example | | | |
|---|---|---|---|---|
| | 1 | 2 | 3 | 4 |
| fw | 72.14 | 72.15 | 51.56 | 51.55 |
| ft | 192.89 | 192.89 | 192.91 | 192.85 |
| f1 | 180.88 | 184.40 | 172.60 | 190.93 |
| f2 | -74.52 | -37.99 | -34.88 | -41.21 |
| f3 | 37.48 | 47.64 | 41.29 | 51.66 |
| f4 | -90.98 | -274.09 | -64.79 | -1050.9 |
| $\beta$nt | 3.12 | 3.06 | 3.24 | 1.62 |
| Fnot | 4.14 | 4.14 | 4.14 | 4.14 |
| Nnp | 1.81 | 1.81 | 1.81 | 1.81 |
| vnp | 22.76 | 22.76 | 22.76 | 22.76 |

| Conditional Expression Parameter | Example | | | |
|---|---|---|---|---|
| | 5 | 6 | 7 | |
| fw | 61.83 | 50.05 | 103.03 | |
| ft | 173.70 | 144.71 | 289.11 | |
| f1 | 213.46 | 178.04 | 180.68 | |
| f2 | -42.33 | -36.10 | -56.05 | |
| f3 | 37.75 | 45.31 | 52.88 | |

(continued)

| Conditional Expression Parameter | Example | | |
|---|---|---|---|
| | 5 | 6 | 7 |
| f4 | -77.20 | -83.13 | -175.02 |
| $\beta nt$ | 2.06 | 2.61 | 3.31 |
| Fnot | 4.14 | 4.14 | 4.66 |
| Nnp | 1.81 | 1.78 | 1.87 |
| vnp | 22.76 | 23.91 | 20.02 |

[Table 37]

| Conditional Expression | | Example | | | |
|---|---|---|---|---|---|
| | | 1 | 2 | 3 | 4 |
| (1) | f2/f3 | -1.99 | -0.80 | -0.84 | -0.80 |
| (2) | f4/fw | -1.26 | -3.80 | -1.26 | -20.39 |
| (3) | f1/ft | 0.94 | 0.96 | 0.89 | 0.99 |
| (4) | $(1-\beta n^2)/Fnot$ | -2.11 | -2.03 | -2.29 | -0.39 |
| (5) | Nnp+0.1*vnp | 4.08 | 4.08 | 4.08 | 4.08 |
| (6) | Np3 | 1.76 | 1.76 | 1.76 | 1.76 |
| Conditional Expression | | Example | | | |
| | | 5 | 6 | 7 | |
| (1) | f2/f3 | -1.12 | -0.80 | -1.06 | |
| (2) | f4/fw | -1.25 | -1.66 | -1.70 | |
| (3) | f1/ft | 1.23 | 1.23 | 0.62 | |
| (4) | $(1-\beta n2)/Fnot$ | -0.78 | -1.40 | -2.14 | |
| (5) | Nnp+0.1*vnp | 4.08 | 4.17 | 3.87 | |
| (6) | Np3 | 1.63 | 1.62 | 1.73 | |

<5. Practical Application Examples>

[5.1 First Practical Application Example]

A technology according to the present disclosure is applicable to various products. For example, the technology according to the present disclosure may be implemented as an apparatus to be mounted on a movable body of any kind of an automobile, an electric vehicle, a hybrid electric automobile, a motorcycle, a bicycle, a personal mobility, an airplane, a drone, a vessel, a robot, a construction machine, an agricultural machine (a tractor), and the like.

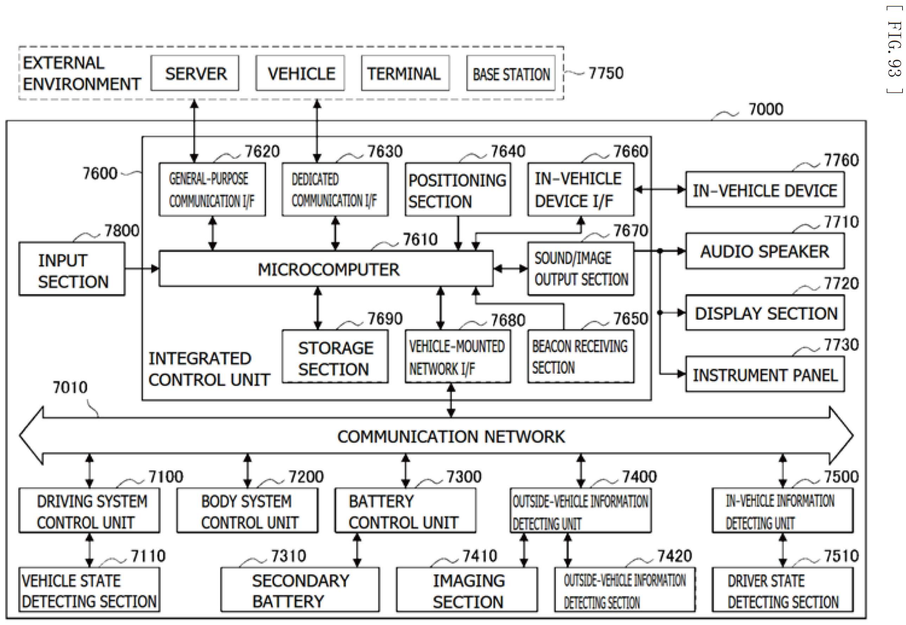

FIG. 93 is a block diagram depicting an example of schematic configuration of a vehicle control system 7000 as an example of a mobile body control system to which the technology according to an embodiment of the present disclosure can be applied. The vehicle control system 7000 includes a plurality of electronic control units connected to each other via a communication network 7010. In the example depicted in FIG. 93, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay (registered trademark), or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in FIG. 93 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs. For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420. The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

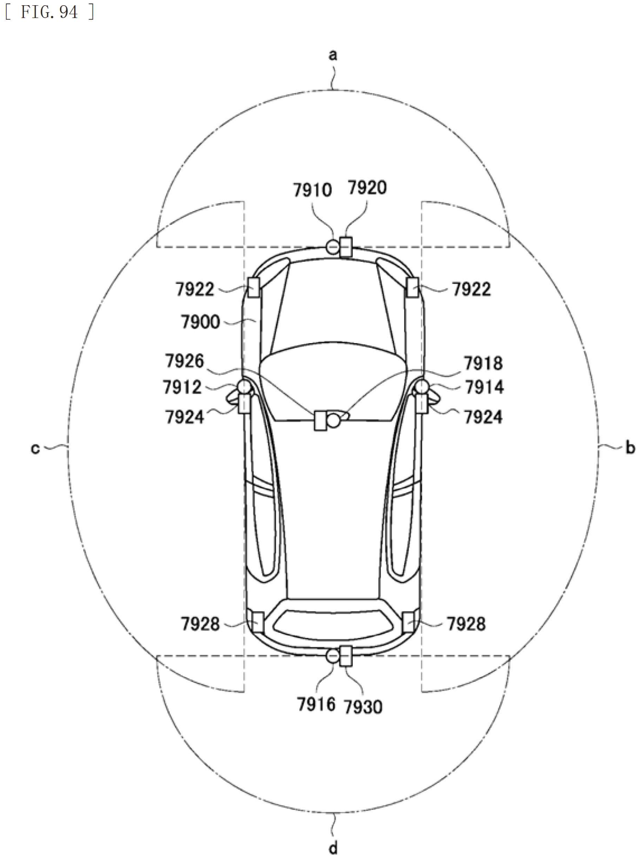

FIG. 94 depicts an example of installation positions of the imaging section 7410 and the outside-vehicle information detecting section 7420. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a preceding vehicle, a pedestrian, an obstacle, a signal, a traffic sign, a lane, or the like.

Incidentally, FIG. 94 depicts an example of photographing ranges of the respective imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door. A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a preceding vehicle, a pedestrian, an obstacle, or the like.

Returning to FIG. 93, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like.

The integrated control unit 7600 controls general operation within the vehicle control system 7000 in accordance with various kinds of programs. The integrated control unit 7600 is connected with an input section 7800. The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM (registered trademark)), worldwide interoperability for microwave access (WiMAX (registered trademark)), long term evolution (LTE (registered trademark)), LTE-advanced (LTE-A), or the like, or another wireless communication protocol such as wireless LAN (referred to also as wireless fidelity (Wi-Fi (registered trademark)), Bluetooth (registered trademark), or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth (registered trademark), near field communication (NFC), or wireless universal serial bus (WUSB). In addition, the in-vehicle device I/F 7660 may establish wired connection by universal serial bus (USB), high-definition multimedia interface (HDMI (registered trademark)), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automated driving, which makes the vehicle to travel automatedly without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example of FIG. 93, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example depicted in FIG. 93 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

In the vehicle control system 7000 described above, the zoom lens and the imaging apparatus of the present disclosure are applicable to any of the imaging section 7410 and the imaging sections 7910, 7912, 7914, 7916, and 7918.

[5.2 Second Practical Application Example]

A technology according to the present disclosure is applicable to a medical imaging system. The medical imaging system is a medical system using an imaging technology, and is, for example, an endoscope system or a microscope system.

[Endoscope system]

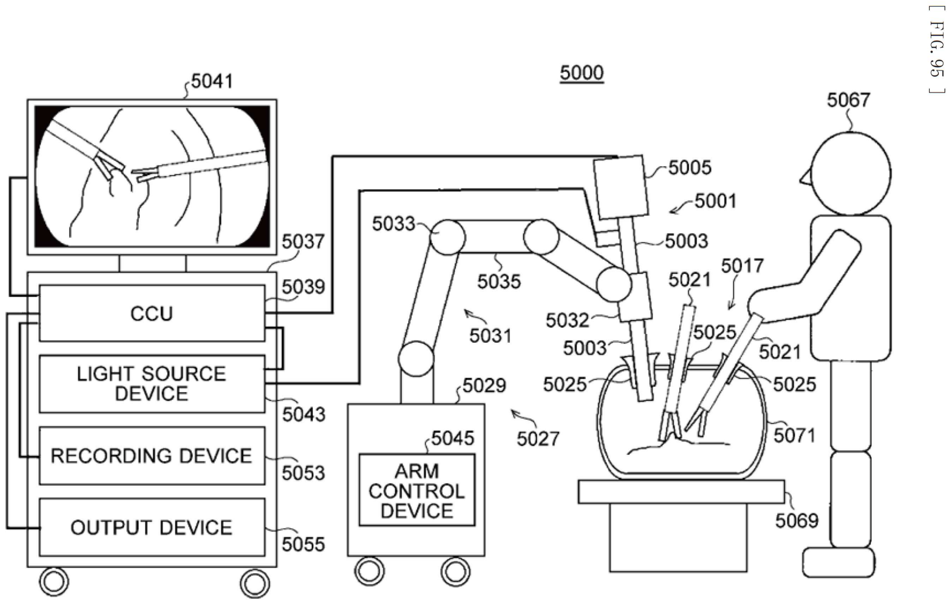

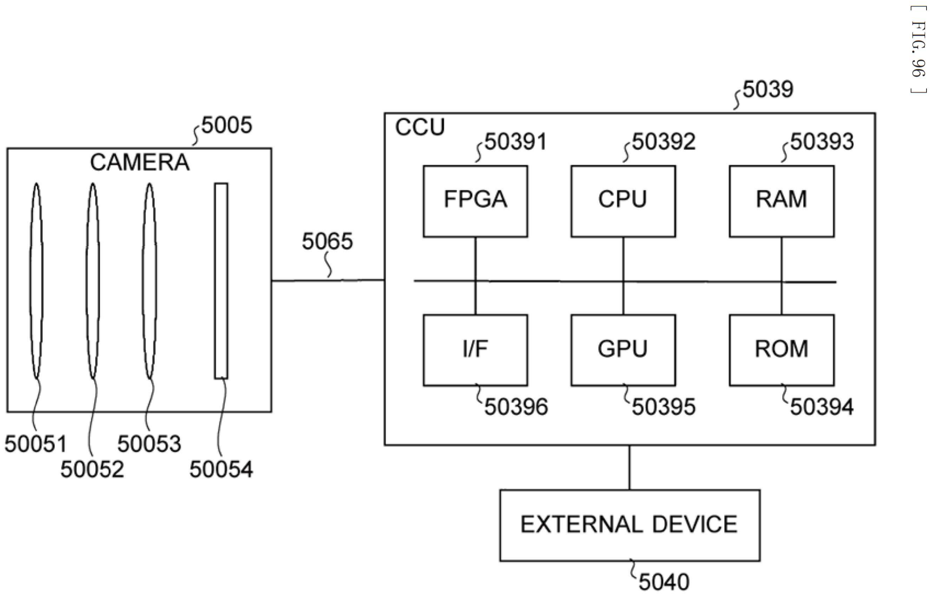

An example of the endoscope system will be described using FIGS. 95 and 96. FIG. 95 is a diagram illustrating an example of a schematic configuration of an endoscope system 5000 to which the technology according to the present disclosure is applicable. FIG. 96 is a diagram illustrating an example of a configuration of an endoscope 5001 and a camera control unit (CCU) 5039. FIG. 95 illustrates a situation where an operator (for example, a doctor) 5067 who is a participant of an operation performs the operation on a patient 5071 on a patient bed 5069 using the endoscope system 5000. As illustrated in FIG. 95, the endoscope system 5000 includes the endoscope 5001 that is a medical imaging device, the CCU 5039, a light source device 5043, a recording device 5053, an output device 5055, and a support device 5027 for supporting the endoscope 5001.

In endoscopic surgery, insertion assisting tools called trocars 5025 are punctured into the patient 5071. Then, a scope 5003 connected to the endoscope 5001 and surgical tools 5021 are inserted into a body of the patient 5071 through the trocars 5025. The surgical tools 5021 include: an energy device such as an electric scalpel; and forceps, for example.

A surgical image that is a medical image in which the inside of the body of the patient 5071 is captured by the endoscope 5001 is displayed on a display device 5041. The operator 5067 performs a procedure on a surgical target using the surgical tools 5021 while viewing the surgical image displayed on the display device 5041. The medical image is not limited to the surgical image, and may be a diagnostic image captured during diagnosis.

[Endoscope]

The endoscope 5001 is an imaging section for capturing the inside of the body of the patient 5071, and is, for example, as illustrated in FIG. 96, a camera including a condensing optical system 50051 for condensing incident light, a zooming optical system 50052 capable of optical zooming by changing a focal length of the imaging section, a focusing optical system 50053 capable of focus adjustment by changing the focal length of the imaging section, and a light receiving sensor 50054. The endoscope 5001 condenses the light through the connected scope 5003 on the light receiving sensor 50054 to generate a pixel signal, and outputs the pixel signal through a transmission system to the CCU 5039. The scope 5003 is an insertion part that includes an objective lens at a distal end and guides the light from the connected light source device 5043 into the body of the patient 5071. The scope 5003 is, for example, a rigid scope for a rigid endoscope and a flexible scope for a flexible endoscope. The scope 5003 may be a direct viewing scope or an oblique viewing scope. The pixel signal only needs to be a signal based on a signal output from a pixel, and is, for example, a raw signal or an image signal. The transmission system connecting the endoscope 5001 to the CCU 5039 may include a memory, and the memory may store parameters related to the endoscope 5001 and the CCU 5039. The memory may be disposed at a connection portion of the transmission system or on a cable. For example, the memory of the transmission system may store the parameters before shipment of the endoscope 5001 or the parameters changed when current is applied, and an operation of the endoscope may be changed based on the parameters read from the memory. A set of the camera and the transmission system may be referred to as an endoscope. The light receiving sensor 50054 is a sensor for converting the received light into the pixel signal, and is, for example, a complementary metal-oxide-semiconductor (CMOS) imaging sensor. The light receiving sensor 50054 is preferably an imaging sensor having a Bayer array capable of color imaging. The light receiving sensor 50054 is also preferably an imaging sensor having a number of pixels corresponding to a resolution of, for example, 4K (3840 horizontal pixels × 2160 vertical pixels), 8K (7680 horizontal pixels × 4320 vertical pixels), or square 4K (3840 or more horizontal pixels × 3840 or more vertical pixels). The light receiving sensor 50054 may be one sensor chip, or a plurality of sensor chips. For example, a prism may be provided to separate the incident light into predetermined wavelength bands, and the wavelength bands may be imaged by different light receiving sensors. A plurality of light receiving sensors may be provided for stereoscopic viewing. The light receiving sensor 50054 may be a sensor having a chip structure including an arithmetic processing circuit for image processing, or may be a sensor for time of flight (ToF). The transmission system is, for example, an optical fiber cable system or a wireless transmission system. The wireless transmission only needs to be capable of transmitting the pixel signal generated by the endoscope 5001, and, for example, the endoscope 5001 may be wirelessly connected to the CCU 5039, or the endoscope 5001 may be connected to the CCU 5039 via a base station in an operating room. At this time, the endoscope 5001 may transmit not only the pixel signal, but also simultaneously information (for example, a processing priority of the pixel signal and/or a synchronization signal) related to the pixel signal. In the endoscope, the scope may be integrated with the camera, and the light receiving sensor may be provided at the distal end of the scope.

[Camera control unit (CCU)]

The CCU 5039 is a control device for controlling the endoscope 5001 and the light source device 5043 connected to the CCU 5039 in an integrated manner, and is, for example, as illustrated in FIG. 96, an image processing device including a field-programmable gate array (FPGA) 50391, a central processing unit (CPU) 50392, a random access memory 50393, a read-only memory (ROM) 50394, a graphics processing unit (GPU) 50395, and an interface (I/F) 50396. The CCU 5039 may control the display device 5041, the recording device 5053, and the output device 5055 connected to the CCU 5039 in an integrated manner. The CCU 5039 controls, for example, irradiation timing, irradiation intensity, and a type of an irradiation light source of the light source device 5043. The CCU 5039 also performs image processing, such as development processing (for example, demosaic processing) and correction processing, on the pixel signal output from the endoscope 5001, and outputs the processed image signal (for example, an image) to an external device such as the display device 5041. The CCU 5039 also transmits a control signal to the endoscope 5001 to control driving of the endoscope 5001. The control signal is information on an imaging condition such as a magnification or the focal length of the imaging section. The CCU 5039 may have a function to down-convert the image, and may be configured to be capable of simultaneously outputting a higher-resolution (for example, 4K) image to the display device 5041 and a lower-resolution (for example, high-definition (HD)) image to the recording device 5053.

The CCU 5039 may be connected to external equipment (such as a recording device, a display device, an output device, and a support device) via an IP converter for converting the signal into a predetermined communication protocol (such as the Internet Protocol (IP)). The connection between the IP converter and the external equipment may be established using a wired network, or a part or the whole of the network may be established using a wireless network. For example, the IP converter on the CCU 5039 side may have a wireless communication function, and may transmit the received image to an IP switcher or an output side IP converter via a wireless communication network, such as the fifth-generation mobile communication system (5G) or the sixth-generation mobile communication system (6G).

[Light source device]

The light source device 5043 is a device capable of emitting the light having predetermined wavelength bands, and includes, for example, a plurality of light sources and a light source optical system for guiding the light of the light sources. The light sources are, for example, xenon lamps, light-emitting diode (LED) light sources, or laser diode (LD) light sources. The light source device 5043 includes, for example, the LED light sources corresponding to three respective primary colors of red (R), green (G), and blue (B), and controls output intensity and output timing of each of the light sources to emit white light. The light source device 5043 may include a light source capable of emitting special light used for special light observation, in addition to the light sources for emitting normal light for normal light observation. The special light is light having a predetermined wavelength band different from that of the normal light being light for the normal light observation, and is, for example, near-infrared light (light having a wavelength of 760 nm or longer), infrared light, blue light, or ultraviolet light. The normal light is, for example, the white light or green light. In narrow band imaging that is a kind of special light observation, blue light and green light are alternately emitted, and thus the narrow band imaging can image a predetermined tissue such as a blood vessel in a mucosal surface at high contrast using wavelength dependence of light absorption in the tissue of the body. In fluorescence observation that is a kind of special light observation, excitation light is emitted for exciting an agent injected into the tissue of the body, and fluorescence emitted by the tissue of the body or the agent as a label is received to obtain a fluorescent image, and thus the fluorescence observation can facilitate the operator to view, for example, the tissue of the body that is difficult to be viewed by the operator with the normal light. For example, in fluorescence observation using the infrared light, the infrared light having an excitation wavelength band is emitted to an agent, such as indocyanine green (ICG), injected into the tissue of the body, and the fluorescence light from the agent is received, whereby the fluorescence observation can facilitate viewing of a structure and an affected part of the tissue of the body. In the fluorescence observation, an agent (such as 5-aminolevulinic acid (5-ALA)) may be used that emits fluorescence in a red wavelength band by being excited by the special light in a blue wavelength band. The type of the irradiation light of the light source device 5043 is set by control of the CCU 5039. The CCU 5039 may have a mode of controlling the light source device 5043 and the endoscope 5001 to alternately perform the normal light observation and the special light observation. At this time, information based on a pixel signal obtained by the special light observation is preferably superimposed on a pixel signal obtained by the normal light observation. The special light observation may be an infrared light observation to observe a site inside the surface of an organ and a multi-spectrum observation utilizing hyperspectral spectroscopy. A photodynamic therapy may be incorporated.

[Recording device]

The recording device 5053 is a device for recording the pixel signal (for example, an image) acquired from the CCU 5039, and is, for example, a recorder. The recording device 5053 records an image acquired from the CCU 5039 in a hard disk drive (HDD), a Super Density Disc (SDD), and/or an optical disc. The recording device 5053 may be connected to a network in a hospital to be accessible from equipment outside the operating room. The recording device 5053 may have a down-convert function or an up-convert function.

[Display device]

The display device 5041 is a device capable of displaying the image, and is, for example, a display monitor. The display device 5041 displays a display image based on the pixel signal acquired from the CCU 5039. The display device 5041 may include a camera and a microphone to function as an input device that allows instruction input through gaze recognition, voice recognition, and gesture.

[Output device]

The output device 5055 is a device for outputting the information acquired from the CCU 5039, and is, for example, a printer. The output device 5055 prints, for example, a print image based on the pixel signal acquired from the CCU 5039 on a sheet of paper.

[Support device]

The support device 5027 is an articulated arm including a base 5029 including an arm control device 5045, an arm 5031 extending from the base 5029, and a holding part 5032 mounted at a distal end of the arm 5031. The arm control device 5045 includes a processor such as a CPU, and operates according to a predetermined computer program to control driving of the arm 5031. The support device 5027 uses the arm control device 5045 to control parameters including, for example, lengths of links 5035 constituting the arm 5031 and rotation angles and torque of joints 5033 so as to control, for example, the position and attitude of the endoscope 5001 held by the holding part 5032. This control can change the position or attitude of the endoscope 5001 to a desired position or attitude, makes it possible to insert the scope 5003 into the patient 5071, and can change the observed area in the body. The support device 5027 functions as an endoscope support arm for supporting the endoscope 5001 during the operation. Thus, the support device 5027 can play a role of a scopist who is an assistant holding the endoscope 5001. The support device 5027 may be a device for holding a microscope device 5301 to be described later, and can be called a medical support arm. The support device 5027 may be controlled using an autonomous control method by the arm control device 5045, or may be controlled using a control method in which the arm control device 5045 performs the control based on input of a user. The control method may be, for example, a master-slave method in which the support device 5027 serving as a slave device (replica device) that is a patient cart is controlled based on a movement of a master device (primary device) that is an operator console at a hand of the user. The support device 5027 may be remotely controllable from outside the operating room.

The example of the endoscope system 5000 to which the technology according to the present disclosure is applicable has been described above. For example, the technology according to the present disclosure may be applied to a microscope system.

[Microscope system]

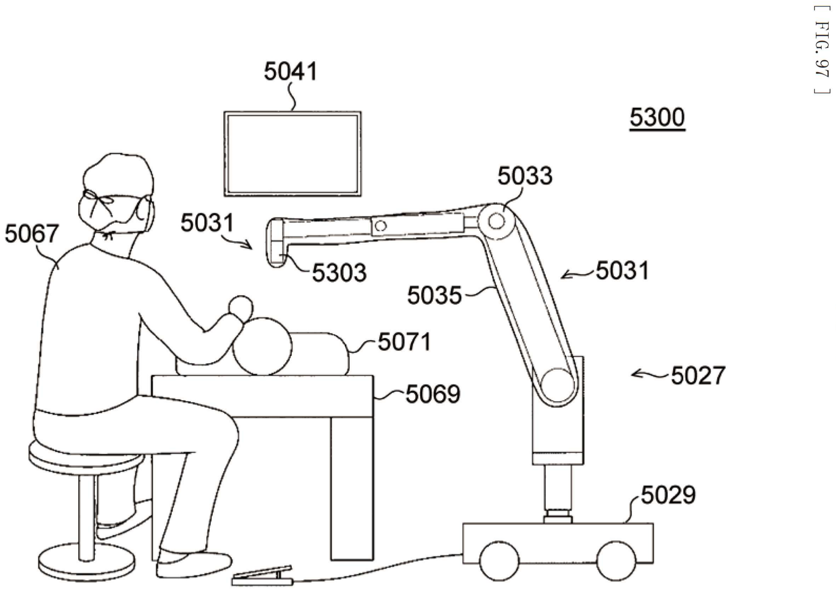

FIG. 97 is a diagram illustrating an example of a schematic configuration of a microscopic surgery system to which the technology according to the present disclosure is applicable. In the following description, the same components as those of the endoscope system 5000 will be denoted by the same reference numerals, and the description thereof will not be repeated.

FIG. 97 schematically illustrates a situation where the operator 5067 performs an operation on the patient 5071 on the patient bed 5069 using a microscopic surgery system 5300. For the sake of simplicity, FIG. 97 does not illustrate a cart 5037 among the components of the microscopic surgery system 5300, and illustrates the microscope device 5301 instead of the endoscope 5001 in a simplified manner. The microscope device 5301 may refer to a microscope 5303 provided at the distal end of the links 5035, or may refer to the overall configuration including the microscope 5303 and the support device 5027.

As illustrated in FIG. 97, during the operation, the microscopic surgery system 5300 is used to display an image of a surgical site captured by the microscope device 5301 in a magnified manner on the display device 5041 installed in the operating room. The display device 5041 is installed in a position facing the operator 5067, and the operator 5067 performs various procedures, such as excision of an affected part, on the surgical site while observing the state of the surgical site using the image displayed on the display device 5041. The microscopic surgery system is used in, for example, ophthalmic operation and neurosurgical operation.

The respective examples of the endoscope system 5000 and the microscopic surgery system 5300 to which the technology according to the present disclosure is applicable have been described above. Systems to which the technology according to the present disclosure is applicable are not limited to such examples. For example, the support device 5027 can support, at the distal end thereof, another observation device or another surgical tool instead of the endoscope 5001 or the microscope 5303. Examples of the other applicable observation device include forceps, tweezers, a pneumoperitoneum tube for pneumoperitoneum, and an energy treatment tool for incising a tissue or sealing a blood vessel by cauterization. By using the support device to support the observation device or the surgical tool described above, the position thereof can be more stably fixed and the load of the medical staff can be lower than in a case where the medical staff manually supports the observation device or the surgical tool. The technology according to the present disclosure may be applied to a support device for supporting such a component other than the microscope.

The technology according to the present disclosure is suitably applicable to the camera 5005 among the configurations described above. In particular, the zoom lens of the present disclosure is suitably applicable to at least some of the optical systems of the condensing optical system 50051, the zooming optical system 50052, and the focusing optical system 50053 in the camera 5005.

<6. Other Embodiments>

The technology according to the present disclosure is not limited to the descriptions of an embodiment and examples described above, and may be modified and worked in a wide variety of ways.

For example, shapes and numerical values of the respective parts exemplified in the foregoing embodiment and examples are each a mere example of implementation of the present technology, and the technical scope of the present technology should not be construed as being limited by these examples.

In addition, for examples, a configuration may be employed that includes different number of lenses from the number of lenses exhibited in the foregoing embodiment and examples. Further, a configuration may be employed that further includes a lens having no substantial refractive power. Here, the lens having no substantial refractive power refers to a lens having no such refractive power as to theoretically influence the optical performance to be achieved by the optical system; for example, the lens having no substantial refractive power is a planar lens.

For example, the present technology may also have the following configurations.

According to the present technology of the following configurations, respective pieces of refractive power of the lens groups are appropriately arranged in the positive lead type configuration to have a high variable magnification ratio while suppressing aberration variation that occurs upon zooming and thus to enable achievement of a smaller size and higher image quality. This makes it possible to provide a zoom lens that has a high variable magnification ratio and that enables achievement of a smaller size and higher image quality, as well as an imaging apparatus including such a zoom lens.

[1] A zoom lens including:

a plurality of lens groups; and
an aperture stop, in which
the plurality of lens groups includes, in order from a side of an object toward a side of an image plane,

a first lens group having positive refractive power,
a second lens group having negative refractive power,
a third lens group having positive refractive power, and
a fourth lens group having negative refractive power,

the second lens group is immovable with respect to the image plane upon zooming, and
the following conditional expressions are satisfied:

$$-5 \leq f2/f3 \leq -0.8 \ ...... \ (1)$$

$$-22 \leq f4/fw \leq -1.25 \ ...... \ (2)$$

where

fw denotes a focal distance of a total system at a wide-angle end upon infinity focusing,
f2 denotes a focal distance of the second lens group,
f3 denotes a focal distance of the third lens group, and
f4 denotes a focal distance of the fourth lens group.

[2] The zoom lens according to [1], in which the following conditional expression is further satisfied:

$$0 < f1/ft \leq 5 \ ...... \ (3)$$

where

f1 denotes a focal distance of the first lens group, and
ft denotes a focal distance of the total system at a telephoto end upon infinity focusing.

[3] The zoom lens according to [1] or [2], in which

the plurality of lens groups includes at least one movable lens group on a side closer to the image plane than the aperture stop, and
a movable lens group having strongest negative refractive power, among the at least one movable lens group, is moved as a focus group in an optical axis direction, upon focusing from infinity to a finite distance.

[4] The zoom lens according to [3], in which the following conditional expression is further satisfied:

$$-3 \leq (1-\beta n^2)/Fnot \leq -0.1 \ ...... \ (4)$$

where

βn denotes lateral magnification of the movable lens group having the strongest negative refractive power, and Fnot denotes an F-number at the telephoto end upon infinity focusing.

[5] The zoom lens according to [3] or [4], in which the movable lens group having the strongest negative refractive power includes a positive lens that satisfies the following conditional expression:

$$3.2 \le Nnp + 0.1*vnp \le 4.5 \;......\; (5)$$

where

Nnp denotes a refractive index of the positive lens in the movable lens group with respect to a d-line, and vnp denotes Abbe number of the positive lens in the movable lens group with respect to the d-line.

[6] The zoom lens according to any one of [1] to [5], in which

the third lens group includes at least one positive lens, and
the following conditional expression is further satisfied:

$$1.6 \le Np3 \;......\; (6)$$

where
Np3 denotes an average value of refractive indexes of the at least one positive lens in the third lens group.

[7] The zoom lens according to any one of [1] to [6], in which the aperture stop moves integrally with the third lens group upon zooming.

[8] The zoom lens according to any one of [1] to [7], in which a lens group disposed on a side closer to the image plane than the third lens group, among the plurality of lens groups, is moved as a focus group in an optical axis direction, upon focusing from infinity to a finite distance.

[9] The zoom lens according to any one of [1] to [8], in which the fourth lens group is moved as a focus group in an optical axis direction, upon focusing from infinity to a finite distance.

[10] The zoom lens according to any one of [1] to [9], in which a final lens group, among the plurality of lens groups, includes a positive lens and a negative lens in order from the side of the object toward the side of the image plane.

[11] The zoom lens according to any one of [3] to [5], in which the third lens group and the movable lens group having the strongest negative refractive power move integrally upon zooming, the movable lens group having the strongest negative refractive power being disposed on the side closer to the image plane than the aperture stop.

[12] The zoom lens according to any one of [1] to [11], in which a lens group on a side closer to the object than the final lens group, among the plurality of lens groups, includes a positive lens having an aspherical shape in which positive refractive power becomes weaker in a peripheral part than in a center part.

[13] The zoom lens according to any one of [1] to [12], in which the final lens group, among the plurality of lens groups, includes a negative lens having an aspherical shape in which negative refractive power becomes weaker in a peripheral part than in a center part.

[14] The zoom lens according to [any one of [1] to [13] in which, in the fourth lens group, a surface on a side closest to the object has a convex shape with respect to the side of the image plane.

[15] An imaging apparatus including:

a zoom lens; and
an imaging element that outputs an imaging signal corresponding to an optical image formed by the zoom lens, the zoom lens including

a plurality of lens groups, and
an aperture stop, in which
the plurality of lens groups includes, in order from a side of an object toward a side of an image plane,

a first lens group having positive refractive power,
a second lens group having negative refractive power,

a third lens group having positive refractive power, and
a fourth lens group having negative refractive power,

the second lens group is immovable with respect to the image plane upon zooming, and
the following conditional expressions are satisfied:

$$-5 \leq f2/f3 \leq -0.8 \ ...... \ (1)$$

$$-22 \leq f4/fw \leq -1.25 \ ...... \ (2)$$

where

fw denotes a focal distance of a total system at a wide-angle end upon infinity focusing,
f2 denotes a focal distance of the second lens group,
f3 denotes a focal distance of the third lens group, and
f4 denotes a focal distance of the fourth lens group.

[16] The zoom lens according to any one of [1] to [14], further including a lens having no substantial refractive power.
[17] The imaging apparatus according to [15], in which the zoom lens further includes a lens having no substantial refractive power.
The present application claims the benefit of Japanese Priority Patent Application JP 2023-087079 filed with the Japan Patent Office on May 26, 2023, the entire contents of which are incorporated herein by reference.
It should be understood by those skilled in the art that various modifications, combinations, sub-combinations, and alterations may occur depending on design requirements and other factors insofar as they are within the scope of the appended claims or the equivalents thereof.

**Claims**

1. A zoom lens comprising:

   a plurality of lens groups; and
   an aperture stop, wherein
   the plurality of lens groups includes, in order from a side of an object toward a side of an image plane,

   a first lens group having positive refractive power,
   a second lens group having negative refractive power,
   a third lens group having positive refractive power, and
   a fourth lens group having negative refractive power,

   the second lens group is immovable with respect to the image plane upon zooming, and
   the following conditional expressions are satisfied:

$$-5 \leq f2/f3 \leq -0.8 \ ...... \ (1)$$

$$-22 \leq f4/fw \leq -1.25 \ ...... \ (2)$$

   where

   fw denotes a focal distance of a total system at a wide-angle end upon infinity focusing,
   f2 denotes a focal distance of the second lens group,
   f3 denotes a focal distance of the third lens group, and
   f4 denotes a focal distance of the fourth lens group.

2. The zoom lens according to claim 1, wherein the following conditional expression is further satisfied:

$$0 < f1/ft \leq 5 \ \text{......} \ (3)$$

where

f1 denotes a focal distance of the first lens group, and
ft denotes a focal distance of the total system at a telephoto end upon infinity focusing.

3. The zoom lens according to claim 1, wherein

the plurality of lens groups includes at least one movable lens group on a side closer to the image plane than the aperture stop, and
a movable lens group having strongest negative refractive power, among the at least one movable lens group, is moved as a focus group in an optical axis direction, upon focusing from infinity to a finite distance.

4. The zoom lens according to claim 3, wherein the following conditional expression is further satisfied:

$$-3 \leq (1-\beta n^2)/\text{Fnot} \leq -0.1 \ \text{......} \ (4)$$

where

βn denotes lateral magnification of the movable lens group having the strongest negative refractive power, and
Fnot denotes an F-number at a telephoto end upon infinity focusing.

5. The zoom lens according to claim 3, wherein the movable lens group having the strongest negative refractive power includes a positive lens that satisfies the following conditional expression:

$$3.2 \leq \text{Nnp} + 0.1 * \text{vnp} \leq 4.5 \ \text{......} \ (5)$$

where

Nnp denotes a refractive index of the positive lens in the movable lens group with respect to a d-line, and
vnp denotes Abbe number of the positive lens in the movable lens group with respect to the d-line.

6. The zoom lens according to claim 1, wherein

the third lens group includes at least one positive lens, and
the following conditional expression is further satisfied:

$$1.6 \leq \text{Np3} \ \text{......} \ (6)$$

where
Np3 denotes an average value of refractive indexes of the at least one positive lens in the third lens group.

7. The zoom lens according to claim 1, wherein the aperture stop moves integrally with the third lens group upon zooming.

8. The zoom lens according to claim 1, wherein a lens group disposed on a side closer to the image plane than the third lens group, among the plurality of lens groups, is moved as a focus group in an optical axis direction, upon focusing from infinity to a finite distance.

9. The zoom lens according to claim 1, wherein the fourth lens group is moved as a focus group in an optical axis direction, upon focusing from infinity to a finite distance.

10. The zoom lens according to claim 1, wherein a final lens group, among the plurality of lens groups, includes a positive lens and a negative lens in order from the side of the object toward the side of the image plane.

11. The zoom lens according to claim 3, wherein the third lens group and the movable lens group having the strongest negative refractive power move integrally upon zooming, the movable lens group having the strongest negative refractive power being disposed on the side closer to the image plane than the aperture stop.

12. The zoom lens according to claim 1, wherein a lens group on a side closer to the object than a final lens group, among the plurality of lens groups, includes a positive lens having an aspherical shape in which positive refractive power becomes weaker in a peripheral part than in a center part.

13. The zoom lens according to claim 1, wherein a final lens group, among the plurality of lens groups, includes a negative lens having an aspherical shape in which negative refractive power becomes weaker in a peripheral part than in a center part.

14. The zoom lens according to claim 1, wherein, in the fourth lens group, a surface on a side closest to the object has a convex shape with respect to the side of the image plane.

15. An imaging apparatus comprising:

   a zoom lens; and
   an imaging element that outputs an imaging signal corresponding to an optical image formed by the zoom lens,
   the zoom lens including

      a plurality of lens groups, and
      an aperture stop, wherein
      the plurality of lens groups includes, in order from a side of an object toward a side of an image plane,

         a first lens group having positive refractive power,
         a second lens group having negative refractive power,
         a third lens group having positive refractive power, and
         a fourth lens group having negative refractive power,

      the second lens group is immovable with respect to the image plane upon zooming, and
      the following conditional expressions are satisfied:

$$-5 \leq f2/f3 \leq -0.8 \ ...... \ (1)$$

$$-22 \leq f4/fw \leq -1.25 \ ...... \ (2)$$

      where

         fw denotes a focal distance of a total system at a wide-angle end upon infinity focusing,
         f2 denotes a focal distance of the second lens group,
         f3 denotes a focal distance of the third lens group, and
         f4 denotes a focal distance of the fourth lens group.

**Amended claims under Art. 19.1 PCT**

1. A zoom lens comprising:

   a plurality of lens groups; and
   an aperture stop, wherein
   the plurality of lens groups includes, in order from a side of an object toward a side of an image plane,

      a first lens group having positive refractive power,
      a second lens group having negative refractive power,
      a third lens group having positive refractive power, and including at least one positive lens, and
      a fourth lens group having negative refractive power, and having a surface on a side closest to the object, the surface having a concave shape with respect to the side of the object,

the second lens group is immovable with respect to the image plane upon zooming,
the plurality of lens groups includes at least one movable lens group on a side closer to the image plane than the aperture stop,
the following conditional expressions are satisfied, and
a movable lens group having strongest negative refractive power, among the at least one movable lens group, includes a positive lens that satisfies the following conditional expression (5):

$$-5 \leq f2/f3 \leq -0.8 \ ...... \ (1)$$

$$-22 \leq f4/fw \leq -1.25 \ ...... \ (2)$$

$$3.2 \leq Nnp + 0.1*vnp \leq 4.5 \ ...... \ (5)$$

$$1.6 \leq Np3 \ ...... \ (6)$$

where

fw denotes a focal distance of a total system at a wide-angle end upon infinity focusing,
f2 denotes a focal distance of the second lens group,
f3 denotes a focal distance of the third lens group,
f4 denotes a focal distance of the fourth lens group,
Nnp denotes a refractive index of the positive lens in the movable lens group with respect to a d-line,
vnp denotes Abbe number of the positive lens in the movable lens group with respect to the d-line, and
Np3 denotes an average value of refractive indexes of the at least one positive lens in the third lens group.

2. The zoom lens according to claim 1, wherein the following conditional expression is further satisfied:

$$0 < f1/ft \leq 5 \ ...... \ (3)$$

where

f1 denotes a focal distance of the first lens group, and
ft denotes a focal distance of the total system at a telephoto end upon infinity focusing.

3. The zoom lens according to claim 1, wherein the movable lens group having the strongest negative refractive power, among the at least one movable lens group, is moved as a focus group in an optical axis direction, upon focusing from infinity to a finite distance.

4. The zoom lens according to claim 1, wherein the following conditional expression is further satisfied:

$$-3 \leq (1-\beta n^2)/Fnot \leq -0.1 \ ...... \ (4)$$

where

$\beta n$ denotes lateral magnification of the movable lens group having the strongest negative refractive power, and
Fnot denotes an F-number at a telephoto end upon infinity focusing.

5. The zoom lens according to claim 1, wherein the aperture stop moves integrally with the third lens group upon zooming.

6. The zoom lens according to claim 1, wherein a lens group disposed on a side closer to the image plane than the third lens group, among the plurality of lens groups, is moved as a focus group in an optical axis direction, upon focusing from infinity to a finite distance.

7. The zoom lens according to claim 1, wherein the fourth lens group is moved as a focus group in an optical axis direction, upon focusing from infinity to a finite distance.

8. The zoom lens according to claim 1, wherein a final lens group, among the plurality of lens groups, includes a positive lens and a negative lens in order from the side of the object toward the side of the image plane.

9. The zoom lens according to claim 1, wherein the third lens group and the movable lens group having the strongest negative refractive power move integrally upon zooming, the movable lens group having the strongest negative refractive power being disposed on the side closer to the image plane than the aperture stop.

10. The zoom lens according to claim 1, wherein a lens group on a side closer to the object than a final lens group, among the plurality of lens groups, includes a positive lens having an aspherical shape in which positive refractive power becomes weaker in a peripheral part than in a center part.

11. The zoom lens according to claim 1, wherein a final lens group, among the plurality of lens groups, includes a negative lens having an aspherical shape in which negative refractive power becomes weaker in a peripheral part than in a center part.

12. An imaging apparatus comprising:

a zoom lens; and
an imaging element that outputs an imaging signal corresponding to an optical image formed by the zoom lens, the zoom lens including

a plurality of lens groups, and
an aperture stop, wherein
the plurality of lens groups includes, in order from a side of an object toward a side of an image plane,

a first lens group having positive refractive power,
a second lens group having negative refractive power,
a third lens group having positive refractive power, and including at least one positive lens, and
a fourth lens group having negative refractive power, and having a surface on a side closest to the object, the surface having a concave shape with respect to the side of the object,

the second lens group is immovable with respect to the image plane upon zooming,
the plurality of lens groups includes at least one movable lens group on a side closer to the image plane than the aperture stop,
the following conditional expressions are satisfied, and
a movable lens group having strongest negative refractive power, among the at least one movable lens group, includes a positive lens that satisfies the following conditional expression (5):

$$-5 \le f2/f3 \le -0.8 \dots (1)$$

$$-22 \le f4/fw \le -1.25 \dots (2)$$

$$3.2 \le Nnp + 0.1*vnp \le 4.5 \dots (5)$$

$$1.6 \le Np3 \dots (6)$$

where

fw denotes a focal distance of a total system at a wide-angle end upon infinity focusing,
f2 denotes a focal distance of the second lens group,
f3 denotes a focal distance of the third lens group,
f4 denotes a focal distance of the fourth lens group,

Nnp denotes a refractive index of the positive lens in the movable lens group with respect to a d-line, vnp denotes Abbe number of the positive lens in the movable lens group with respect to the d-line, and Np3 denotes an average value of refractive indexes of the at least one positive lens in the third lens group.

**13.**

**14.**

**15.**

[ FIG. 1 ]

[ FIG. 2 ]

[ FIG. 3 ]

[ FIG. 4 ]

EXAMPLE 1 · Tele
(UPON INFINITY FOCUSING)

656.2725 nm
587.5618 nm
435.8400 nm

SPHERICAL ABERRATION

ASTIGMATISM

DISTORTION

IMAGE HEIGHT

IMAGE HEIGHT

[ FIG. 5 ]

EXAMPLE 1 · Wide
(UPON SHORT-DISTANCE FOCUSING)

656. 2725 nm
587. 5618 nm
435. 8400 nm

SPHERICAL ABERRATION

ASTIGMATISM

DISTORTION

IMAGE HEIGHT

IMAGE HEIGHT

[ FIG. 6 ]

EP 4 711 832 A1

EXAMPLE 1・Mid
(UPON SHORT-DISTANCE FOCUSING)

- - - - - - - 656.2725 nm
——————— 587.5618 nm
- ・ - ・ - ・ 435.8400 nm

SPHERICAL ABERRATION          ASTIGMATISM          DISTORTION

IMAGE HEIGHT          IMAGE HEIGHT

1.00          21.63          21.63

0.75          16.22          16.22

0.50          10.82          10.82

0.25          5.41          5.41

S          T

-0.80    0.0    0.80          -0.80    0.0    0.80          -10.0    0.0    10.0
-0.40    0.40    (mm)          -0.40    0.40    (mm)          -5.0    5.0    (%)

[ FIG. 7 ]

[ FIG. 8 ]

EXAMPLE 1 · Wide(UPON INFINITY FOCUSING)

[ FIG. 9 ]

<u>EXAMPLE 1 · Mid(UPON INFINITY FOCUSING)</u>

[ FIG. 10 ]

EXAMPLE 1・Tele(UPON INFINITY FOCUSING)

[ FIG. 11 ]

EXAMPLE 1・Wide(UPON SHORT-DISTANCE FOCUSING)

[ FIG. 12 ]

<u>EXAMPLE 1 · Mid(UPON SHORT-DISTANCE FOCUSING)</u>

| | 656. 2725 nm |
| | 587. 5618 nm |
| | 435. 8400 nm |

[ FIG. 13 ]

EXAMPLE 1・Tele(UPON SHORT-DISTANCE FOCUSING)

|  | | |
| --- | --- | --- |
| - - - - - - - - - | 656. 2725 nm | |
| ——————— | 587. 5618 nm | |
| - · - · - · - · - | 435. 8400 nm | |

[ FIG. 14 ]

[ FIG. 15 ]

EP 4 711 832 A1

EXAMPLE 2・Wide
(UPON INFINITY FOCUSING)

------- 656.2725 nm
——— 587.5618 nm
—·—·— 435.8400 nm

SPHERICAL ABERRATION · ASTIGMATISM · DISTORTION

[ FIG. 16 ]

[ FIG. 17 ]

EP 4 711 832 A1

EXAMPLE 2 · Tele
(UPON INFINITY FOCUSING)

- - - - - - - 656.2725 nm
———— 587.5618 nm
- · - · - 435.8400 nm

SPHERICAL ABERRATION   ASTIGMATISM   DISTORTION

IMAGE HEIGHT   IMAGE HEIGHT

1.00   21.63   21.63

S   T

0.75   16.22   16.22

0.50   10.82   10.82

0.25   5.41   5.41

-0.80   0.0   0.80   -0.80   0.0   0.80   -10.0   0.0   10.0
-0.40   0.40   (mm)   -0.40   0.40   (mm)   -5.0   5.0   (%)

[ FIG. 18 ]

EP 4 711 832 A1

72

EXAMPLE 2 · Wide
(UPON SHORT-DISTANCE FOCUSING)

- - - - - - 656. 2725 nm
———— 587. 5618 nm
- · - · - 435. 8400 nm

SPHERICAL ABERRATION          ASTIGMATISM          DISTORTION

IMAGE HEIGHT          IMAGE HEIGHT

[ FIG. 19 ]

[ FIG. 20 ]

EP 4 711 832 A1

EXAMPLE 2・Tele
(UPON SHORT-DISTANCE FOCUSING)

------- 656.2725 nm
——— 587.5618 nm
—·—·— 435.8400 nm

SPHERICAL ABERRATION

ASTIGMATISM

DISTORTION

IMAGE HEIGHT

IMAGE HEIGHT

1.00

0.75

0.50

0.25

21.63

16.22

10.82

5.41

S          T

21.63

16.22

10.82

5.41

-0.80    0.0    0.80
   -0.40    0.40    (mm)

-0.80    0.0    0.80
   -0.40    0.40    (mm)

-10.0    0.0    10.0
   -5.0    5.0    (%)

[ FIG. 21 ]

EXAMPLE 2・Wide(UPON INFINITY FOCUSING)

[ FIG. 22 ]

EXAMPLE 2 · Mid(UPON INFINITY FOCUSING)

TANGENTIAL    1.00 RELATIVE    SAGITTAL
              FIELD HEIGHT
              (9.614°)

0.90 RELATIVE
FIELD HEIGHT
(8.782°)

0.70 RELATIVE
FIELD HEIGHT
(6.997°)

0.50 RELATIVE
FIELD HEIGHT
(5.084°)

0.00 RELATIVE
FIELD HEIGHT
(0.000°)

- - - - - - - - - - 656.2725 nm
————————————— 587.5618 nm
- · - · - · - · - 435.8400 nm

[ FIG. 23 ]

**EXAMPLE 2·Tele(UPON INFINITY FOCUSING)**

| | | |
|---|---|---|
| TANGENTIAL | 1.00 RELATIVE FIELD HEIGHT (5.980°) | SAGITTAL |
| | 0.90 RELATIVE FIELD HEIGHT (5.461°) | |
| | 0.70 RELATIVE FIELD HEIGHT (4.348°) | |
| | 0.50 RELATIVE FIELD HEIGHT (3.157°) | |
| | 0.00 RELATIVE FIELD HEIGHT (0.000°) | |

- - - - - - - - - - 656.2725 nm
————————— 587.5618 nm
- · - · - · - 435.8400 nm

[ FIG. 24 ]

EXAMPLE 2·Wide(UPON SHORT-DISTANCE FOCUSING)

[ FIG. 25 ]

EXAMPLE 2・Mid(UPON SHORT-DISTANCE FOCUSING)

TANGENTIAL — 1.00 RELATIVE FIELD HEIGHT (9.633°) — SAGITTAL

0.90 RELATIVE FIELD HEIGHT (8.800°)

0.70 RELATIVE FIELD HEIGHT (7.012°)

0.50 RELATIVE FIELD HEIGHT (5.095°)

0.00 RELATIVE FIELD HEIGHT (0.000°)

------------- 656.2725 nm
————————— 587.5618 nm
—·—·—·—· 435.8400 nm

[ FIG. 26 ]

**EXAMPLE 2・Tele(UPON SHORT-DISTANCE FOCUSING)**

| | | |
|---|---|---|
| - - - - - - - - - - | 656. 2725 nm | |
| ———————— | 587. 5618 nm | |
| - · - · - · - · - · - | 435. 8400 nm | |

[ FIG. 27 ]

[ FIG. 28 ]

EXAMPLE 3 · Wide
(UPON INFINITY FOCUSING)

SPHERICAL ABERRATION — ASTIGMATISM — DISTORTION

656.2725 nm
587.5618 nm
435.8400 nm

EXAMPLE 3・Mid
(UPON INFINITY FOCUSING)

------- 656.2725 nm
——— 587.5618 nm
-·-·- 435.8400 nm

SPHERICAL ABERRATION

ASTIGMATISM

DISTORTION

IMAGE HEIGHT

IMAGE HEIGHT

1.00
0.75
0.50
0.25

21.63
16.22
10.82
5.41

21.63
16.22
10.82
5.41

S    T

-0.80    0.0    0.80
-0.40    0.40    (mm)

-0.80    0.0    0.80
-0.40    0.40    (mm)

-10.0    0.0    10.0
-5.0    5.0    (%)

[ FIG. 29 ]

EP 4 711 832 A1

83

[ FIG. 30 ]

EP 4 711 832 A1

EXAMPLE 3・Tele
(UPON INFINITY FOCUSING)

- - - - - - - 656.2725 nm
————— 587.5618 nm
-・-・- 435.8400 nm

SPHERICAL ABERRATION    ASTIGMATISM    DISTORTION

IMAGE HEIGHT    IMAGE HEIGHT

[ FIG. 31 ]

EXAMPLE 3 · Wide
(UPON SHORT-DISTANCE FOCUSING)

...... 656. 2725 nm
—— 587. 5618 nm
—·— 435. 8400 nm

SPHERICAL ABERRATION

- 1.00
- 0.75
- 0.50
- 0.25

0.80 (mm)
0.40
0.0
-0.40
-0.80

ASTIGMATISM

IMAGE HEIGHT

- 21.63
- 16.22
- 10.82
- 5.41

S
T

0.80 (mm)
0.40
0.0
-0.40
-0.80

DISTORTION

IMAGE HEIGHT

- 21.63
- 16.22
- 10.82
- 5.41

10.00 (%)
5.00
0.0
-5.00
-10.00

[ FIG. 32 ]

EP 4 711 832 A1

EXAMPLE 3・Mid
(UPON SHORT-DISTANCE FOCUSING)

- - - - - - 656.2725 nm
———— 587.5618 nm
-・-・- 435.8400 nm

SPHERICAL ABERRATION          ASTIGMATISM          DISTORTION

IMAGE HEIGHT          IMAGE HEIGHT

1.00          21.63          21.63
0.75          16.22          16.22
0.50          10.82          10.82
0.25          5.41          5.41

S          T

-0.80    0.0    0.80      -0.80    0.0    0.80      -10.0    0.0    10.0
  -0.40    0.40  (mm)        -0.40    0.40  (mm)        -5.0    5.0   (%)

[ FIG. 33 ]

[ FIG. 34 ]

EXAMPLE 3・Wide(UPON INFINITY FOCUSING)

|  |  |  |
| --- | --- | --- |
| - - - - - - - - - - - | 656.2725 nm | |
| ——————— | 587.5618 nm | |
| - · - · - · - · - · - | 435.8400 nm | |

[ FIG. 35 ]

<u>EXAMPLE 3 · Mid(UPON INFINITY FOCUSING)</u>

[ FIG. 36 ]

EXAMPLE 3・Tele(UPON INFINITY FOCUSING)

TANGENTIAL — 1.00 RELATIVE FIELD HEIGHT (5.973°) — SAGITTAL

0.90 RELATIVE FIELD HEIGHT (5.444°)

0.70 RELATIVE FIELD HEIGHT (4.329°)

0.50 RELATIVE FIELD HEIGHT (3.147°)

0.00 RELATIVE FIELD HEIGHT (0.000°)

- - - - - - - - - - 656.2725 nm
———————— 587.5618 nm
- · - · - · - 435.8400 nm

[ FIG. 37 ]

EXAMPLE 3・Wide(UPON SHORT-DISTANCE FOCUSING)

| TANGENTIAL | 1.00 RELATIVE FIELD HEIGHT (22.71°) | SAGITTAL |

0.1 ... 656.2725 nm
587.5618 nm
435.8400 nm

[ FIG. 38 ]

EXAMPLE 3・Mid(UPON SHORT-DISTANCE FOCUSING)

[ FIG. 39 ]

<u>EXAMPLE 3・Tele(UPON SHORT-DISTANCE FOCUSING)</u>

[ FIG. 40 ]

EXAMPLE 4

[ FIG. 41 ]

[ FIG. 42 ]

[ FIG. 43 ]

EP 4 711 832 A1

EXAMPLE 4・Tele
(UPON INFINITY FOCUSING)

- - - - - - - - 656.2725 nm
——————— 587.5618 nm
-・-・-・- 435.8400 nm

SPHERICAL ABERRATION  ASTIGMATISM  DISTORTION

IMAGE HEIGHT  IMAGE HEIGHT

[ FIG. 44 ]

EP 4 711 832 A1

EXAMPLE 4・Wide
(UPON SHORT-DISTANCE FOCUSING)

- - - - - - - 656.2725 nm
————— 587.5618 nm
- · - · - · 435.8400 nm

SPHERICAL ABERRATION  ASTIGMATISM  DISTORTION

IMAGE HEIGHT  IMAGE HEIGHT

[ FIG. 45 ]

[ FIG. 46 ]

EP 4 711 832 A1

EXAMPLE 4·Tele
(UPON SHORT-DISTANCE FOCUSING)

- - - - - - - 656.2725 nm
——————— 587.5618 nm
- · - · - · - 435.8400 nm

SPHERICAL ABERRATION

ASTIGMATISM

DISTORTION

IMAGE HEIGHT

IMAGE HEIGHT

1.00

0.75

0.50

0.25

21.63

16.22

10.82

5.41

21.63

16.22

10.82

5.41

S       T

-0.80    0.0    0.80
   -0.40    0.40    (mm)

-0.80    0.0    0.80
   -0.40    0.40    (mm)

-10.0    0.0    10.0
   -5.0    5.0    (%)

[ FIG. 47 ]

EXAMPLE 4 · Wide (UPON INFINITY FOCUSING)

[ FIG. 48 ]

EXAMPLE 4 · Mid(UPON INFINITY FOCUSING)

[ FIG. 49 ]

EXAMPLE 4・Tele(UPON INFINITY FOCUSING)

[ FIG. 50 ]

**EXAMPLE 4 · Wide (UPON SHORT-DISTANCE FOCUSING)**

| | | |
|---|---|---|
| - - - - - - - - - | 656. 2725 nm | |
| ——————— | 587. 5618 nm | |
| - · - · - · - · - | 435. 8400 nm | |

[ FIG. 51 ]

**EXAMPLE 4 · Mid(UPON SHORT-DISTANCE FOCUSING)**

TANGENTIAL   1.00 RELATIVE   SAGITTAL
0.1          FIELD HEIGHT     0.1
             (10.63°)
-0.1                          -0.1

0.90 RELATIVE
FIELD HEIGHT
(9.702°)
0.1                          0.1
-0.1                          -0.1

0.70 RELATIVE
FIELD HEIGHT
(7.726°)
0.1                          0.1
-0.1                          -0.1

0.50 RELATIVE
FIELD HEIGHT
(5.616°)
0.1                          0.1
-0.1                          -0.1

0.00 RELATIVE
FIELD HEIGHT
(0.000°)
0.1                          0.1
-0.1    (mm)                 -0.1    (mm)

656.2725 nm
587.5618 nm
435.8400 nm

[ FIG. 52 ]

EXAMPLE 4・Tele(UPON SHORT-DISTANCE FOCUSING)

[ FIG. 53 ]

EXAMPLE 5

EP 4 711 832 A1

[ FIG. 54 ]

EXAMPLE 5 · Wide
(UPON INFINITY FOCUSING)

656. 2725 nm
587. 5618 nm
435. 8400 nm

SPHERICAL ABERRATION

ASTIGMATISM

DISTORTION

IMAGE HEIGHT

IMAGE HEIGHT

[ FIG. 55 ]

EP 4 711 832 A1

EXAMPLE 5・Mid
(UPON INFINITY FOCUSING)

- - - - - - - 656.2725 nm
——————— 587.5618 nm
- · - · - · 435.8400 nm

SPHERICAL ABERRATION

ASTIGMATISM

DISTORTION

IMAGE HEIGHT

IMAGE HEIGHT

1.00

0.75

0.50

0.25

-0.80    0.0    0.80
-0.40    0.40    (mm)

S        21.63
         T
         16.22

         10.82

         5.41

-0.80    0.0    0.80
-0.40    0.40    (mm)

21.63

16.22

10.82

5.41

-10.0    0.0    10.0
-5.0    5.0    (%)

[ FIG. 56 ]

EXAMPLE 5 · Tele
(UPON INFINITY FOCUSING)

SPHERICAL ABERRATION

ASTIGMATISM

DISTORTION

656.2725 nm
587.5618 nm
435.8400 nm

[ FIG. 57 ]

[ FIG. 58 ]

[ FIG. 59 ]

EXAMPLE 5 · Tele
(UPON SHORT-DISTANCE FOCUSING)

------ 656.2725 nm
—— 587.5618 nm
— · — 435.8400 nm

SPHERICAL ABERRATION    ASTIGMATISM    DISTORTION

EP 4 711 832 A1

[ FIG. 60 ]

EXAMPLE 5 · Wide(UPON INFINITY FOCUSING)

TANGENTIAL — 1.00 RELATIVE FIELD HEIGHT (18.34°) — SAGITTAL

0.90 RELATIVE FIELD HEIGHT (16.82°)

0.70 RELATIVE FIELD HEIGHT (13.48°)

0.50 RELATIVE FIELD HEIGHT (9.828°)

0.00 RELATIVE FIELD HEIGHT (0.000°)

(mm)

- - - - - - - - - - 656.2725 nm
———————— 587.5618 nm
- · - · - · - · 435.8400 nm

114

[ FIG. 61 ]

EXAMPLE 5・Mid(UPON INFINITY FOCUSING)

[ FIG. 62 ]

EXAMPLE 5 · Tele(UPON INFINITY FOCUSING)

[ FIG. 63 ]

EXAMPLE 5・Wide(UPON SHORT-DISTANCE FOCUSING)

| | |
|---|---|
| ------------ | 656. 2725 nm |
| ———————— | 587. 5618 nm |
| —・—・—・— | 435. 8400 nm |

[ FIG.64 ]

EXAMPLE 5 · Mid(UPON SHORT-DISTANCE FOCUSING)

| | | |
| --- | --- | --- |
| - - - - - - - - - - | 656. 2725 nm | |
| ———————— | 587. 5618 nm | |
| — · — · — · — · — | 435. 8400 nm | |

[ FIG. 65 ]

EXAMPLE 5・Tele(UPON SHORT-DISTANCE FOCUSING)

[ FIG. 66 ]

[ FIG. 67 ]

EXAMPLE 6·Wide
(UPON INFINITY FOCUSING)

------- 656.2725 nm
———— 587.5618 nm
—··—·· 435.8400 nm

SPHERICAL ABERRATION

ASTIGMATISM

DISTORTION

IMAGE HEIGHT

IMAGE HEIGHT

1.00

0.75

0.50

0.25

21.63

T    S

16.22

10.82

5.41

21.63

16.22

10.82

5.41

−0.80    0.0    0.80
−0.40    0.40    (mm)

−0.80    0.0    0.80
−0.40    0.40    (mm)

−10.0    0.0    10.0
−5.0    5.0    (%)

[ FIG. 68 ]

[ FIG. 69 ]

EP 4 711 832 A1

EXAMPLE 6・Tele
(UPON INFINITY FOCUSING)

- - - - - - - 656.2725 nm
——————— 587.5618 nm
- · - · - · - 435.8400 nm

SPHERICAL ABERRATION

ASTIGMATISM

DISTORTION

IMAGE HEIGHT

IMAGE HEIGHT

1.00

0.75

0.50

0.25

−0.80    0.0    0.80
−0.40    0.40    (mm)

21.63

S          T

16.22

10.82

5.41

−0.80    0.0    0.80
−0.40    0.40    (mm)

21.63

16.22

10.82

5.41

−10.0    0.0    10.0
−5.0    5.0    (%)

[ FIG. 70 ]

EP 4 711 832 A1

124

EXAMPLE 6 · Wide
(UPON SHORT-DISTANCE FOCUSING)

- - - - - - - 656.2725 nm
———— 587.5618 nm
- · - · - · 435.8400 nm

SPHERICAL ABERRATION

ASTIGMATISM

DISTORTION

IMAGE HEIGHT

IMAGE HEIGHT

1.00

0.75

0.50

0.25

-0.800    0.0    0.800
-0.400    0.400    (mm)

21.63

T          S

16.22

10.82

5.41

-0.80    0.0    0.80
-0.40    0.40    (mm)

21.63

16.22

10.82

5.41

-10.0    0.0    10.0
-5.0    5.0    (%)

[ FIG. 71 ]

[ FIG. 72 ]

EXAMPLE 6・Tele
(UPON SHORT-DISTANCE FOCUSING)

- - - - - - 656.2725 nm
———— 587.5618 nm
- · - · - 435.8400 nm

SPHERICAL ABERRATION          ASTIGMATISM          DISTORTION

IMAGE HEIGHT          IMAGE HEIGHT

[ FIG. 73 ]

EXAMPLE 6 · Wide(UPON INFINITY FOCUSING)

[ FIG. 74 ]

EXAMPLE 6・Mid(UPON INFINITY FOCUSING)

[ FIG. 75 ]

EXAMPLE 6 · Tele(UPON INFINITY FOCUSING)

[ FIG. 76 ]

EXAMPLE 6・Wide(UPON SHORT-DISTANCE FOCUSING)

TANGENTIAL 1.00 RELATIVE FIELD HEIGHT (24.24°) SAGITTAL

0.90 RELATIVE FIELD HEIGHT (21.94°)

0.70 RELATIVE FIELD HEIGHT (17.22°)

0.50 RELATIVE FIELD HEIGHT (12.39°)

0.00 RELATIVE FIELD HEIGHT (0.000°)

------------ 656.2725 nm
———————— 587.5618 nm
—·—·—·— 435.8400 nm

[ FIG. 77 ]

EXAMPLE 6 · Mid(UPON SHORT-DISTANCE FOCUSING)

TANGENTIAL     1.00 RELATIVE     SAGITTAL

0.1     FIELD HEIGHT (10.87°)     0.1

−0.1       −0.1

0.90 RELATIVE FIELD HEIGHT (9.876°)

0.1       0.1

−0.1       −0.1

0.70 RELATIVE FIELD HEIGHT (7.806°)

0.1       0.1

−0.1       −0.1

0.50 RELATIVE FIELD HEIGHT (5.644°)

0.1       0.1

−0.1       −0.1

0.00 RELATIVE FIELD HEIGHT (0.000°)

0.1       0.1

−0.1    (mm)     −0.1    (mm)

- - - - - - - - - - -   656.2725 nm
—————————   587.5618 nm
- · - · - · - · - · -   435.8400 nm

[ FIG. 78 ]

EXAMPLE 6・Tele(UPON SHORT-DISTANCE FOCUSING)

[ FIG. 79 ]

[ FIG. 80 ]

EP 4 711 832 A1

EXAMPLE 7・Wide
(UPON INFINITY FOCUSING)

- - - - - - - 656.2725 nm
————— 587.5618 nm
- · - · - 435.8400 nm

SPHERICAL ABERRATION

ASTIGMATISM

DISTORTION

IMAGE HEIGHT

IMAGE HEIGHT

1.00

0.75

0.50

0.25

-0.80    0.0    0.80
-0.40    0.40    (mm)

21.63

16.22

10.82

5.41

-0.80    0.0    0.80
-0.40    0.40    (mm)

21.63

16.22

10.82

5.41

-10.0    0.0    10.0
-5.0    5.0    (%)

[ FIG. 81 ]

EP 4 711 832 A1

EXAMPLE 7・Mid
(UPON INFINITY FOCUSING)

------- 656.2725 nm
——— 587.5618 nm
—·—·— 435.8400 nm

SPHERICAL ABERRATION

ASTIGMATISM

DISTORTION

IMAGE HEIGHT

IMAGE HEIGHT

1.00
0.75
0.50
0.25

-0.80    0.0    0.80
-0.40    0.40    (mm)

21.63
S        T
16.22
10.82
5.41

-0.80    0.0    0.80
-0.40    0.40    (mm)

21.63
16.22
10.82
5.41

-10.0    0.0    10.0
-5.0    5.0    (%)

[ FIG. 82 ]

EP 4 711 832 A1

EXAMPLE 7・Tele
(UPON INFINITY FOCUSING)

- - - - - - 656.2725 nm
———— 587.5618 nm
- · - · - 435.8400 nm

SPHERICAL ABERRATION    ASTIGMATISM    DISTORTION

IMAGE HEIGHT    IMAGE HEIGHT

[ FIG. 83 ]

EXAMPLE 7 · Wide
(UPON SHORT-DISTANCE FOCUSING)

------ 656. 2725 nm
——— 587. 5618 nm
—·—·— 435. 8400 nm

SPHERICAL ABERRATION

ASTIGMATISM

DISTORTION

EP 4 711 832 A1

[ FIG. 84 ]

138

[ FIG. 85 ]

EXAMPLE 7 · Tele
(UPON SHORT-DISTANCE FOCUSING)

656. 2725 nm
587. 5618 nm
435. 8400 nm

SPHERICAL ABERRATION

ASTIGMATISM

DISTORTION

[ FIG. 86 ]

EXAMPLE 7 · Wide(UPON INFINITY FOCUSING)

TANGENTIAL    1.00 RELATIVE FIELD HEIGHT (11.10°)    SAGITTAL

0.1     −0.1     0.1     −0.1

0.90 RELATIVE FIELD HEIGHT (10.15°)

0.1     −0.1     0.1     −0.1

0.70 RELATIVE FIELD HEIGHT (8.097°)

0.1     −0.1     0.1     −0.1

0.50 RELATIVE FIELD HEIGHT (5.897°)

0.1     −0.1     0.1     −0.1

0.00 RELATIVE FIELD HEIGHT (0.000°)

0.1     −0.1 (mm)     0.1     −0.1 (mm)

- - - - - - - - - - - 656.2725 nm
————————— 587.5618 nm
- · - · - · - · - 435.8400 nm

[ FIG. 87 ]

EXAMPLE 7 · Mid(UPON INFINITY FOCUSING)

[ FIG. 88 ]

EXAMPLE 7・Tele(UPON INFINITY FOCUSING)

[ FIG. 89 ]

EXAMPLE 7・Wide(UPON SHORT-DISTANCE FOCUSING)

| TANGENTIAL | 1.00 RELATIVE FIELD HEIGHT (11.10°) | SAGITTAL |
| 0.90 RELATIVE FIELD HEIGHT (10.14°) |
| 0.70 RELATIVE FIELD HEIGHT (8.095°) |
| 0.50 RELATIVE FIELD HEIGHT (5.897°) |
| 0.00 RELATIVE FIELD HEIGHT (0.000°) |

- - - - - - - - - 656.2725 nm
————————— 587.5618 nm
-·-·-·-·- 435.8400 nm

[ FIG. 90 ]

<u>EXAMPLE 7 · Mid(UPON SHORT-DISTANCE FOCUSING)</u>

[ FIG. 91 ]

EXAMPLE 7・Tele(UPON SHORT-DISTANCE FOCUSING)

[ FIG. 92 ]

[ FIG. 93 ]

[ FIG. 94 ]

[ FIG. 95 ]

5000

5041

5067

5005

5001

5033

5035

5003

5037

5039

5031

5032

5021

5017

5003

CCU

5025

5025

5021

LIGHT SOURCE
DEVICE

5043

5029

5025

5071

RECORDING DEVICE

5053

5027

5045

RECORDING DEVICE

ARM
CONTROL
DEVICE

5069

OUTPUT DEVICE

5055

EP 4 711 832 A1

[ FIG. 96 ]

150

[ FIG. 97 ]

EP 4 711 832 A1

## INTERNATIONAL SEARCH REPORT

| International application No. |
|---|
| **PCT/JP2024/013544** |

**A.    CLASSIFICATION OF SUBJECT MATTER**

*G02B 15/20*(2006.01)i; *G02B 13/18*(2006.01)i
FI:    G02B15/20; G02B13/18

According to International Patent Classification (IPC) or to both national classification and IPC

**B.    FIELDS SEARCHED**

Minimum documentation searched (classification system followed by classification symbols)

G02B15/20; G02B13/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2021/200207 A1 (SONY GROUP CORPORATION) 07 October 2021 (2021-10-07) example 1, etc. | 1-10, 12-15 |
| A | | 11 |
| X | JP 2015-197655 A (CANON KABUSHIKI KAISHA) 09 November 2015 (2015-11-09) example 1, etc. | 1-10, 12-13, 15 |
| A | | 11, 14 |
| X | JP 11-237552 A (CANON KABUSHIKI KAISHA) 31 August 1999 (1999-08-31) paragraph [0039], examples 1-2, etc. | 1-4, 6-8, 10, 12-15 |
| A | | 5, 9, 11 |
| X | JP 2013-101316 A (PANASONIC CORPORATION) 23 May 2013 (2013-05-23) example 4, etc. | 1-2, 7-8, 12-13, 15 |
| A | | 3-6, 9-11, 14 |

☑ Further documents are listed in the continuation of Box C.          ☑ See patent family annex.

| | |
|---|---|
| *     Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **16 May 2024** | **04 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2024/013544**

### C. DOCUMENTS CONSIDERED TO BE RELEVANT

| Category* | Citation of document, with indication, where appropriate, of the relevant passages | Relevant to claim No. |
|---|---|---|
| P, X | JP 2023-125584 A (CANON KABUSHIKI KAISHA) 07 September 2023 (2023-09-07) example 4, etc. | 1-9, 12-13, 15 |
| P, A | | 10-11, 14 |

Form PCT/ISA/210 (second sheet) (July 2022)

## INTERNATIONAL SEARCH REPORT
### Information on patent family members

International application No.

**PCT/JP2024/013544**

| Patent document cited in search report | | | Publication date (day/month/year) | Patent family member(s) | | | Publication date (day/month/year) |
|---|---|---|---|---|---|---|---|
| WO | 2021/200207 | A1 | 07 October 2021 | CN | 115335745 | A | |
| JP | 2015-197655 | A | 09 November 2015 | (Family: none) | | | |
| JP | 11-237552 | A | 31 August 1999 | (Family: none) | | | |
| JP | 2013-101316 | A | 23 May 2013 | US example 4, etc. | 2013/0093940 | A1 | |
| JP | 2023-125584 | A | 07 September 2023 | (Family: none) | | | |

Form PCT/ISA/210 (patent family annex) (July 2022)

**REFERENCES CITED IN THE DESCRIPTION**

**Patent documents cited in the description**

- JP 2009168933 A
- JP 2018169564 A

- JP 2023087079 A